# EUROPEAN PATENT APPLICATION

(11) **EP 2 991 282 A1**
(43) Date of publication of application: **02.03.2016**
(21) Application number: 13884749.6
(22) Date of filing: 15.05.2013
(51) Int. Cl.: H04L 12/70

(54) **DATA TRANSMISSION METHOD, APPARATUS, COMMUNICATION DEVICE AND COMMUNICATION SYSTEM**

(71) Applicant: Huawei Technologies Co., Ltd., Longgang District Shenzhen, Guangdong 518129 (CN)
(72) Inventor: SHI, Xiaoyan, Shenzhen City Guangdong 518129 (CN); ZHANG, Wanqiang, Shenzhen City Guangdong 518129 (CN)
(74) Representative: Lord, Michael
(86) International application number: PCT/CN2013/075660
(87) International publication number: WO 2014/183281

(57) **Abstract**

Embodiments of the present invention provide a data transmission method and apparatus, a communications device, and a communications system, which relate to the communications field, and the method includes: receiving at least two IP packets; determining at least two multiplexing packets from the at least two IP packets according to a multiplexing policy; encapsulating the at least two multiplexing packets into one GTP-U packet; and sending the GTP-U packet. In the present invention, at least two IP packets that meet a multiplexing policy are encapsulated into one GTP-U packet, and the GTP-U packet is sent. When an IP packet is being transmitted on a PRN, resources consumed for obtaining a transmission route each time when forwarding is performed are significantly reduced compared with the prior art. In addition, a proportion of an IP packet to a GTP-U packet increases, thereby improving transmission efficiency.

## Description

### TECHNICAL FIELD

The present invention relates to the communications field, and in particular, to a data transmission method and apparatus, a communications device, and a communications system.

### BACKGROUND

A tunneling technology (Tunneling) is a manner of transmitting data between network elements by using a network infrastructure. Data transferred through a tunnel may be data frames or packets based on different protocols. In the tunneling technology, by using a tunneling protocol, a data frame or a packet based on another protocol may be re-encapsulated, and then data obtained after the re-encapsulation is sent through a tunnel. A new frame header formed after the re-encapsulation may provide routing information, so that the encapsulated data is transferred over a network.

A transmission mechanism defined on a GPRS Tunneling Protocol-User plane (GPRS Tunneling Protocol User plane, GTP-U for short) is used to perform data transmission on a packet radio network (Packet Radio Network, PRN for short) (including a general packet radio service (General Packet Radio Service, GPRS for short) network and a Universal Mobile Telecommunications System (Universal Mobile Telecommunication System, UMTS for short) network). In the following, a node that uses the transmission mechanism to perform data transmission is referred to as a GTP-U node. Specifically, a method for transmitting data between GTP-U nodes is as follows: A GTP-U sending node receives an Internet Protocol (Internet Protocol, IP for short) packet, where the IP packet may also be referred to as a transport packet data unit (Transport Packet Data Unit, T-PDU for short); determines a GTP-U tunnel for the IP packet according to a source address and a destination address of the IP packet, and encapsulates a GTP-U header, an IP header, and a User Datagram Protocol (User Datagram Protocol, UDP for short) header for the IP packet to obtain a GTP-U packet; and then sends the GTP-U packet to a GTP-U receiving node. The GTP-U receiving node decapsulates the received GTP-U packet to obtain the IP packet, and transmits the IP packet obtained by means of decapsulation to user equipment (User Equipment, UE for short) or another correspondent node (Correspondence Node, CN for short).

In a process of data transmission on an existing PRN, a GTP-U node encapsulates one received IP packet into one GTP-U packet, and forwards, multiple times, the GTP-U packet obtained after the encapsulation. Resources need to be consumed once each time when the forwarding is performed, so as to obtain one route from an IP header or a UDP header. Therefore, IP packet transmission needs to consume more resources, which causes relatively low bandwidth utilization and relatively low transmission efficiency.

### SUMMARY

To resolve a problem of much resource consumption and low transmission efficiency existing in the prior art, embodiments of the present invention provide a data transmission method and apparatus, a communications device, and a communications system. The technical solutions are as follows:

According to a first aspect, the present invention provides a data transmission method, and the method includes:
receiving at least two Internet Protocol IP packets;
determining at least two multiplexing packets from the at least two IP packets according to a multiplexing policy, where the multiplexing policy includes at least one of the following conditions: the multiplexing packets are IP packets whose sizes are less than or equal to a set value, bearer identifiers of the multiplexing packets are the same, quality of service class identifiers QCIs of the multiplexing packets are the same, and flow description information of the multiplexing packets is the same;
encapsulating the at least two multiplexing packets into one general packet radio service Tunneling Protocol-User plane GTP-U packet; and
sending the GTP-U packet.

In a first possible implementation manner of the present invention, the encapsulating the at least two multiplexing packets into one GTP-U packet includes:
encapsulating a GTP-U header for each of the at least two multiplexing packets to obtain at least two general packet radio service Tunneling Protocol packet data units G-PDUs; and
encapsulating one IP header and one User Datagram Protocol UDP header for the at least two G-PDUs to obtain the GTP-U packet.

In a second possible implementation manner of the present invention, the GTP-U header is a first GTP-U header, and the first GTP-U header includes a first length field, a first tunnel identifier field, and a first multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header; and
the first multiplexing indication field is used to indicate whether there is another multiplexing packet that is in the GTP-U packet and follows the multiplexing packet corresponding to the first GTP-U header.

In a third possible implementation manner of the present invention, the first multiplexing indication field is an unused field in the first GTP-U header or is carried in an extension header of the first GTP-U header.

In a fourth possible implementation manner of the present invention, when the at least two multiplexing packets are transmitted by using a same GTP-U tunnel, the GTP-U header is a first GTP-U header, or the first one GTP-U header of the GTP-U headers is a first GTP-U header, and a GTP-U header except the first one GTP-U header is a second GTP-U header;
the first GTP-U header includes a first length field, a first tunnel identifier field, and a first multiplexing indication field, and the second GTP-U header includes a second length field and a second multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the second length field is used to indicate a size of a multiplexing packet corresponding to the second GTP-U header; and
the second multiplexing indication field is used to indicate whether there is another multiplexing packet that is in the GTP-U packet and follows the multiplexing packet corresponding to the second GTP-U header.

In a fifth possible implementation manner of the present invention, the first multiplexing indication field is an unused field in the first GTP-U header or is carried in an extension header of the first GTP-U header, and the second multiplexing indication field is an unused field in the second GTP-U header or is carried in an extension header of the second GTP-U header.

In a sixth possible implementation manner of the present invention, before the encapsulating a GTP-U header for each of the at least two multiplexing packets, the method further includes:
padding each of the at least two multiplexing packets, so that sizes of the at least two padded multiplexing packets each are the set value; and
the encapsulating a GTP-U header for each of the at least two multiplexing packets includes:
   encapsulating a first GTP-U header for each of the at least two padded multiplexing packets; or
   encapsulating a third GTP-U header for each of the at least two padded multiplexing packets; or
   encapsulating a first GTP-U header for the first multiplexing packet of the at least two padded multiplexing packets, and encapsulating a third GTP-U header for a multiplexing packet, except the first multiplexing packet, in the at least two padded multiplexing packets; where
   the first GTP-U header includes a first length field, a first tunnel identifier field, and a first multiplexing indication field, and the third GTP-U header includes a third tunnel identifier field and a third multiplexing indication field;
   the first length field is used to indicate a size of a multiplexing packet corresponding to the first GTP-U header;
   the first tunnel identifier field is used to indicate a GTP-U tunnel used for the multiplexing packet corresponding to the first GTP-U header;
   the first multiplexing indication field is used to indicate whether there is another multiplexing packet that is in the GTP-U packet and follows the multiplexing packet corresponding to the first GTP-U header;
   the third tunnel identifier field is used to indicate a GTP-U tunnel used for a multiplexing packet corresponding to the third GTP-U header; and
   the third multiplexing indication field is used to indicate whether there is another multiplexing packet that is in the GTP-U packet and follows the multiplexing packet corresponding to the third GTP-U header.

In a seventh possible implementation manner of the present invention, the first multiplexing indication field is an unused field in the first GTP-U header or is carried in an extension header of the first GTP-U header, and the third multiplexing indication field is an unused field in the third GTP-U header or is carried in an extension header of the third GTP-U header.

In an eighth possible implementation manner of the present invention, when the at least two multiplexing packets are transmitted by using a same GTP-U tunnel, before the encapsulating a GTP-U header for each of the at least two multiplexing packets, the method further includes:
padding each of the at least two multiplexing packets, so that sizes of the at least two padded multiplexing packets each are the set value; and
the encapsulating a GTP-U header for each of the at least two multiplexing packets includes:
   encapsulating a third GTP-U header for each of the at least two padded multiplexing packets; or
   encapsulating a third GTP-U header for the first multiplexing packet of the at least two padded multiplexing packets, and encapsulating a fourth GTP-U header for a multiplexing packet, except the first multiplexing packet, in the at least two padded multiplexing packets; where
   the third GTP-U header includes a third tunnel identifier field and a third multiplexing indication field, and the fourth GTP-U header includes a fourth multiplexing indication field;
   the third tunnel identifier field is used to indicate a GTP-U tunnel used for a multiplexing packet corresponding to the third GTP-U header;
   the third multiplexing indication field is used to indicate whether there is another multiplexing packet that is in the GTP-U packet and follows the multiplexing packet corresponding to the third GTP-U header; and
   the fourth multiplexing indication field is used to indicate whether there is another multiplexing packet that is in the GTP-U packet and follows a multiplexing packet corresponding to the fourth GTP-U header.

In a ninth possible implementation manner of the present invention, the third multiplexing indication field is an unused field in the third GTP-U header or is carried in an extension header of the third GTP-U header, and the fourth multiplexing indication field is an unused field in the fourth GTP-U header or is carried in an extension header of the fourth GTP-U header.

In a tenth possible implementation manner of the present invention, the third GTP-U header further includes a third length field, the fourth GTP-U header further includes a fourth length field, the third length field is used to indicate a size of a padded multiplexing packet corresponding to the third GTP-U header, and the fourth length field is used to indicate a size of a padded multiplexing packet corresponding to the fourth GTP-U header.

In an eleventh possible implementation manner of the present invention, the encapsulating the at least two multiplexing packets into one GTP-U packet includes:
encapsulating one GTP-U header for the at least two multiplexing packets, so that the at least two encapsulated multiplexing packets are one G-PDU; where
the GTP-U header includes at least two multiplexing extension headers, and the at least two multiplexing extension headers are in one-to-one correspondence with the at least two multiplexing packets, or the GTP-U header includes at least one multiplexing extension header, the GTP-U header includes a first next extension header type field, the first next extension header type field is corresponding to the first multiplexing packet in the GTP-U packet, the at least one multiplexing extension header is in one-to-one correspondence with a multiplexing packet, except the first multiplexing packet, in the GTP-U packet, and the first next extension header type field is used to indicate whether the first extension header in the GTP-U header in the GTP-U packet is a multiplexing extension header; and
encapsulating an IP header and a UDP header for the G-PDU to obtain the GTP-U packet.

In a twelfth possible implementation manner of the present invention, the multiplexing extension header is a first multiplexing extension header, and the first multiplexing extension header includes a fifth length field, a fifth tunnel identifier field, and a second next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header; and
the second next extension header type field is used to indicate whether there is another multiplexing extension header that is in the GTP-U packet and follows the first multiplexing extension header.

In a thirteenth possible implementation manner of the present invention, the first multiplexing extension header further includes a first tunnel identifier flag field, and the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

In a fourteenth possible implementation manner of the present invention, before the encapsulating one GTP-U header for the at least two multiplexing packets, the method further includes:
padding each of the at least two multiplexing packets, so that sizes of the at least two padded multiplexing packets each are the set value; and
the encapsulating one GTP-U header for the at least two multiplexing packets includes:
   encapsulating one GTP-U header for the at least two padded multiplexing packets, where a multiplexing extension header in the GTP-U header is a first multiplexing extension header; or
   a multiplexing extension header in the GTP-U header is a second multiplexing extension header; or
   the first one multiplexing extension header in the GTP-U header is a first multiplexing extension header, and another multiplexing extension header, except the first one multiplexing extension header, in the GTP-U header is a second multiplexing extension header; where
   the first multiplexing extension header includes a fifth tunnel identifier field, a fifth length field, and a second next extension header type field;
   the second multiplexing extension header includes a sixth tunnel identifier field and a third next extension header type field;
   the fifth length field is used to indicate a size of a multiplexing packet corresponding to the first multiplexing extension header;
   the fifth tunnel identifier field is used to indicate a GTP-U tunnel used for the multiplexing packet corresponding to the first multiplexing extension header;
   the second next extension header type field is used to indicate whether there is another multiplexing extension header that is in the GTP-U packet and follows the first multiplexing extension header;
   the sixth tunnel identifier field is used to indicate a GTP-U tunnel used for a multiplexing packet corresponding to the second multiplexing extension header; and
   the third next extension header type field is used to indicate whether there is another multiplexing extension header that is in the GTP-U packet and follows the second multiplexing extension header.

In a fifteenth possible implementation manner of the present invention, the first multiplexing extension header further includes a first tunnel identifier flag field, the second multiplexing extension header further includes a second tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header.

In a sixteenth possible implementation manner of the present invention, when the at least two multiplexing packets are transmitted by using a same GTP-U tunnel, the multiplexing extension headers in the GTP-U header include a first multiplexing extension header and a third multiplexing extension header, the first multiplexing extension header includes a fifth length field, a fifth tunnel identifier field, and a second next extension header type field, and the third multiplexing extension header includes a seventh length field and a fourth next extension header type field; where
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the seventh length field is used to indicate a size of a multiplexing packet corresponding to the third multiplexing extension header; and
the fourth next extension header type field is used to indicate whether there is another multiplexing extension header that is in the GTP-U packet and follows the third multiplexing extension header.

In a seventeenth possible implementation manner of the present invention, the first multiplexing extension header further includes a first tunnel identifier flag field, the third multiplexing extension header further includes a third tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the third tunnel identifier flag field is used to indicate whether a GTP-U tunnel used for the multiplexing packet corresponding to the third multiplexing extension header is the same as a GTP-U tunnel used for a multiplexing packet corresponding to a multiplexing extension header previous to the third multiplexing extension header.

In an eighteenth possible implementation manner of the present invention, when the at least two multiplexing packets are transmitted by using a same GTP-U tunnel, before the encapsulating one GTP-U header for the at least two multiplexing packets, the method further includes:
padding each of the at least two multiplexing packets, so that sizes of the at least two padded multiplexing packets each are the set value; and
the encapsulating one GTP-U header for the at least two multiplexing packets includes:
   encapsulating one GTP-U header for the at least two padded multiplexing packets, where a multiplexing extension header in the GTP-U header is a second multiplexing extension header; or
   the first one multiplexing extension header in the GTP-U header is a second multiplexing extension header, and the multiplexing extension header except the first one multiplexing extension header is a fourth multiplexing extension header; where
   the second multiplexing extension header includes a sixth tunnel identifier field and a third next extension header type field, and the fourth multiplexing extension header includes a fifth next extension header type field;
   the sixth tunnel identifier field is used to indicate a GTP-U tunnel used for a multiplexing packet corresponding to the second multiplexing extension header;
   the third next extension header type field is used to indicate whether there is another multiplexing extension header that is in the GTP-U packet and follows the second multiplexing extension header; and
   the fifth next extension header type field is used to indicate whether there is another multiplexing extension header that is in the GTP-U packet and follows the fourth multiplexing extension header.

In a nineteenth possible implementation manner of the present invention, the second multiplexing extension header further includes a second tunnel identifier flag field, the fourth multiplexing extension header further includes a fourth tunnel identifier flag field, the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header, and the fourth tunnel identifier flag field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

In a twentieth possible implementation manner of the present invention, the second multiplexing extension header further includes a sixth length field, the fourth multiplexing extension header further includes an eighth length field, the sixth length field is used to indicate a size of a padded multiplexing packet corresponding to the second multiplexing extension header, and the eighth length field is used to indicate a size of a padded multiplexing packet corresponding to the fourth multiplexing extension header.

In a twenty-first possible implementation manner of the present invention, the GTP-U header further includes a ninth length field and a ninth tunnel identifier field, the ninth length field is used to indicate a length of the first multiplexing packet in the GTP-U packet, and the ninth tunnel identifier field is used to indicate a GTP-U tunnel used for the first multiplexing packet.

In a twenty-second possible implementation manner of the present invention, the method further includes:
acquiring the multiplexing policy from a mobility management entity MME/a policy control and charging rules function entity PCRF.

According to a second aspect, the present invention provides a data transmission method, and the method includes:
receiving a general packet radio service Tunneling Protocol-User plane GTP-U packet, where the GTP-U packet is obtained by encapsulating at least two multiplexing packets, the at least two multiplexing packets are at least two Internet Protocol IP packets determined according to a multiplexing policy, and the multiplexing policy includes at least one of the following conditions: the multiplexing packets are IP packets whose sizes are less than or equal to a set value, bearer identifiers of the multiplexing packets are the same, quality of service class identifiers QCIs of the multiplexing packets are the same, and flow description information of the multiplexing packets is the same;
decapsulating the GTP-U packet to obtain the at least two multiplexing packets; and
sending the at least two multiplexing packets.

In a first possible implementation manner of the present invention, the decapsulating the GTP-U packet to obtain the at least two multiplexing packets includes:
decapsulating the GTP-U packet according to an IP header and a User Datagram Protocol UDP header in the GTP-U packet to obtain at least two general packet radio service Tunneling Protocol packet data units G-PDUs, where each G-PDU of the at least two G-PDUs includes one GTP-U header; and
decapsulating the at least two G-PDUs according to the GTP-U headers in the at least two G-PDUs to obtain the at least two multiplexing packets.

In a second possible implementation manner of the present invention, the GTP-U header is a first GTP-U header, and the first GTP-U header includes a first length field, a first tunnel identifier field, and a first multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header; and
the decapsulating the at least two G-PDUs according to the GTP-U headers in the at least two G-PDUs to obtain the at least two multiplexing packets includes:
determining, according to the first multiplexing indication fields in the first GTP-U headers in the at least two G-PDUs, the multiplexing packets that need to be decapsulated, and decapsulating the at least two G-PDUs according to the first length fields, the first tunnel identifier fields, and the first multiplexing indication fields that are in the first GTP-U headers in the at least two G-PDUs, to obtain the at least two multiplexing packets.

In a third possible implementation manner of the present invention, the first multiplexing indication field is an unused field in the first GTP-U header or is carried in an extension header of the first GTP-U header.

In a fourth possible implementation manner of the present invention, when the at least two multiplexing packets are transmitted by using a same GTP-U tunnel and the GTP-U header is a first GTP-U header, the decapsulating the at least two G-PDUs according to the GTP-U headers in the at least two G-PDUs to obtain the at least two multiplexing packets includes:
determining, according to first multiplexing indication fields in the first GTP-U headers in the at least two G-PDUs, the multiplexing packets that need to be decapsulated, and decapsulating the at least two G-PDUs according to first length fields, first tunnel identifier fields, and the first multiplexing indication fields that are in the first GTP-U headers in the at least two G-PDUs, to obtain the at least two multiplexing packets; or
when the at least two multiplexing packets are transmitted by using a same GTP-U tunnel, the first one GTP-U header of the GTP-U headers is a first GTP-U header, and the GTP-U header except the first one GTP-U header is a second GTP-U header, the decapsulating the at least two G-PDUs according to the GTP-U headers in the at least two G-PDUs to obtain the at least two multiplexing packets includes:
determining, according to a first multiplexing indication field in the first GTP-U header in the at least two G-PDUs and a second multiplexing indication field in the second GTP-U header in the at least two G-PDUs, the multiplexing packets that need to be decapsulated, and decapsulating the at least two G-PDUs according to a first length field, a first tunnel identifier field, and the first multiplexing indication field that are in the first GTP-U header in the at least two G-PDUs and a second length field and the second multiplexing indication field that are in the second GTP-U header in the at least two G-PDUs, to obtain the at least two multiplexing packets; where
the first GTP-U header includes the first length field, the first tunnel identifier field, and the first multiplexing indication field, and the second GTP-U header includes the second length field and the second multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the second length field is used to indicate a size of a multiplexing packet corresponding to the second GTP-U header; and
the second multiplexing indication field is used to indicate whether there is another multiplexing packet that is in the GTP-U packet and follows the multiplexing packet corresponding to the second GTP-U header.

In a fifth possible implementation manner of the present invention, the first multiplexing indication field is an unused field in the first GTP-U header or is carried in an extension header of the first GTP-U header, and the second multiplexing indication field is an unused field in the second GTP-U header or is carried in an extension header of the second GTP-U header.

In a sixth possible implementation manner of the present invention, when sizes of the at least two multiplexing packets each are the set value and the GTP-U header is a first GTP-U header, the decapsulating the at least two G-PDUs according to the GTP-U headers in the at least two G-PDUs to obtain the at least two multiplexing packets includes:
determining, according to first multiplexing indication fields in the first GTP-U headers in the at least two G-PDUs, the multiplexing packets that need to be decapsulated, and decapsulating the at least two G-PDUs according to first length fields, first tunnel identifier fields, and the first multiplexing indication fields that are in the first GTP-U headers in the at least two G-PDUs, to obtain the at least two multiplexing packets; or
when sizes of the at least two multiplexing packets each are the set value and the GTP-U header is a third GTP-U header, the decapsulating the at least two G-PDUs according to the GTP-U headers in the at least two G-PDUs to obtain the at least two multiplexing packets includes:
   determining, according to third multiplexing indication fields in the third GTP-U headers in the at least two G-PDUs, the multiplexing packets that need to be decapsulated, and decapsulating the at least two G-PDUs according to third tunnel identifier fields and the third multiplexing indication fields that are in the third GTP-U headers in the at least two G-PDUs, and a network configuration, to obtain the at least two multiplexing packets, where the network configuration is used to indicate a size of the set value; or
   when sizes of the at least two multiplexing packets each are the set value, the first one GTP-U header of the GTP-U headers is a first GTP-U header, and the GTP-U header except the first one GTP-U header is a third GTP-U header, the decapsulating the at least two G-PDUs according to the GTP-U headers in the at least two G-PDUs to obtain the at least two multiplexing packets includes:
      determining, according to a first multiplexing indication field in the first GTP-U header in the at least two G-PDUs and a third multiplexing indication field in the third GTP-U header in the at least two G-PDUs, the multiplexing packets that need to be decapsulated, and decapsulating the at least two G-PDUs according to a first length field, a first tunnel identifier field, and the first multiplexing indication field that are in the first GTP-U header in the at least two G-PDUs and a second length field and the second multiplexing indication field that are in the second GTP-U header in the at least two G-PDUs, to obtain the at least two multiplexing packets; where
      the first GTP-U header includes the first length field, the first tunnel identifier field, and the first multiplexing indication field, and the third GTP-U header includes the third tunnel identifier field and the third multiplexing indication field;
      the first length field is used to indicate a size of a multiplexing packet corresponding to the first GTP-U header;
      the first tunnel identifier field is used to indicate a GTP-U tunnel used for the multiplexing packet corresponding to the first GTP-U header;
      the first multiplexing indication field is used to indicate whether there is another multiplexing packet that is in the GTP-U packet and follows the multiplexing packet corresponding to the first GTP-U header;
      the third tunnel identifier field is used to indicate a GTP-U tunnel used for a multiplexing packet corresponding to the third GTP-U header; and
      the third multiplexing indication field is used to indicate whether there is another multiplexing packet that is in the GTP-U packet and follows the multiplexing packet corresponding to the third GTP-U header.

In a seventh possible implementation manner of the present invention, the first multiplexing indication field is an unused field in the first GTP-U header or is carried in an extension header of the first GTP-U header, and the third multiplexing indication field is an unused field in the third GTP-U header or is carried in an extension header of the third GTP-U header.

In an eighth possible implementation manner of the present invention, when the at least two multiplexing packets are transmitted by using a same GTP-U tunnel, sizes of the at least two multiplexing packets each are the set value, and the GTP-U header is a third GTP-U header, the decapsulating the at least two G-PDUs according to the GTP-U headers in the at least two G-PDUs to obtain the at least two multiplexing packets includes:
determining, according to third multiplexing indication fields in the third GTP-U headers in the at least two G-PDUs, the multiplexing packets that need to be decapsulated, and decapsulating the at least two G-PDUs according to third tunnel identifier fields and the third multiplexing indication fields that are in the third GTP-U headers in the at least two G-PDUs, to obtain the at least two multiplexing packets; or
when the at least two multiplexing packets are transmitted by using a same GTP-U tunnel, sizes of the at least two multiplexing packets each are the set value, the first one GTP-U header of the GTP-U headers is a third GTP-U header, and the GTP-U header except the first one GTP-U header is a fourth GTP-U header, the decapsulating the at least two G-PDUs according to the GTP-U headers in the at least two G-PDUs to obtain the at least two multiplexing packets includes:
determining, according to a third multiplexing indication field in the third GTP-U header in the at least two G-PDUs and a fourth multiplexing indication field in the fourth GTP-U header in the at least two G-PDUs, the multiplexing packets that need to be decapsulated, and decapsulating the at least two G-PDUs according to a third tunnel identifier field and the third multiplexing indication field that are in the third GTP-U header in the at least two G-PDUs and the fourth multiplexing indication field in the fourth GTP-U header in the at least two G-PDUs, to obtain the at least two multiplexing packets; where
   the third GTP-U header includes the third tunnel identifier field and the third multiplexing indication field, and the fourth GTP-U header includes the fourth multiplexing indication field;
   the third tunnel identifier field is used to indicate a GTP-U tunnel used for a multiplexing packet corresponding to the third GTP-U header;
   the third multiplexing indication field is used to indicate whether there is another multiplexing packet that is in the GTP-U packet and follows the multiplexing packet corresponding to the third GTP-U header; and
   the fourth multiplexing indication field is used to indicate whether there is another multiplexing packet that is in the GTP-U packet and follows a multiplexing packet corresponding to the fourth GTP-U header.

In a ninth possible implementation manner of the present invention, the third multiplexing indication field is an unused field in the third GTP-U header or is carried in an extension header of the third GTP-U header, and the fourth multiplexing indication field is an unused field in the fourth GTP-U header or is carried in an extension header of the fourth GTP-U header.

In a tenth possible implementation manner of the present invention, the third GTP-U header further includes a third length field, the fourth GTP-U header further includes a fourth length field, the third length field is used to indicate a size of the multiplexing packet corresponding to the third GTP-U header, and the fourth length field is used to indicate a size of the multiplexing packet corresponding to the fourth GTP-U header.

In an eleventh possible implementation manner of the present invention, the decapsulating the GTP-U packet to obtain the at least two multiplexing packets includes:
decapsulating the GTP-U packet according to an IP header and a UDP header in the GTP-U packet to obtain one G-PDU, where a GTP-U header in the G-PDU includes at least two multiplexing extension headers, and the at least two multiplexing extension headers are in one-to-one correspondence with the at least two multiplexing packets, or the GTP-U header includes at least one multiplexing extension header and a first next extension header type field, the first next extension header type field is corresponding to the first multiplexing packet in the GTP-U packet, the at least one multiplexing extension header is in one-to-one correspondence with a multiplexing packet, except the first multiplexing packet, in the GTP-U packet, and the first next extension header type field is used to indicate whether the first extension header in the GTP-U header in the GTP-U packet is a multiplexing extension header; and
decapsulating the G-PDU according to the GTP-U header in the G-PDU to obtain the at least two multiplexing packets.

In a twelfth possible implementation manner of the present invention, the multiplexing extension header is a first multiplexing extension header, and the first multiplexing extension header includes a fifth length field, a fifth tunnel identifier field, and a second next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header; and
the decapsulating the G-PDU according to the GTP-U header in the G-PDU to obtain the at least two multiplexing packets includes:
determining, according to the second next extension header type field in the first multiplexing extension header in the G-PDU, the multiplexing packets that need to be decapsulated, and decapsulating the G-PDU according to the fifth length field, the fifth tunnel identifier field, and the second next extension header type field that are in the first multiplexing extension header in the G-PDU, to obtain the at least two multiplexing packets.

In a thirteenth possible implementation manner of the present invention, the first multiplexing extension header further includes a first tunnel identifier flag field, and the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

In a fourteenth possible implementation manner of the present invention, when a size of the multiplexing packet is the set value and the multiplexing extension header is a first multiplexing extension header, the decapsulating the G-PDU according to the GTP-U header in the G-PDU to obtain the at least two multiplexing packets includes:
determining, according to a second next extension header type field in the first multiplexing extension header in the G-PDU, the multiplexing packets that need to be decapsulated, and decapsulating the G-PDU according to a fifth length field, a fifth tunnel identifier field, and the second next extension header type field that are in the first multiplexing extension header in the G-PDU, to obtain the at least two multiplexing packets; or
when a size of the multiplexing packet is the set value and the multiplexing extension header is a second multiplexing extension header, the decapsulating the G-PDU according to the GTP-U header in the G-PDU to obtain the at least two multiplexing packets includes:
   determining, according to a third next extension header type field in the second multiplexing extension header in the G-PDU, the multiplexing packets that need to be decapsulated, and decapsulating the G-PDU according to a sixth tunnel identifier field and the third next extension header type field that are in the second multiplexing extension header in the G-PDU, and a network configuration, to obtain the at least two multiplexing packets, where the network configuration is used to indicate a size of the set value; or
   when a size of the multiplexing packet is the set value, the first one multiplexing extension header of the multiplexing extension headers is a first multiplexing extension header, and the multiplexing extension header except the first one multiplexing extension header is a second multiplexing extension header, the decapsulating the G-PDU according to the GTP-U header in the G-PDU to obtain the at least two multiplexing packets includes:
      determining, according to a second next extension header type field in the first multiplexing extension header in the G-PDU and a third next extension header type field in the second multiplexing extension header in the G-PDU, the multiplexing packets that need to be decapsulated, and decapsulating the G-PDU according to a fifth length field, a fifth tunnel identifier field, and the second next extension header type field that are in the first multiplexing extension header in the G-PDU and a sixth tunnel identifier field and the third next extension header type field that are in the second multiplexing extension header in the G-PDU, to obtain the at least two multiplexing packets; where
      the first multiplexing extension header includes the fifth tunnel identifier field, the fifth length field, and the second next extension header type field;
      the second multiplexing extension header includes the sixth tunnel identifier field and the third next extension header type field;
      the fifth length field is used to indicate a size of a multiplexing packet corresponding to the first multiplexing extension header;
      the fifth tunnel identifier field is used to indicate a GTP-U tunnel used for the multiplexing packet corresponding to the first multiplexing extension header;
      the second next extension header type field is used to indicate whether there is another multiplexing extension header that is in the GTP-U packet and follows the first multiplexing extension header;
      the sixth tunnel identifier field is used to indicate a GTP-U tunnel used for a multiplexing packet corresponding to the second multiplexing extension header; and
      the third next extension header type field is used to indicate whether there is another multiplexing extension header that is in the GTP-U packet and follows the second multiplexing extension header.

In a fifteenth possible implementation manner of the present invention, the first multiplexing extension header further includes a first tunnel identifier flag field, the second multiplexing extension header further includes a second tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header.

In a sixteenth possible implementation manner of the present invention, when the multiplexing packet is transmitted by using a same GTP-U tunnel and the multiplexing extension header in the GTP-U header is a first multiplexing extension header, the decapsulating the G-PDU according to the GTP-U header in the G-PDU to obtain the at least two multiplexing packets includes:
determining, according to a second next extension header type field in the first multiplexing extension header in the G-PDU, the multiplexing packets that need to be decapsulated, and decapsulating the G-PDU according to a fifth length field, a fifth tunnel identifier field, and the second next extension header type field that are in the first multiplexing extension header in the G-PDU, to obtain the at least two multiplexing packets; or
when the multiplexing packet is transmitted by using a same GTP-U tunnel, the first one multiplexing extension header of the multiplexing extension headers is a first multiplexing extension header, and the multiplexing extension header except the first one multiplexing extension header is a third multiplexing extension header, the decapsulating the G-PDU according to the GTP-U header in the G-PDU to obtain the at least two multiplexing packets includes:
   determining, according to a second next extension header type field in the first multiplexing extension header in the G-PDU and a fourth next extension header type field in the third multiplexing extension header in the G-PDU, the multiplexing packets that need to be decapsulated, and decapsulating the G-PDU according to a fifth length field, a fifth tunnel identifier field, and the second next extension header type field that are in the first multiplexing extension header in the G-PDU and a seventh length field and the fourth next extension header type field that are in the third multiplexing extension header in the G-PDU, to obtain the at least two multiplexing packets; where
   the first multiplexing extension header includes the fifth length field, the fifth tunnel identifier field, and the second next extension header type field, and the third multiplexing extension header includes the seventh length field and the fourth next extension header type field;
   the fifth length field is used to indicate a size of a multiplexing packet corresponding to the first multiplexing extension header;
   the fifth tunnel identifier field is used to indicate a GTP-U tunnel used for the multiplexing packet corresponding to the first multiplexing extension header;
   the second next extension header type field is used to indicate whether there is another multiplexing extension header that is in the GTP-U packet and follows the first multiplexing extension header;
   the seventh length field is used to indicate a size of a multiplexing packet corresponding to the third multiplexing extension header; and
   the fourth next extension header type field is used to indicate whether there is another multiplexing extension header that is in the GTP-U packet and follows the third multiplexing extension header.

In a seventeenth possible implementation manner of the present invention, the first multiplexing extension header further includes a first tunnel identifier flag field, the third multiplexing extension header further includes a third tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the third tunnel identifier flag field is used to indicate whether a GTP-U tunnel used for the multiplexing packet corresponding to the third multiplexing extension header is the same as a GTP-U tunnel used for a multiplexing packet corresponding to a multiplexing extension header previous to the third multiplexing extension header.

In an eighteenth possible implementation manner of the present invention, when the at least two multiplexing packets are transmitted by using a same GTP-U tunnel, a size of the multiplexing packet is the set value, and the multiplexing extension header is a second multiplexing extension header, the decapsulating the G-PDU according to the GTP-U header in the G-PDU to obtain the at least two multiplexing packets includes:
determining, according to a third next extension header type field in the second multiplexing extension header in the G-PDU, the multiplexing packets that need to be decapsulated, and decapsulating the G-PDU according to a sixth tunnel identifier field and the third next extension header type field that are in the second multiplexing extension header in the G-PDU, to obtain the at least two multiplexing packets; or
when the at least two multiplexing packets are transmitted by using a same GTP-U tunnel, a size of the multiplexing packet is the set value, the first one multiplexing extension header of the multiplexing extension headers is a second multiplexing extension header, and the multiplexing extension header except the first one multiplexing extension header is a fourth multiplexing extension header, the decapsulating the G-PDU according to the GTP-U header in the G-PDU to obtain the at least two multiplexing packets includes:
   determining, according to a third next extension header type field in the second multiplexing extension header in the G-PDU and a fifth next extension header type field in the fourth multiplexing extension header in the G-PDU, the multiplexing packets that need to be decapsulated, and decapsulating the G-PDU according to a sixth tunnel identifier field and the third next extension header type field that are in the second multiplexing extension header in the G-PDU, the fifth next extension header type field in the fourth multiplexing extension header in the G-PDU, and a network configuration, to obtain the at least two multiplexing packets; where
   the second multiplexing extension header includes the sixth tunnel identifier field and the third next extension header type field, and the fourth multiplexing extension header includes the fifth next extension header type field;
   the sixth tunnel identifier field is used to indicate a GTP-U tunnel used for a multiplexing packet corresponding to the second multiplexing extension header;
   the third next extension header type field is used to indicate whether there is another multiplexing extension header that is in the GTP-U packet and follows the second multiplexing extension header; and
   the fifth next extension header type field is used to indicate whether there is another multiplexing extension header that is in the GTP-U packet and follows the fourth multiplexing extension header.

In a nineteenth possible implementation manner of the present invention, the second multiplexing extension header further includes a second tunnel identifier flag field, the fourth multiplexing extension header further includes a fourth tunnel identifier flag field, the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header, and the fourth tunnel identifier flag field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

In a twentieth possible implementation manner of the present invention, the second multiplexing extension header further includes a sixth length field, the fourth multiplexing extension header further includes an eighth length field, the sixth length field is used to indicate a size of a padded multiplexing packet corresponding to the second multiplexing extension header, and the eighth length field is used to indicate a size of a padded multiplexing packet corresponding to the fourth multiplexing extension header.

In a twenty-first possible implementation manner of the present invention, the GTP-U header further includes a ninth length field and a ninth tunnel identifier field, the ninth length field is used to indicate a length of the first multiplexing packet in the GTP-U packet, and the ninth tunnel identifier field is used to indicate a GTP-U tunnel used for the first multiplexing packet.

In a twenty-second possible implementation manner of the present invention, the multiplexing policy is acquired from a mobility management entity MME/a policy control and charging rules function entity PCRF.

According to a third aspect, the present invention provides a data transmission apparatus, and the apparatus includes:
a receiving module, configured to receive at least two Internet Protocol IP packets;
a determining module, configured to determine, according to a multiplexing policy, at least two multiplexing packets from the at least two IP packets received by the receiving module, where the multiplexing policy includes at least one of the following conditions: the multiplexing packets are IP packets whose sizes are less than or equal to a set value, bearer identifiers of the multiplexing packets are the same, quality of service class identifiers QCIs of the multiplexing packets are the same, and flow description information of the multiplexing packets is the same;
an encapsulating module, configured to encapsulate the at least two multiplexing packets into one general packet radio service Tunneling Protocol-User plane GTP-U packet; and
a sending module, configured to send the GTP-U packet obtained by the encapsulating module.

In a first possible implementation manner of the present invention, the encapsulating module includes:
a first encapsulating unit, configured to encapsulate a GTP-U header for each of the at least two multiplexing packets to obtain at least two general packet radio service Tunneling Protocol packet data units G-PDUs; and
a second encapsulating unit, configured to encapsulate one IP header and one User Datagram Protocol UDP header for the at least two G-PDUs obtained by the first encapsulating unit, to obtain the GTP-U packet.

In a second possible implementation manner of the present invention, the first encapsulating unit is configured to:
set a first length field, a first tunnel identifier field, and a first multiplexing indication field in a first GTP-U header; where
the first length field is used to indicate a size of a multiplexing packet corresponding to the first GTP-U header;
the first tunnel identifier field is used to indicate a GTP-U tunnel used for the multiplexing packet corresponding to the first GTP-U header; and
the first multiplexing indication field is used to indicate whether there is another multiplexing packet that is in the GTP-U packet and follows the multiplexing packet corresponding to the first GTP-U header.

In a third possible implementation manner of the present invention, the first encapsulating unit is configured to:
use an unused field in the first GTP-U header as the first multiplexing indication field, or add the first multiplexing indication field to an extension header of the first GTP-U header.

In a fourth possible implementation manner of the present invention, when the at least two multiplexing packets for which the first encapsulating unit performs encapsulation are transmitted by using a same GTP-U tunnel, the first encapsulating unit is configured to:
set a first length field, a first tunnel identifier field, and a first multiplexing indication field in a first GTP-U header; or
set a first length field, a first tunnel identifier field, and a first multiplexing indication field in a first GTP-U header, and set a second length field and a second multiplexing indication field in a second GTP-U header; where
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the second length field is used to indicate a size of a multiplexing packet corresponding to the second GTP-U header; and
the second multiplexing indication field is used to indicate whether there is another multiplexing packet that is in the GTP-U packet and follows the multiplexing packet corresponding to the second GTP-U header.

In a fifth possible implementation manner of the present invention, the first encapsulating unit is configured to:
use an unused field in the first GTP-U header as the first multiplexing indication field, or add the first multiplexing indication field to an extension header of the first GTP-U header, and use an unused field in the second GTP-U header as the second multiplexing indication field, or add the second multiplexing indication field to an extension header of the second GTP-U header.

In a sixth possible implementation manner of the present invention, the encapsulating module further includes:
a padding unit, configured to: before the first encapsulating unit encapsulates the GTP-U header for each of the at least two multiplexing packets, pad each of the at least two multiplexing packets, so that sizes of the at least two padded multiplexing packets each are the set value; and
the first encapsulating unit is configured to:
   set a first length field, a first tunnel identifier field, and a first multiplexing indication field in a first GTP-U header; or
   set a third tunnel identifier field and a third multiplexing indication field in a third GTP-U header; or
   set a first length field, a first tunnel identifier field, and a first multiplexing indication field in a first GTP-U header, and set a third tunnel identifier field and a third multiplexing indication field in a third GTP-U header; where
   the first length field is used to indicate a size of a multiplexing packet corresponding to the first GTP-U header;
   the first tunnel identifier field is used to indicate a GTP-U tunnel used for the multiplexing packet corresponding to the first GTP-U header;
   the first multiplexing indication field is used to indicate whether there is another multiplexing packet that is in the GTP-U packet and follows the multiplexing packet corresponding to the first GTP-U header;
   the third tunnel identifier field is used to indicate a GTP-U tunnel used for a multiplexing packet corresponding to the third GTP-U header; and
   the third multiplexing indication field is used to indicate whether there is another multiplexing packet that is in the GTP-U packet and follows the multiplexing packet corresponding to the third GTP-U header.

In a seventh possible implementation manner of the present invention, the first encapsulating unit is configured to:
use an unused field in the first GTP-U header as the first multiplexing indication field, or add the first multiplexing indication field to an extension header of the first GTP-U header, and use an unused field in the third GTP-U header as the third multiplexing indication field, or add the third multiplexing indication field to an extension header of the third GTP-U header.

In an eighth possible implementation manner of the present invention, when the at least two multiplexing packets for which the first encapsulating unit performs encapsulation are transmitted by using a same GTP-U tunnel, the encapsulating module further includes:
a padding unit, configured to: before the first encapsulating unit encapsulates the GTP-U header for each of the at least two multiplexing packets, pad each of the at least two multiplexing packets, so that sizes of the at least two padded multiplexing packets each are the set value; and
the first encapsulating unit is configured to:
   set a third tunnel identifier field and a third multiplexing indication field in a third GTP-U header; or
   set a third tunnel identifier field and a third multiplexing indication field in a third GTP-U header, and set a fourth multiplexing indication field in a fourth GTP-U header; where
   the third tunnel identifier field is used to indicate a GTP-U tunnel used for a multiplexing packet corresponding to the third GTP-U header;
   the third multiplexing indication field is used to indicate whether there is another multiplexing packet that is in the GTP-U packet and follows the multiplexing packet corresponding to the third GTP-U header; and
   the fourth multiplexing indication field is used to indicate whether there is another multiplexing packet that is in the GTP-U packet and follows a multiplexing packet corresponding to the fourth GTP-U header.

In a ninth possible implementation manner of the present invention, the first encapsulating unit is configured to:
use an unused field in the third GTP-U header as the third multiplexing indication field, or add the third multiplexing indication field to an extension header of the third GTP-U header, and use an unused field in the fourth GTP-U header as the fourth multiplexing indication field, or add the fourth multiplexing indication field to an extension header of the fourth GTP-U header.

In a tenth possible implementation manner of the present invention, the first encapsulating unit is further configured to:
further set a third length field in the third GTP-U header, and further set a fourth length field in the fourth GTP-U header, where the third length field is used to indicate a size of a padded multiplexing packet corresponding to the third GTP-U header, and the fourth length field is used to indicate a size of a padded multiplexing packet corresponding to the fourth GTP-U header.

In an eleventh possible implementation manner of the present invention, the apparatus includes:
a third encapsulating unit, configured to encapsulate one GTP-U header for the at least two multiplexing packets, so that the at least two encapsulated multiplexing packets are one G-PDU, the GTP-U header includes at least two multiplexing extension headers, and the at least two multiplexing extension headers are in one-to-one correspondence with the at least two multiplexing packets, or the GTP-U header includes at least one multiplexing extension header, the GTP-U header includes a first next extension header type field, the first next extension header type field is corresponding to the first multiplexing packet in the GTP-U packet, the at least one multiplexing extension header is in one-to-one correspondence with a multiplexing packet, except the first multiplexing packet, in the GTP-U packet, and the first next extension header type field is used to indicate whether the first extension header in the GTP-U header in the GTP-U packet is a multiplexing extension header; and
a fourth encapsulating unit, configured to encapsulate an IP header and a UDP header for the G-PDU obtained by the third encapsulating unit, to obtain the GTP-U packet.

In a twelfth possible implementation manner of the present invention, the third encapsulating unit is configured to:
set a fifth length field, a fifth tunnel identifier field, and a second next extension header type field in a first multiplexing extension header; where
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header; and
the second next extension header type field is used to indicate whether there is another multiplexing extension header that is in the GTP-U packet and follows the first multiplexing extension header.

In a thirteenth possible implementation manner of the present invention, the third encapsulating unit is configured to:
further set a first tunnel identifier flag field in the first multiplexing extension header, where the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

In a fourteenth possible implementation manner of the present invention, the encapsulating module further includes:
a padding unit, configured to: before the third encapsulating unit encapsulates the GTP-U header for the at least two multiplexing packets, pad each of the at least two multiplexing packets, so that sizes of the at least two padded multiplexing packets each are the set value; and
the third encapsulating unit is configured to:
   set a fifth length field, a fifth tunnel identifier field, and a second next extension header type field in a first multiplexing extension header; or
   set a sixth tunnel identifier field and a third next extension header type field in a second multiplexing extension header; or
   set a fifth length field, a fifth tunnel identifier field, and a second next extension header type field in a first multiplexing extension header, and set a sixth tunnel identifier field and a third next extension header type field in a second multiplexing extension header; where
   the fifth length field is used to indicate a size of a multiplexing packet corresponding to the first multiplexing extension header;
   the fifth tunnel identifier field is used to indicate a GTP-U tunnel used for the multiplexing packet corresponding to the first multiplexing extension header;
   the second next extension header type field is used to indicate whether there is another multiplexing extension header that is in the GTP-U packet and follows the first multiplexing extension header;
   the sixth tunnel identifier field is used to indicate a GTP-U tunnel used for a multiplexing packet corresponding to the second multiplexing extension header; and
   the third next extension header type field is used to indicate whether there is another multiplexing extension header that is in the GTP-U packet and follows the second multiplexing extension header.

In a fifteenth possible implementation manner of the present invention, the third encapsulating unit is configured to:
further set a first tunnel identifier flag field in the first multiplexing extension header, and further set a second tunnel identifier flag field in the second multiplexing extension header, where the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header.

In a sixteenth possible implementation manner of the present invention, when the at least two multiplexing packets for which the third encapsulating unit performs encapsulation are transmitted by using a same GTP-U tunnel, the third encapsulating unit is configured to:
set a fifth length field, a fifth tunnel identifier field, and the first next extension header type field in a first multiplexing extension header; or
set a fifth length field, a fifth tunnel identifier field, and the first next extension header type field in a first multiplexing extension header, and set a seventh length field and a fourth next extension header type field in a third multiplexing extension header; where
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the seventh length field is used to indicate a size of a multiplexing packet corresponding to the third multiplexing extension header; and
the fourth next extension header type field is used to indicate whether there is another multiplexing extension header that is in the GTP-U packet and follows the third multiplexing extension header.

In a seventeenth possible implementation manner of the present invention, the third encapsulating unit is configured to:
further set a first tunnel identifier flag field in the first multiplexing extension header, and further set a third tunnel identifier flag field in the third multiplexing extension header, where the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the third tunnel identifier flag field is used to indicate whether a GTP-U tunnel used for the multiplexing packet corresponding to the third multiplexing extension header is the same as a GTP-U tunnel used for a multiplexing packet corresponding to a multiplexing extension header previous to the third multiplexing extension header.

In an eighteenth possible implementation manner of the present invention, when the at least two multiplexing packets for which the third encapsulating unit performs encapsulation are transmitted by using a same GTP-U tunnel, the apparatus further includes:
a padding unit, configured to: before the third encapsulating unit encapsulates the GTP-U header for the at least two multiplexing packets, pad each of the at least two multiplexing packets, so that sizes of the at least two padded multiplexing packets each are the set value; and
the third encapsulating unit is configured to:
   set a sixth tunnel identifier field and a third next extension header type field in a second multiplexing extension header; or
   set a sixth tunnel identifier field and a third next extension header type field in a second multiplexing extension header, and set a fifth next extension header type field in a fourth multiplexing extension header; where
   the sixth tunnel identifier field is used to indicate a GTP-U tunnel used for a multiplexing packet corresponding to the second multiplexing extension header;
   the third next extension header type field is used to indicate whether there is another multiplexing extension header that is in the GTP-U packet and follows the second multiplexing extension header; and
   the fifth next extension header type field is used to indicate whether there is another multiplexing extension header that is in the GTP-U packet and follows the fourth multiplexing extension header.

In a nineteenth possible implementation manner of the present invention, the third encapsulating unit is configured to:
further set a third tunnel identifier flag field in the third multiplexing extension header, and further set a fourth tunnel identifier flag field in the fourth multiplexing extension header, where the third tunnel identifier flag field is used to indicate whether the GTP-U tunnel used for the multiplexing packet corresponding to the third multiplexing extension header is the same as a GTP-U tunnel used for a multiplexing packet corresponding to a multiplexing extension header previous to the third multiplexing extension header, and the fourth tunnel identifier flag field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

In a twentieth possible implementation manner of the present invention, the third encapsulating unit is further configured to:
further set a sixth length field in the second multiplexing extension header, and further set an eighth length field in the fourth multiplexing extension header, where the sixth length field is used to indicate a size of the padded multiplexing packet corresponding to the second multiplexing extension header, and the eighth length field is used to indicate a size of the padded multiplexing packet corresponding to the fourth multiplexing extension header.

In a twenty-first possible implementation manner of the present invention, the third encapsulating unit is configured to:
set a ninth length field and a ninth tunnel identifier field in the GTP-U header, where the ninth length field is used to indicate a length of the first multiplexing packet in the GTP-U packet, and the ninth tunnel identifier field is used to indicate a GTP-U tunnel used for the first multiplexing packet.

In a twenty-second possible implementation manner of the present invention, the apparatus further includes:
an acquiring module, configured to acquire the multiplexing policy from an MME/a PCRF.

According to a fourth aspect, the present invention provides a data transmission apparatus, and the apparatus includes:
a receiving module, configured to receive a general packet radio service Tunneling Protocol-User plane GTP-U packet, where the GTP-U packet is obtained by encapsulating at least two multiplexing packets, the at least two multiplexing packets are at least two Internet Protocol IP packets determined according to a multiplexing policy, and the multiplexing policy includes at least one of the following conditions: the multiplexing packets are IP packets whose sizes are less than or equal to a set value, bearer identifiers of the multiplexing packets are the same, quality of service class identifiers QCIs of the multiplexing packets are the same, and flow description information of the multiplexing packets is the same;
a decapsulating module, configured to decapsulate the GTP-U packet received by the receiving module, to obtain the at least two multiplexing packets; and
a sending module, configured to send the at least two multiplexing packets obtained by the decapsulating module.

In a first possible implementation manner of the present invention, the decapsulating module includes:
a first decapsulating unit, configured to decapsulate the GTP-U packet according to an IP header and a User Datagram Protocol UDP header in the GTP-U packet to obtain at least two general packet radio service Tunneling Protocol packet data units G-PDUs, where each G-PDU of the at least two G-PDUs includes one GTP-U header; and
a second decapsulating unit, configured to decapsulate, according to the GTP-U headers in the at least two G-PDUs, the at least two G-PDUs obtained by the first decapsulating unit, to obtain the at least two multiplexing packets.

In a second possible implementation manner of the present invention, the GTP-U header is a first GTP-U header, and the first GTP-U header includes a first length field, a first tunnel identifier field, and a first multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header; the first multiplexing indication field is used to indicate whether there is another multiplexing packet that is in the GTP-U packet and follows the multiplexing packet corresponding to the first GTP-U header; and
the second decapsulating unit is configured to:
determine, according to the first multiplexing indication fields in the first GTP-U headers in the at least two G-PDUs, the multiplexing packets that need to be decapsulated, and decapsulate the at least two G-PDUs according to the first length fields, the first tunnel identifier fields, and the first multiplexing indication fields that are in the first GTP-U headers in the at least two G-PDUs, to obtain the at least two multiplexing packets.

In a third possible implementation manner of the present invention, the first multiplexing indication field is an unused field in the first GTP-U header or is carried in an extension header of the first GTP-U header.

In a fourth possible implementation manner of the present invention, when the at least two multiplexing packets are transmitted by using a same GTP-U tunnel and the GTP-U header is a first GTP-U header, the second decapsulating unit is configured to:
determine, according to first multiplexing indication fields in the first GTP-U headers in the at least two G-PDUs, the multiplexing packets that need to be decapsulated, and decapsulate the at least two G-PDUs according to first length fields, first tunnel identifier fields, and the first multiplexing indication fields that are in the first GTP-U headers in the at least two G-PDUs, to obtain the at least two multiplexing packets; or
when the at least two multiplexing packets are transmitted by using a same GTP-U tunnel, the first one GTP-U header of the GTP-U headers is a first GTP-U header, and the GTP-U header except the first one GTP-U header is a second GTP-U header, the second decapsulating unit is configured to:
   determine, according to a first multiplexing indication field in the first GTP-U header in the at least two G-PDUs and a second multiplexing indication field in the second GTP-U header in the at least two G-PDUs, the multiplexing packets that need to be decapsulated, and decapsulate the at least two G-PDUs according to a first length field, a first tunnel identifier field, and the first multiplexing indication field that are in the first GTP-U header in the at least two G-PDUs and a second length field and the second multiplexing indication field that are in the second GTP-U header in the at least two G-PDUs, to obtain the at least two multiplexing packets; where
   the first GTP-U header includes the first length field, the first tunnel identifier field, and the first multiplexing indication field, and the second GTP-U header includes the second length field and the second multiplexing indication field;
   the first length field is used to indicate a size of a multiplexing packet corresponding to the first GTP-U header;
   the first tunnel identifier field is used to indicate a GTP-U tunnel used for the multiplexing packet corresponding to the first GTP-U header;
   the first multiplexing indication field is used to indicate whether there is another multiplexing packet that is in the GTP-U packet and follows the multiplexing packet corresponding to the first GTP-U header;
   the second length field is used to indicate a size of a multiplexing packet corresponding to the second GTP-U header; and
   the second multiplexing indication field is used to indicate whether there is another multiplexing packet that is in the GTP-U packet and follows the multiplexing packet corresponding to the second GTP-U header.

In a fifth possible implementation manner of the present invention, the first multiplexing indication field is an unused field in the first GTP-U header or is carried in an extension header of the first GTP-U header, and the second multiplexing indication field is an unused field in the second GTP-U header or is carried in an extension header of the second GTP-U header.

In a sixth possible implementation manner of the present invention, when sizes of the at least two multiplexing packets each are the set value and the GTP-U header is a first GTP-U header, the second decapsulating unit is configured to:
determine, according to first multiplexing indication fields in the first GTP-U headers in the at least two G-PDUs, the multiplexing packets that need to be decapsulated, and decapsulate the at least two G-PDUs according to first length fields, first tunnel identifier fields, and the first multiplexing indication fields that are in the first GTP-U headers in the at least two G-PDUs, to obtain the at least two multiplexing packets; or
when sizes of the at least two multiplexing packets each are the set value and the GTP-U header is a third GTP-U header, the second decapsulating unit is configured to:
   determine, according to third multiplexing indication fields in the third GTP-U headers in the at least two G-PDUs, the multiplexing packets that need to be decapsulated, and decapsulate the at least two G-PDUs according to third tunnel identifier fields and the third multiplexing indication fields that are in the third GTP-U headers in the at least two G-PDUs, and a network configuration, to obtain the at least two multiplexing packets, where the network configuration is used to indicate a size of the set value; or
   when sizes of the at least two multiplexing packets each are the set value, the first one GTP-U header of the GTP-U headers is a first GTP-U header, and the GTP-U header except the first one GTP-U header is a third GTP-U header, the second decapsulating unit is configured to:
      determine, according to a first multiplexing indication field in the first GTP-U header in the at least two G-PDUs and a third multiplexing indication field in the third GTP-U header in the at least two G-PDUs, the multiplexing packets that need to be decapsulated, and decapsulate the at least two G-PDUs according to a first length field, a first tunnel identifier field, and the first multiplexing indication field that are in the first GTP-U header in the at least two G-PDUs and a third tunnel identifier field and the third multiplexing indication field that are in the third GTP-U header in the at least two G-PDUs, to obtain the at least two multiplexing packets; where
      the first GTP-U header includes the first length field, the first tunnel identifier field, and the first multiplexing indication field, and the third GTP-U header includes the third tunnel identifier field and the third multiplexing indication field;
      the first length field is used to indicate a size of a multiplexing packet corresponding to the first GTP-U header;
      the first tunnel identifier field is used to indicate a GTP-U tunnel used for the multiplexing packet corresponding to the first GTP-U header;
      the first multiplexing indication field is used to indicate whether there is another multiplexing packet that is in the GTP-U packet and follows the multiplexing packet corresponding to the first GTP-U header;
      the third tunnel identifier field is used to indicate a GTP-U tunnel used for a multiplexing packet corresponding to the third GTP-U header; and
      the third multiplexing indication field is used to indicate whether there is another multiplexing packet that is in the GTP-U packet and follows the multiplexing packet corresponding to the third GTP-U header.

In a seventh possible implementation manner of the present invention, the first multiplexing indication field is an unused field in the first GTP-U header or is carried in an extension header of the first GTP-U header, and the third multiplexing indication field is an unused field in the third GTP-U header or is carried in an extension header of the third GTP-U header.

In an eighth possible implementation manner of the present invention, when the at least two multiplexing packets are transmitted by using a same GTP-U tunnel, sizes of the at least two multiplexing packets each are the set value, and the GTP-U header is a third GTP-U header, the second decapsulating unit is configured to:
determine, according to third multiplexing indication fields in the third GTP-U headers in the at least two G-PDUs, the multiplexing packets that need to be decapsulated, and decapsulate the at least two G-PDUs according to third tunnel identifier fields and the third multiplexing indication fields that are in the third GTP-U headers in the at least two G-PDUs, and a network configuration, to obtain the at least two multiplexing packets, where the network configuration is used to indicate a size of the set value; or
when the at least two multiplexing packets are transmitted by using a same GTP-U tunnel, sizes of the at least two multiplexing packets each are the set value, the first one GTP-U header of the GTP-U headers is a third GTP-U header, and the GTP-U header except the first one GTP-U header is a fourth GTP-U header, the second decapsulating unit is configured to:
   determine, according to a third multiplexing indication field in the third GTP-U header in the at least two G-PDUs and a fourth multiplexing indication field in the fourth GTP-U header in the at least two G-PDUs, the multiplexing packets that need to be decapsulated, and decapsulate the at least two G-PDUs according to a third tunnel identifier field and the third multiplexing indication field that are in the third GTP-U header in the at least two G-PDUs and the fourth multiplexing indication field in the fourth GTP-U header in the at least two G-PDUs, to obtain the at least two multiplexing packets; where
   the third GTP-U header includes the third tunnel identifier field and the third multiplexing indication field, and the fourth GTP-U header includes the fourth multiplexing indication field;
   the third tunnel identifier field is used to indicate a GTP-U tunnel used for a multiplexing packet corresponding to the third GTP-U header;
   the third multiplexing indication field is used to indicate whether there is another multiplexing packet that is in the GTP-U packet and follows the multiplexing packet corresponding to the third GTP-U header; and
   the fourth multiplexing indication field is used to indicate whether there is another multiplexing packet that is in the GTP-U packet and follows a multiplexing packet corresponding to the fourth GTP-U header.

In a ninth possible implementation manner of the present invention, the third multiplexing indication field is an unused field in the third GTP-U header or is carried in an extension header of the third GTP-U header, and the fourth multiplexing indication field is an unused field in the fourth GTP-U header or is carried in an extension header of the fourth GTP-U header.

In a tenth possible implementation manner of the present invention, the third GTP-U header further includes a third length field, the fourth GTP-U header further includes a fourth length field, the third length field is used to indicate a size of a padded multiplexing packet corresponding to the third GTP-U header, and the fourth length field is used to indicate a size of a padded multiplexing packet corresponding to the fourth GTP-U header.

In an eleventh possible implementation manner of the present invention, the decapsulating module includes:
a third decapsulating unit, configured to decapsulate the GTP-U packet according to an IP header and a UDP header in the GTP-U packet to obtain one G-PDU, where a GTP-U header in the G-PDU includes at least two multiplexing extension headers, and the at least two multiplexing extension headers are in one-to-one correspondence with the at least two multiplexing packets, or the GTP-U header includes at least one multiplexing extension header and a first next extension header type field, the first next extension header type field is corresponding to the first multiplexing packet in the GTP-U packet, the at least one multiplexing extension header is in one-to-one correspondence with a multiplexing packet, except the first multiplexing packet, in the GTP-U packet, and the first next extension header type field is used to indicate whether the first extension header in the GTP-U header in the GTP-U packet is a multiplexing extension header; and
a fourth decapsulating unit, configured to decapsulate, according to the GTP-U header in the G-PDU, the G-PDU obtained by the third decapsulating unit, to obtain the at least two multiplexing packets.

In a twelfth possible implementation manner of the present invention, the multiplexing extension header is a first multiplexing extension header, and the first multiplexing extension header includes a fifth length field, a fifth tunnel identifier field, and a second next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header; and
the fourth decapsulating unit is configured to:
determine, according to the second next extension header type field in the first multiplexing extension header in the G-PDU, the multiplexing packets that need to be decapsulated, and decapsulate the G-PDU according to the fifth length field, the fifth tunnel identifier field, and the second next extension header type field that are in the first multiplexing extension header in the G-PDU, to obtain the at least two multiplexing packets.

In a thirteenth possible implementation manner of the present invention, the first multiplexing extension header further includes a first tunnel identifier flag field, and the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

In a fourteenth possible implementation manner of the present invention, when a size of the multiplexing packet is the set value and the multiplexing extension header is a first multiplexing extension header, the fourth decapsulating unit is configured to:
determine, according to a second next extension header type field in the first multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU, to obtain the at least two multiplexing packets; or
when a size of the multiplexing packet is the set value and the multiplexing extension header is a second multiplexing extension header, the fourth decapsulating unit is configured to:
   determine, according to a third next extension header type field in the second multiplexing extension header in the G-PDU, the multiplexing packets that need to be decapsulated, and decapsulate the G-PDU according to a sixth tunnel identifier field and the third next extension header type field that are in the second multiplexing extension header in the G-PDU, and a network configuration, to obtain the at least two multiplexing packets, where the network configuration is used to indicate a size of the set value; or
   when a size of the multiplexing packet is the set value, the first one multiplexing extension header of the multiplexing extension headers is a first multiplexing extension header, and the multiplexing extension header except the first one multiplexing extension header is a second multiplexing extension header, the fourth decapsulating unit is configured to:
      determine, according to a second next extension header type field in the first multiplexing extension header in the G-PDU and a third next extension header type field in the second multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU and a sixth tunnel identifier field and the third next extension header type field that are in the second multiplexing extension header in the G-PDU, to obtain the at least two multiplexing packets; where
      the first multiplexing extension header includes the fifth tunnel identifier field, the fifth length field, and the second next extension header type field;
      the second multiplexing extension header includes the sixth tunnel identifier field and the third next extension header type field;
      the fifth length field is used to indicate a size of a multiplexing packet corresponding to the first multiplexing extension header;
      the fifth tunnel identifier field is used to indicate a GTP-U tunnel used for the multiplexing packet corresponding to the first multiplexing extension header;
      the second next extension header type field is used to indicate whether there is another multiplexing extension header that is in the GTP-U packet and follows the first multiplexing extension header;
      the sixth tunnel identifier field is used to indicate a GTP-U tunnel used for a multiplexing packet corresponding to the second multiplexing extension header; and
      the third next extension header type field is used to indicate whether there is another multiplexing extension header that is in the GTP-U packet and follows the second multiplexing extension header.

In a fifteenth possible implementation manner of the present invention, the first multiplexing extension header further includes a first tunnel identifier flag field, the second multiplexing extension header further includes a second tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header.

In a sixteenth possible implementation manner of the present invention, when the multiplexing packet is transmitted by using a same GTP-U tunnel and the multiplexing extension header in the GTP-U header is a first multiplexing extension header, the fourth decapsulating unit is configured to:
determine, according to a second next extension header type field in the first multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU, to obtain the at least two multiplexing packets; or
when the multiplexing packet is transmitted by using a same GTP-U tunnel, the first one multiplexing extension header of the multiplexing extension headers is a first multiplexing extension header, and the multiplexing extension header except the first one multiplexing extension header is a third multiplexing extension header, the fourth decapsulating unit is configured to:
   determine, according to a second next extension header type field in the first multiplexing extension header in the G-PDU and a fourth next extension header type field in the third multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU and a seventh length field and the fourth next extension header type field that are in the third multiplexing extension header in the G-PDU, to obtain the at least two multiplexing packets; where
   the first multiplexing extension header includes the fifth length field, the fifth tunnel identifier field, and the second next extension header type field, and the third multiplexing extension header includes the seventh length field and the fourth next extension header type field;
   the fifth length field is used to indicate a size of a multiplexing packet corresponding to the first multiplexing extension header;
   the fifth tunnel identifier field is used to indicate a GTP-U tunnel used for the multiplexing packet corresponding to the first multiplexing extension header;
   the second next extension header type field is used to indicate whether there is another multiplexing extension header that is in the GTP-U packet and follows the first multiplexing extension header;
   the seventh length field is used to indicate a size of a multiplexing packet corresponding to the third multiplexing extension header; and
   the fourth next extension header type field is used to indicate whether there is another multiplexing extension header that is in the GTP-U packet and follows the third multiplexing extension header.

In a seventeenth possible implementation manner of the present invention, the first multiplexing extension header further includes a first tunnel identifier flag field, the third multiplexing extension header further includes a third tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the third tunnel identifier flag field is used to indicate whether a GTP-U tunnel used for the multiplexing packet corresponding to the third multiplexing extension header is the same as a GTP-U tunnel used for a multiplexing packet corresponding to a multiplexing extension header previous to the third multiplexing extension header.

In an eighteenth possible implementation manner of the present invention, when the at least two multiplexing packets are transmitted by using a same GTP-U tunnel, a size of the multiplexing packet is the set value, and the multiplexing extension header is a second multiplexing extension header, the fourth decapsulating unit is configured to:
determine, according to a third next extension header type field in the second multiplexing extension header in the G-PDU, the multiplexing packets that need to be decapsulated, and decapsulate the G-PDU according to a sixth tunnel identifier field and the third next extension header type field that are in the second multiplexing extension header in the G-PDU, to obtain the at least two multiplexing packets; or
when the at least two multiplexing packets are transmitted by using a same GTP-U tunnel, a size of the multiplexing packet is the set value, the first one multiplexing extension header of the multiplexing extension headers is a second multiplexing extension header, and the multiplexing extension header except the first one multiplexing extension header is a fourth multiplexing extension header, the fourth decapsulating unit is configured to:
   determine, according to a third next extension header type field in the second multiplexing extension header in the G-PDU and a fifth next extension header type field in the fourth multiplexing extension header in the G-PDU, the multiplexing packets that need to be decapsulated, and decapsulate the G-PDU according to a sixth tunnel identifier field and the third next extension header type field that are in the second multiplexing extension header in the G-PDU and the fifth next extension header type field in the fourth multiplexing extension header in the G-PDU, to obtain the at least two multiplexing packets; where
   the second multiplexing extension header includes the sixth tunnel identifier field and the third next extension header type field, and the fourth multiplexing extension header includes the fifth next extension header type field;
   the sixth tunnel identifier field is used to indicate a GTP-U tunnel used for a multiplexing packet corresponding to the second multiplexing extension header;
   the third next extension header type field is used to indicate whether there is another multiplexing extension header that is in the GTP-U packet and follows the second multiplexing extension header; and
   the fifth next extension header type field is used to indicate whether there is another multiplexing extension header that is in the GTP-U packet and follows the fourth multiplexing extension header.

In a nineteenth possible implementation manner of the present invention, the second multiplexing extension header further includes a second tunnel identifier flag field, the fourth multiplexing extension header further includes a fourth tunnel identifier flag field, the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header, and the fourth tunnel identifier flag field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

In a twentieth possible implementation manner of the present invention, the second multiplexing extension header further includes a sixth length field, the fourth multiplexing extension header further includes an eighth length field, the sixth length field is used to indicate a size of a padded multiplexing packet corresponding to the second multiplexing extension header, and the eighth length field is used to indicate a size of a padded multiplexing packet corresponding to the fourth multiplexing extension header.

In a twenty-first possible implementation manner of the present invention, the GTP-U header further includes a ninth length field and a ninth tunnel identifier field, the ninth length field is used to indicate a length of the first multiplexing packet in the GTP-U packet, and the ninth tunnel identifier field is used to indicate a GTP-U tunnel used for the first multiplexing packet.

In a twenty-second possible implementation manner of the present invention, the multiplexing policy is acquired from a mobility management entity MME/a policy control and charging rules function entity PCRF.

According to a fifth aspect, the present invention provides a data transmission apparatus, and the apparatus includes:
a receiver, configured to receive at least two Internet Protocol IP packets;
a processor, configured to: determine, according to a multiplexing policy, at least two multiplexing packets from the at least two IP packets received by the receiver, where the multiplexing policy includes at least one of the following conditions: the multiplexing packets are IP packets whose sizes are less than or equal to a set value, bearer identifiers of the multiplexing packets are the same, quality of service class identifiers QCIs of the multiplexing packets are the same, and flow description information of the multiplexing packets is the same; and encapsulate the at least two multiplexing packets into one general packet radio service Tunneling Protocol-User plane GTP-U packet; and
a transmitter, configured to send the GTP-U packet obtained by the processor.

In a first possible implementation manner of the present invention, the processor is configured to:
encapsulate a GTP-U header for each of the at least two multiplexing packets to obtain at least two general packet radio service Tunneling Protocol packet data units G-PDUs; and
encapsulate one IP header and one User Datagram Protocol UDP header for the at least two G-PDUs to obtain the GTP-U packet.

In a second possible implementation manner of the present invention, the processor is configured to:
set a first length field, a first tunnel identifier field, and a first multiplexing indication field in a first GTP-U header; where
the first length field is used to indicate a size of a multiplexing packet corresponding to the first GTP-U header;
the first tunnel identifier field is used to indicate a GTP-U tunnel used for the multiplexing packet corresponding to the first GTP-U header; and
the first multiplexing indication field is used to indicate whether there is another multiplexing packet that is in the GTP-U packet and follows the multiplexing packet corresponding to the first GTP-U header.

In a third possible implementation manner of the present invention, the processor is configured to:
use an unused field in the first GTP-U header as the first multiplexing indication field, or add the first multiplexing indication field to an extension header of the first GTP-U header.

In a fourth possible implementation manner of the present invention, the processor is configured to: when the at least two multiplexing packets are transmitted by using a same GTP-U tunnel,
set a first length field, a first tunnel identifier field, and a first multiplexing indication field in a first GTP-U header; or
set a first length field, a first tunnel identifier field, and a first multiplexing indication field in a first GTP-U header, and set a second length field and a second multiplexing indication field in a second GTP-U header; where
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the second length field is used to indicate a size of a multiplexing packet corresponding to the second GTP-U header; and
the second multiplexing indication field is used to indicate whether there is another multiplexing packet that is in the GTP-U packet and follows the multiplexing packet corresponding to the second GTP-U header.

In a fifth possible implementation manner of the present invention, the processor is configured to:
use an unused field in the first GTP-U header as the first multiplexing indication field, or add the first multiplexing indication field to an extension header of the first GTP-U header, and use an unused field in the second GTP-U header as the second multiplexing indication field, or add the second multiplexing indication field to an extension header of the second GTP-U header.

In a sixth possible implementation manner of the present invention, the processor is configured to:
pad each of the at least two multiplexing packets, so that sizes of the at least two padded multiplexing packets each are the set value; and
set a first length field, a first tunnel identifier field, and a first multiplexing indication field in a first GTP-U header; or
set a third tunnel identifier field and a third multiplexing indication field in a third GTP-U header; or
set a first length field, a first tunnel identifier field, and a first multiplexing indication field in a first GTP-U header, and set a third tunnel identifier field and a third multiplexing indication field in a third GTP-U header; where
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the third tunnel identifier field is used to indicate a GTP-U tunnel used for a multiplexing packet corresponding to the third GTP-U header; and
the third multiplexing indication field is used to indicate whether there is another multiplexing packet that is in the GTP-U packet and follows the multiplexing packet corresponding to the third GTP-U header.

In a seventh possible implementation manner of the present invention, the processor is configured to:
use an unused field in the first GTP-U header as the first multiplexing indication field, or add the first multiplexing indication field to an extension header of the first GTP-U header, and use an unused field in the third GTP-U header as the third multiplexing indication field, or add the third multiplexing indication field to an extension header of the third GTP-U header.

In an eighth possible implementation manner of the present invention, the processor is configured to: when the at least two multiplexing packets are transmitted by using a same GTP-U tunnel,
pad each of the at least two multiplexing packets, so that sizes of the at least two padded multiplexing packets each are the set value; and
set a third tunnel identifier field and a third multiplexing indication field in a third GTP-U header; or
set a third tunnel identifier field and a third multiplexing indication field in a third GTP-U header, and set a fourth multiplexing indication field in a fourth GTP-U header; where
the third tunnel identifier field is used to indicate a GTP-U tunnel used for a multiplexing packet corresponding to the third GTP-U header;
the third multiplexing indication field is used to indicate whether there is another multiplexing packet that is in the GTP-U packet and follows the multiplexing packet corresponding to the third GTP-U header; and
the fourth multiplexing indication field is used to indicate whether there is another multiplexing packet that is in the GTP-U packet and follows a multiplexing packet corresponding to the fourth GTP-U header.

In a ninth possible implementation manner of the present invention, the processor is configured to:
use an unused field in the third GTP-U header as the third multiplexing indication field, or add the third multiplexing indication field to an extension header of the third GTP-U header, and use an unused field in the fourth GTP-U header as the fourth multiplexing indication field, or add the fourth multiplexing indication field to an extension header of the fourth GTP-U header.

In a tenth possible implementation manner of the present invention, the processor is further configured to:
further set a third length field in the third GTP-U header, and further set a fourth length field in the fourth GTP-U header, where the third length field is used to indicate a size of a padded multiplexing packet corresponding to the third GTP-U header, and the fourth length field is used to indicate a size of a padded multiplexing packet corresponding to the fourth GTP-U header.

In an eleventh possible implementation manner of the present invention, the processor is configured to:
encapsulate one GTP-U header for the at least two multiplexing packets, so that the at least two encapsulated multiplexing packets are one G-PDU, the GTP-U header includes at least two multiplexing extension headers, and the at least two multiplexing extension headers are in one-to-one correspondence with the at least two multiplexing packets, or the GTP-U header includes at least one multiplexing extension header, the GTP-U header includes a first next extension header type field, the first next extension header type field is corresponding to the first multiplexing packet in the GTP-U packet, the at least one multiplexing extension header is in one-to-one correspondence with a multiplexing packet, except the first multiplexing packet, in the GTP-U packet, and the first next extension header type field is used to indicate whether the first extension header in the GTP-U header in the GTP-U packet is a multiplexing extension header; and
encapsulate an IP header and a UDP header for the G-PDU to obtain the GTP-U packet.

In a twelfth possible implementation manner of the present invention, the processor is configured to:
set a fifth length field, a fifth tunnel identifier field, and a second next extension header type field in a first multiplexing extension header; where
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header; and
the second next extension header type field is used to indicate whether there is another multiplexing extension header that is in the GTP-U packet and follows the first multiplexing extension header.

In a thirteenth possible implementation manner of the present invention, the processor is configured to:
further set a first tunnel identifier flag field in the first multiplexing extension header, where the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

In a fourteenth possible implementation manner of the present invention, the processor is configured to:
pad each of the at least two multiplexing packets, so that sizes of the at least two padded multiplexing packets each are the set value; and
set a fifth length field, a fifth tunnel identifier field, and a second next extension header type field in a first multiplexing extension header; or
set a sixth tunnel identifier field and a third next extension header type field in a second multiplexing extension header; or
set a fifth length field, a fifth tunnel identifier field, and a second next extension header type field in a first multiplexing extension header, and set a sixth tunnel identifier field and a third next extension header type field in a second multiplexing extension header; where
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the sixth tunnel identifier field is used to indicate a GTP-U tunnel used for a multiplexing packet corresponding to the second multiplexing extension header; and
the third next extension header type field is used to indicate whether there is another multiplexing extension header that is in the GTP-U packet and follows the second multiplexing extension header.

In a fifteenth possible implementation manner of the present invention, the processor is configured to:
further set a first tunnel identifier flag field in the first multiplexing extension header, and further set a second tunnel identifier flag field in the second multiplexing extension header, where the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header.

In a sixteenth possible implementation manner of the present invention, the processor is configured to: when the at least two multiplexing packets are transmitted by using a same GTP-U tunnel,
set a fifth length field, a fifth tunnel identifier field, and the first next extension header type field in a first multiplexing extension header; or
set a fifth length field, a fifth tunnel identifier field, and the first next extension header type field in a first multiplexing extension header, and set a seventh length field and a fourth next extension header type field in a third multiplexing extension header; where
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the seventh length field is used to indicate a size of a multiplexing packet corresponding to the third multiplexing extension header; and
the fourth next extension header type field is used to indicate whether there is another multiplexing extension header that is in the GTP-U packet and follows the third multiplexing extension header.

In a seventeenth possible implementation manner of the present invention, the processor is configured to:
further set a first tunnel identifier flag field in the first multiplexing extension header, and further set a third tunnel identifier flag field in the third multiplexing extension header, where the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the third tunnel identifier flag field is used to indicate whether a GTP-U tunnel used for the multiplexing packet corresponding to the third multiplexing extension header is the same as a GTP-U tunnel used for a multiplexing packet corresponding to a multiplexing extension header previous to the third multiplexing extension header.

In an eighteenth possible implementation manner of the present invention, the processor is configured to: when the at least two multiplexing packets are transmitted by using a same GTP-U tunnel,
pad each of the at least two multiplexing packets, so that sizes of the at least two padded multiplexing packets each are the set value; and
set a sixth tunnel identifier field and a third next extension header type field in a second multiplexing extension header; or
set a sixth tunnel identifier field and a third next extension header type field in a second multiplexing extension header, and set a fifth next extension header type field in a fourth multiplexing extension header; where
the sixth tunnel identifier field is used to indicate a GTP-U tunnel used for a multiplexing packet corresponding to the second multiplexing extension header;
the third next extension header type field is used to indicate whether there is another multiplexing extension header that is in the GTP-U packet and follows the second multiplexing extension header; and
the fifth next extension header type field is used to indicate whether there is another multiplexing extension header that is in the GTP-U packet and follows the fourth multiplexing extension header.

In a nineteenth possible implementation manner of the present invention, the processor is configured to:
further set a third tunnel identifier flag field in the third multiplexing extension header, and further set a fourth tunnel identifier flag field in the fourth multiplexing extension header, where the third tunnel identifier flag field is used to indicate whether the GTP-U tunnel used for the multiplexing packet corresponding to the third multiplexing extension header is the same as a GTP-U tunnel used for a multiplexing packet corresponding to a multiplexing extension header previous to the third multiplexing extension header, and the fourth tunnel identifier flag field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

In a twentieth possible implementation manner of the present invention, the processor is further configured to:
further set a sixth length field in the second multiplexing extension header, and further set an eighth length field in the fourth multiplexing extension header, where the sixth length field is used to indicate a size of the padded multiplexing packet corresponding to the second multiplexing extension header, and the eighth length field is used to indicate a size of the padded multiplexing packet corresponding to the fourth multiplexing extension header.

In a twenty-first possible implementation manner of the present invention, the processor is configured to:
set a ninth length field and a ninth tunnel identifier field in the GTP-U header, where the ninth length field is used to indicate a length of the first multiplexing packet in the GTP-U packet, and the ninth tunnel identifier field is used to indicate a GTP-U tunnel used for the first multiplexing packet.

In a twenty-second possible implementation manner of the present invention, the receiver is further configured to:
acquire the multiplexing policy from an MME/a PCRF.

According to a sixth aspect, the present invention provides a data transmission apparatus, and the apparatus includes:
a receiver, configured to receive a general packet radio service Tunneling Protocol-User plane GTP-U packet, where the GTP-U packet is obtained by encapsulating at least two multiplexing packets, the at least two multiplexing packets are at least two Internet Protocol IP packets determined according to a multiplexing policy, and the multiplexing policy includes at least one of the following conditions: the multiplexing packets are IP packets whose sizes are less than or equal to a set value, bearer identifiers of the multiplexing packets are the same, quality of service class identifiers QCIs of the multiplexing packets are the same, and flow description information of the multiplexing packets is the same;
   a processor, configured to decapsulate the GTP-U packet received by the receiver, to obtain the at least two multiplexing packets; and
   a transmitter, configured to send the at least two multiplexing packets obtained by the processor.

In a first possible implementation manner of the present invention, the processor is configured to:
decapsulate the GTP-U packet according to an IP header and a User Datagram Protocol UDP header in the GTP-U packet to obtain at least two general packet radio service Tunneling Protocol packet data units G-PDUs, where each G-PDU of the at least two G-PDUs includes one GTP-U header; and
decapsulate the at least two G-PDUs according to the GTP-U headers in the at least two G-PDUs to obtain the at least two multiplexing packets.

In a second possible implementation manner of the present invention, the processor is configured to: when the GTP-U header is a first GTP-U header, determine, according to first multiplexing indication fields in the first GTP-U headers in the at least two G-PDUs, the multiplexing packets that need to be decapsulated, and decapsulate the at least two G-PDUs according to first length fields, first tunnel identifier fields, and the first multiplexing indication fields that are in the first GTP-U headers in the at least two G-PDUs, to obtain the at least two multiplexing packets; where
the first GTP-U header includes the first length field, the first tunnel identifier field, and the first multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header; and
the first multiplexing indication field is used to indicate whether there is another multiplexing packet that is in the GTP-U packet and follows the multiplexing packet corresponding to the first GTP-U header.

In a third possible implementation manner of the present invention, the first multiplexing indication field is an unused field in the first GTP-U header or is carried in an extension header of the first GTP-U header.

In a fourth possible implementation manner of the present invention, the processor is configured to:
when the at least two multiplexing packets are transmitted by using a same GTP-U tunnel and the GTP-U header is a first GTP-U header, determine, according to first multiplexing indication fields in the first GTP-U headers in the at least two G-PDUs, the multiplexing packets that need to be decapsulated, and decapsulate the at least two G-PDUs according to first length fields, first tunnel identifier fields, and the first multiplexing indication fields that are in the first GTP-U headers in the at least two G-PDUs, to obtain the at least two multiplexing packets; or
when the at least two multiplexing packets are transmitted by using a same GTP-U tunnel, the first one GTP-U header of the GTP-U headers is a first GTP-U header, and the GTP-U header except the first one GTP-U header is a second GTP-U header, determine, according to a first multiplexing indication field in the first GTP-U header in the at least two G-PDUs and a second multiplexing indication field in the second GTP-U header in the at least two G-PDUs, the multiplexing packets that need to be decapsulated, and decapsulate the at least two G-PDUs according to a first length field, a first tunnel identifier field, and the first multiplexing indication field that are in the first GTP-U header in the at least two G-PDUs and a second length field and the second multiplexing indication field that are in the second GTP-U header in the at least two G-PDUs, to obtain the at least two multiplexing packets; where
the first GTP-U header includes the first length field, the first tunnel identifier field, and the first multiplexing indication field, and the second GTP-U header includes the second length field and the second multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the second length field is used to indicate a size of a multiplexing packet corresponding to the second GTP-U header; and
the second multiplexing indication field is used to indicate whether there is another multiplexing packet that is in the GTP-U packet and follows the multiplexing packet corresponding to the second GTP-U header.

In a fifth possible implementation manner of the present invention, the first multiplexing indication field is an unused field in the first GTP-U header or is carried in an extension header of the first GTP-U header, and the second multiplexing indication field is an unused field in the second GTP-U header or is carried in an extension header of the second GTP-U header.

In a sixth possible implementation manner of the present invention, the processor is configured to:
when sizes of the at least two multiplexing packets each are the set value and the GTP-U header is a first GTP-U header, determine, according to first multiplexing indication fields in the first GTP-U headers in the at least two G-PDUs, the multiplexing packets that need to be decapsulated, and decapsulate the at least two G-PDUs according to first length fields, first tunnel identifier fields, and the first multiplexing indication fields that are in the first GTP-U headers in the at least two G-PDUs, to obtain the at least two multiplexing packets; or
when sizes of the at least two multiplexing packets each are the set value and the GTP-U header is a third GTP-U header, determine, according to third multiplexing indication fields in the third GTP-U headers in the at least two G-PDUs, the multiplexing packets that need to be decapsulated, and decapsulate the at least two G-PDUs according to third tunnel identifier fields and the third multiplexing indication fields that are in the third GTP-U headers in the at least two G-PDUs, and a network configuration, to obtain the at least two multiplexing packets, where the network configuration is used to indicate a size of the set value; or
when sizes of the at least two multiplexing packets each are the set value, the first one GTP-U header of the GTP-U headers is a first GTP-U header, and the GTP-U header except the first one GTP-U header is a third GTP-U header, determine, according to a first multiplexing indication field in the first GTP-U header in the at least two G-PDUs and a third multiplexing indication field in the third GTP-U header in the at least two G-PDUs, the multiplexing packets that need to be decapsulated, and decapsulate the at least two G-PDUs according to a first length field, a first tunnel identifier field, and the first multiplexing indication field that are in the first GTP-U header in the at least two G-PDUs and a third length field and the third multiplexing indication field that are in the third GTP-U header in the at least two G-PDUs, to obtain the at least two multiplexing packets; where
the first GTP-U header includes the first length field, the first tunnel identifier field, and the first multiplexing indication field, and the third GTP-U header includes the third tunnel identifier field and the third multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the third tunnel identifier field is used to indicate a GTP-U tunnel used for a multiplexing packet corresponding to the third GTP-U header; and
the third multiplexing indication field is used to indicate whether there is another multiplexing packet that is in the GTP-U packet and follows the multiplexing packet corresponding to the third GTP-U header.

In a seventh possible implementation manner of the present invention, the first multiplexing indication field is an unused field in the first GTP-U header or is carried in an extension header of the first GTP-U header, and the third multiplexing indication field is an unused field in the third GTP-U header or is carried in an extension header of the third GTP-U header.

In an eighth possible implementation manner of the present invention, the processor is configured to:
when the at least two multiplexing packets are transmitted by using a same GTP-U tunnel, sizes of the at least two multiplexing packets each are the set value, and the GTP-U header is a third GTP-U header, determine, according to third multiplexing indication fields in the third GTP-U headers in the at least two G-PDUs, the multiplexing packets that need to be decapsulated, and decapsulate the at least two G-PDUs according to third tunnel identifier fields and the third multiplexing indication fields that are in the third GTP-U headers in the at least two G-PDUs, to obtain the at least two multiplexing packets; or
when the at least two multiplexing packets are transmitted by using a same GTP-U tunnel, sizes of the at least two multiplexing packets each are the set value, the first one GTP-U header of the GTP-U headers is a third GTP-U header, and the GTP-U header except the first one GTP-U header is a fourth GTP-U header, determine, according to a third multiplexing indication field in the third GTP-U header in the at least two G-PDUs and a fourth multiplexing indication field in the fourth GTP-U header in the at least two G-PDUs, the multiplexing packets that need to be decapsulated, and decapsulate the at least two G-PDUs according to a third tunnel identifier field and the third multiplexing indication field that are in the third GTP-U header in the at least two G-PDUs and the fourth multiplexing indication field in the fourth GTP-U header in the at least two G-PDUs, to obtain the at least two multiplexing packets; where
the third GTP-U header includes the third tunnel identifier field and the third multiplexing indication field, and the fourth GTP-U header includes the fourth multiplexing indication field;
the third tunnel identifier field is used to indicate a GTP-U tunnel used for a multiplexing packet corresponding to the third GTP-U header;
the third multiplexing indication field is used to indicate whether there is another multiplexing packet that is in the GTP-U packet and follows the multiplexing packet corresponding to the third GTP-U header; and
the fourth multiplexing indication field is used to indicate whether there is another multiplexing packet that is in the GTP-U packet and follows a multiplexing packet corresponding to the fourth GTP-U header.

In a ninth possible implementation manner of the present invention, the third multiplexing indication field is an unused field in the third GTP-U header or is carried in an extension header of the third GTP-U header, and the fourth multiplexing indication field is an unused field in the fourth GTP-U header or is carried in an extension header of the fourth GTP-U header.

In a tenth possible implementation manner of the present invention, the third GTP-U header further includes a third length field, the fourth GTP-U header further includes a fourth length field, the third length field is used to indicate a size of a padded multiplexing packet corresponding to the third GTP-U header, and the fourth length field is used to indicate a size of a padded multiplexing packet corresponding to the fourth GTP-U header.

In an eleventh possible implementation manner of the present invention, the processor is configured to:
decapsulate the GTP-U packet according to an IP header and a UDP header in the GTP-U packet to obtain one G-PDU, where a GTP-U header in the G-PDU includes at least two multiplexing extension headers, and the at least two multiplexing extension headers are in one-to-one correspondence with the at least two multiplexing packets, or the GTP-U header includes at least one multiplexing extension header and a first next extension header type field, the first next extension header type field is corresponding to the first multiplexing packet in the GTP-U packet, the at least one multiplexing extension header is in one-to-one correspondence with a multiplexing packet, except the first multiplexing packet, in the GTP-U packet, and the first next extension header type field is used to indicate whether the first extension header in the GTP-U header in the GTP-U packet is a multiplexing extension header; and
decapsulate the G-PDU according to the GTP-U header in the G-PDU to obtain the at least two multiplexing packets.

In a twelfth possible implementation manner of the present invention, the processor is configured to:
when the multiplexing extension header is a first multiplexing extension header, determine, according to a second next extension header type field in the first multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU, to obtain the at least two multiplexing packets; where
the first multiplexing extension header includes the fifth length field, the fifth tunnel identifier field, and the second next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header; and
the second next extension header type field is used to indicate whether there is another multiplexing extension header that is in the GTP-U packet and follows the first multiplexing extension header.

In a thirteenth possible implementation manner of the present invention, the first multiplexing extension header further includes a first tunnel identifier flag field, and the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

In a fourteenth possible implementation manner of the present invention, the processor is configured to:
when a size of the multiplexing packet is the set value and the multiplexing extension header is a first multiplexing extension header, determine, according to a second next extension header type field in the first multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU, to obtain the at least two multiplexing packets; or
when a size of the multiplexing packet is the set value and the multiplexing extension header is a second multiplexing extension header, determine, according to a third next extension header type field in the second multiplexing extension header in the G-PDU, the multiplexing packets that need to be decapsulated, and decapsulate the G-PDU according to a sixth tunnel identifier field and the third next extension header type field that are in the second multiplexing extension header in the G-PDU, and a network configuration, to obtain the at least two multiplexing packets, where the network configuration is used to indicate a size of the set value; or
when a size of the multiplexing packet is the set value, the first one multiplexing extension header of the multiplexing extension headers is a first multiplexing extension header, and the multiplexing extension header except the first one multiplexing extension header is a second multiplexing extension header, determine, according to a second next extension header type field in the first multiplexing extension header in the G-PDU and a third next extension header type field in the second multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU and a sixth tunnel identifier field and the third next extension header type field that are in the second multiplexing extension header in the G-PDU, to obtain the at least two multiplexing packets; where
the first multiplexing extension header includes the fifth tunnel identifier field, the fifth length field, and the second next extension header type field;
the second multiplexing extension header includes the sixth tunnel identifier field and the third next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the sixth tunnel identifier field is used to indicate a GTP-U tunnel used for a multiplexing packet corresponding to the second multiplexing extension header; and
the third next extension header type field is used to indicate whether there is another multiplexing extension header that is in the GTP-U packet and follows the second multiplexing extension header.

In a fifteenth possible implementation manner of the present invention, the first multiplexing extension header further includes a first tunnel identifier flag field, the second multiplexing extension header further includes a second tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header.

In a sixteenth possible implementation manner of the present invention, the processor is configured to:
when the multiplexing packet is transmitted by using a same GTP-U tunnel and the multiplexing extension header in the GTP-U header is a first multiplexing extension header, determine, according to a second next extension header type field in the first multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU, to obtain the at least two multiplexing packets; or
when the multiplexing packet is transmitted by using a same GTP-U tunnel, the first one multiplexing extension header of the multiplexing extension headers is a first multiplexing extension header, and the multiplexing extension header except the first one multiplexing extension header is a third multiplexing extension header, determine, according to a second next extension header type field in the first multiplexing extension header in the G-PDU and a fourth next extension header type field in the third multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU and a seventh length field and the fourth next extension header type field that are in the third multiplexing extension header in the G-PDU, to obtain the at least two multiplexing packets; where
the first multiplexing extension header includes the fifth length field, the fifth tunnel identifier field, and the second next extension header type field, and the third multiplexing extension header includes the seventh length field and the fourth next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the seventh length field is used to indicate a size of a multiplexing packet corresponding to the third multiplexing extension header; and
the fourth next extension header type field is used to indicate whether there is another multiplexing extension header that is in the GTP-U packet and follows the third multiplexing extension header.

In a seventeenth possible implementation manner of the present invention, the first multiplexing extension header further includes a first tunnel identifier flag field, the third multiplexing extension header further includes a third tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the third tunnel identifier flag field is used to indicate whether a GTP-U tunnel used for the multiplexing packet corresponding to the third multiplexing extension header is the same as a GTP-U tunnel used for a multiplexing packet corresponding to a multiplexing extension header previous to the third multiplexing extension header.

In an eighteenth possible implementation manner of the present invention, the processor is configured to:
when the at least two multiplexing packets are transmitted by using a same GTP-U tunnel, a size of the multiplexing packet is the set value, and the multiplexing extension header is a second multiplexing extension header, determine, according to a third next extension header type field in the second multiplexing extension header in the G-PDU, the multiplexing packets that need to be decapsulated, and decapsulate the G-PDU according to a sixth tunnel identifier field and the third next extension header type field that are in the second multiplexing extension header in the G-PDU, and a network configuration, to obtain the at least two multiplexing packets, where the network configuration is used to indicate a size of the set value; or
when the two multiplexing packets are transmitted by using a same GTP-U tunnel, a size of the multiplexing packet is the set value, the first one multiplexing extension header of the multiplexing extension headers is a second multiplexing extension header, and the multiplexing extension header except the first one multiplexing extension header is a fourth multiplexing extension header, determine, according to a third next extension header type field in the second multiplexing extension header in the G-PDU and a fifth next extension header type field in the fourth multiplexing extension header in the G-PDU, the multiplexing packets that need to be decapsulated, and decapsulate the G-PDU according to a sixth tunnel identifier field and the third next extension header type field that are in the second multiplexing extension header in the G-PDU and the fifth next extension header type field in the fourth multiplexing extension header in the G-PDU, to obtain the at least two multiplexing packets; where
the second multiplexing extension header includes the sixth tunnel identifier field and the third next extension header type field, and the fourth multiplexing extension header includes the fifth next extension header type field;
the sixth tunnel identifier field is used to indicate a GTP-U tunnel used for a multiplexing packet corresponding to the second multiplexing extension header;
the third next extension header type field is used to indicate whether there is another multiplexing extension header that is in the GTP-U packet and follows the second multiplexing extension header; and
the fifth next extension header type field is used to indicate whether there is another multiplexing extension header that is in the GTP-U packet and follows the fourth multiplexing extension header.

In a nineteenth possible implementation manner of the present invention, the second multiplexing extension header further includes a second tunnel identifier flag field, the fourth multiplexing extension header further includes a fourth tunnel identifier flag field, the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header, and the fourth tunnel identifier flag field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

In a twentieth possible implementation manner of the present invention, the second multiplexing extension header further includes a sixth length field, the fourth multiplexing extension header further includes an eighth length field, the sixth length field is used to indicate a size of a padded multiplexing packet corresponding to the second multiplexing extension header, and the eighth length field is used to indicate a size of a padded multiplexing packet corresponding to the fourth multiplexing extension header.

In a twenty-first possible implementation manner of the present invention, the GTP-U header further includes a ninth length field and a ninth tunnel identifier field, the ninth length field is used to indicate a length of the first multiplexing packet in the GTP-U packet, and the ninth tunnel identifier field is used to indicate a GTP-U tunnel used for the first multiplexing packet.

In a twenty-second possible implementation manner of the present invention, the receiver is further configured to:
acquire the multiplexing policy from a mobility management entity MME/a policy control and charging rules function entity PCRF.

According to a seventh aspect, the present invention provides a communications device, and the device includes the apparatus provided in the fifth aspect and the apparatus provided in the sixth aspect.

According to an eighth aspect, the present invention provides a communications system, and the system includes at least two communications devices provided in the seventh aspect.

Beneficial effects of the technical solutions provided in the present invention are as follows: At least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is an architecture diagram of a GPRS/UMTS network according to an embodiment of the present invention;
FIG. 2 is an architecture diagram of an evolved PRN according to an embodiment of the present invention;
FIG. 3 is a flowchart of a data transmission method according to Embodiment 1 of the present invention;
FIG. 4 is a schematic flowchart of a data transmission method according to Embodiment 2 of the present invention;
FIG. 5 is a diagram of a format of a GTP-U header according to Embodiment 2 of the present invention;
FIG. 6 is a diagram of a format of a multiplexing indication extension header according to Embodiment 2 of the present invention;
FIG. 7 is a schematic diagram of a GTP-U packet according to Embodiment 2 of the present invention;
FIG. 8 is a schematic flowchart of a data transmission method according to Embodiment 3 of the present invention;
FIG. 9 is a schematic flowchart of a data transmission method according to Embodiment 4 of the present invention;
FIG. 10 is a schematic diagram of a GTP-U packet according to Embodiment 4 of the present invention;
FIG. 11 is a schematic flowchart of a data transmission method according to Embodiment 5 of the present invention;
FIG. 12 is a schematic flowchart of a data transmission method according to Embodiment 6 of the present invention;
FIG. 13 is a diagram of a format of a multiplexing extension header according to Embodiment 6 of the present invention;
FIG. 14 is a schematic diagram of a GTP-U packet according to Embodiment 6 of the present invention;
FIG. 15 is a schematic flowchart of a data transmission method according to Embodiment 7 of the present invention;
FIG. 16 is a schematic diagram of a GTP-U packet according to Embodiment 7 of the present invention;
FIG. 17 is a schematic flowchart of a data transmission method according to Embodiment 8 of the present invention;
FIG. 18 is a schematic flowchart of a data transmission method according to Embodiment 9 of the present invention;
FIG. 19 is a schematic structural diagram of a data transmission apparatus according to Embodiment 10 of the present invention;
FIG. 20 is a schematic structural diagram of a data transmission apparatus according to Embodiment 11 of the present invention;
FIG. 21 is a schematic structural diagram of a data transmission apparatus according to Embodiment 12 of the present invention;
FIG. 22 is a schematic structural diagram of a data transmission apparatus according to Embodiment 13 of the present invention;
FIG. 23 is a schematic structural diagram of a data transmission apparatus according to Embodiment 14 of the present invention;
FIG. 24 is a schematic structural diagram of a data transmission apparatus according to Embodiment 15 of the present invention;
FIG. 25 is a structural diagram of hardware of a data transmission apparatus according to Embodiment 16 of the present invention;
FIG. 26 is a structural diagram of hardware of a data transmission apparatus according to Embodiment 17 of the present invention;
FIG. 27 is a schematic structural diagram of a communications device according to Embodiment 18 of the present invention; and
FIG. 28 is a schematic structural diagram of a communications system according to Embodiment 19 of the present invention.

### DESCRIPTION OF EMBODIMENTS

To make the objectives, technical solutions, and advantages of the present invention clearer, the following further describes the embodiments of the present invention in detail with reference to the accompanying drawings.

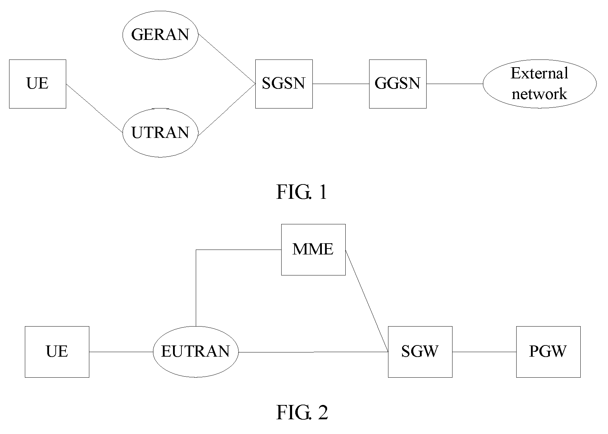

With reference to FIG. 1 and FIG. 2, the following first introduces an application scenario of the embodiments of the present invention. The application scenario is merely exemplary and does not constitute a limitation on the present invention.

FIG. 1 is an architecture diagram of a GPRS/UMTS network, and the GPRS/UMTS network includes a radio access network and a core network. As shown in FIG. 1, the radio access network includes a UMTS terrestrial radio access network (UMTS Terrestrial Radio Access Network, UTRAN for short) and a Global System for Mobile Communications (Global System of Mobile communication, GSM for short)/an Enhanced Data rates for GSM Evolution (Enhanced Data Rate for GSM Evolution, EDGE for short) radio access network (GSM/EDGE Ratio Access Network, GERAN for short), and the core network includes a serving GPRS support node (Serving GPRS Supporting Node, SGSN for short) and a gateway GPRS support node (Gateway GPRS Support Node, GGSN for short). The SGSN may be used as a control plane node, which is used to implement routing and forwarding, mobility management, session management, and user information storage on the GPRS/UMTS network, or the SGSN may be used as a user plane node for data transmission. The GGSN is connected to another core network node by using an IP-based backbone network, and provides for a user a path for transmitting control signaling and data.

FIG. 2 is an architecture diagram of an evolved PRN. As shown in FIG. 2, a core network of the evolved PRN includes a mobility management entity (Mobility Management Entity, MME for short), a serving gateway (Serving Gateway, SGW for short), and a packet data network (Packet Data Network, PDN for short) gateway (PDN Gateway, PGW for short), and a radio access network of the evolved PRN includes an evolved UTRAN (Evolved UTRAN, EUTRAN for short). A function of the MME is the same as a control plane function of an SGSN, a function of the SGW is the same as a user plane function of the SGSN, a function of the PGW is the same as a function of a GGSN, and a function of the EUTRAN is the same as functions of a UTRAN and a GERAN.

In an actual application, devices on the radio access network include but are not limited to an evolved Node B (Evolved Node B, eNB for short), a NodeB (NodeB), and an access point (Access Point, AP for short) on a wireless local area network (Wireless Local Area Networks, WLAN for short).

Actually, on a GPRS/UMTS network or the evolved PRN or another PRN, communication between a UE and an external network (External Network) is completed in a manner of an IP packet, that is, data sent by the UE to the external network and received by the UE from the external network is in a form of an IP packet. On a PRN, data is generally transmitted by using a transmission mechanism defined in the GTP-U protocol, that is, multiple GTP-U tunnels for transmitting an IP packet are established between GTP-U nodes by using control signaling on a GRPR Tunneling Protocol-Control plane (GPRS Tunneling Protocol, GTP-C for short), where the GTP-U tunnel specifies a user that uses the GTP-U tunnel and a data processing manner, for example, a sending priority of an IP packet. Specifically, in a GTP-C signaling interaction process, the GTP-U nodes negotiate a local policy for determining a GTP-U tunnel for an IP packet, where the local policy includes a correspondence between a source address and a destination address of an IP packet and a GTP-U tunnel used for the IP packet. In a process of data transmission on the PRN, the GTP-U nodes select a GTP-U tunnel for an IP packet according to the local policy, and encapsulate an identifier of the GTP-U tunnel into a GTP-U header corresponding to the IP packet.

Currently, the GTP-U protocol is mainly applied between a GGSS and an SGSN, a PGW and an SGW, an SGSN and a UTRAN, an SGW and an EUTRAN, or an evolved packet data gateway (Evolved Packet Data Gateway, ePDG for short) and a PGW In the embodiments of the present invention, a GTP-U node (including a GTP-U sending node and a GTP-U receiving node) refers to a node that supports the GTP-U protocol (the GTP-U protocol is defined in the 3GPP specification 29.281), which may be a GGSN, an SGSN, an S4-SGSN, a PGW, an SGW, an ePDG, an AP, a NodeB, an eNB, or the like.

### Embodiment 1

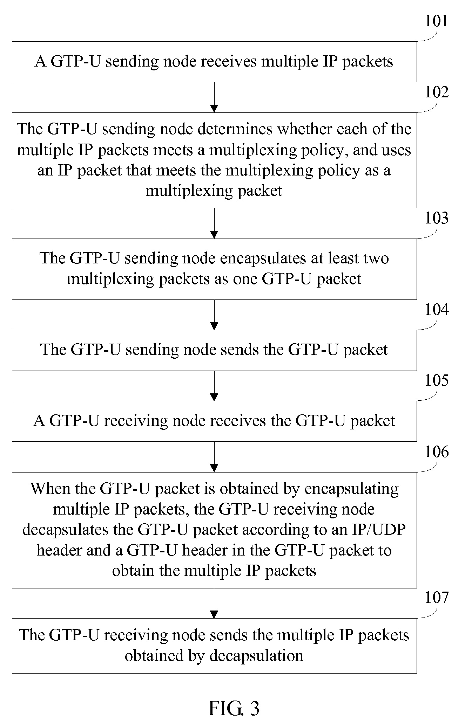

An embodiment of the present invention provides a data transmission method. Referring to FIG. 3, the method includes the following steps:
Step 101: A GTP-U sending node receives at least two IP packets.

In this embodiment, one IP packet pertains to one UE, and at least two IP packets pertain to at least one UE. The GTP-U sending node may be a GGSN, an SGSN, an S4-SGSN, a PGW, an SGW, an ePDG, an AP, a NodeB, an eNB, or the like.

Step 102: The GTP-U sending node determines at least two multiplexing packets from the at least two IP packets according to a multiplexing policy.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a quality of service (Quality of Service, QoS for short) class identifier (QoS Class Indentifier, QCI for short), flow description information, and the like that are of the IP packet. After receiving the IP packet, the GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

Step 103: The GTP-U sending node encapsulates the at least two multiplexing packets into one GTP-U packet.

It is easy to learn that in this step, the multiplexing packets encapsulated into the GTP-U packet are IP packets to be sent by the GTP-U sending node to a same GTP-U receiving node.

In an actual application, one GTP-U packet may include one IP header, one UDP header, one GTP-U header, and one IP packet, or one GTP-U packet may include one IP header, one UDP header, one GTP-U header, and at least two IP packets, or one GTP-U packet may include one IP header, one UDP header, at least two GTP-U headers, and at least two IP packets. In the present invention, the last two types of GTP-U packets are mainly described, that is, the GTP-U sending node encapsulates at least two multiplexing packets into one GTP-U packet.

In an implementation manner of this embodiment of the present invention, the GTP-U packet may include one IP header, one UDP header, at least two GTP-U headers, and at least two multiplexing packets, and the GTP-U headers are in one-to-one correspondence with the multiplexing packets. In another implementation manner of this embodiment of the present invention, the GTP-U packet may include one IP header, one UDP header, one GTP-U header, and at least two multiplexing packets, the GTP-U header includes at least two multiplexing extension headers, and the multiplexing extension headers are in one-to-one correspondence with the multiplexing packets. In still another implementation manner of this embodiment of the present invention, the GTP-U packet may include one IP header, one UDP header, one GTP-U header, and at least two multiplexing packets, the GTP-U header includes at least one multiplexing extension header, the GTP-U header is corresponding to the first multiplexing packet, the multiplexing extension header is in one-to-one correspondence with a multiplexing packet, except the first multiplexing packet, in the GTP-U packet.

It should be noted that an order for encapsulating the at least two multiplexing packets to be encapsulated into the GTP-U packet is not limited in the present invention. The at least two multiplexing packets may be encapsulated in a receiving order, or may be encapsulated in another order, which is not limited in the present invention.

Step 104: The GTP-U sending node sends the GTP-U packet.

Step 105: A GTP-U receiving node receives the GTP-U packet.

Step 106: The GTP-U receiving node decapsulates the GTP-U packet to obtain the at least two multiplexing packets.

Step 107: The GTP-U receiving node sends the at least two multiplexing packets.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 2

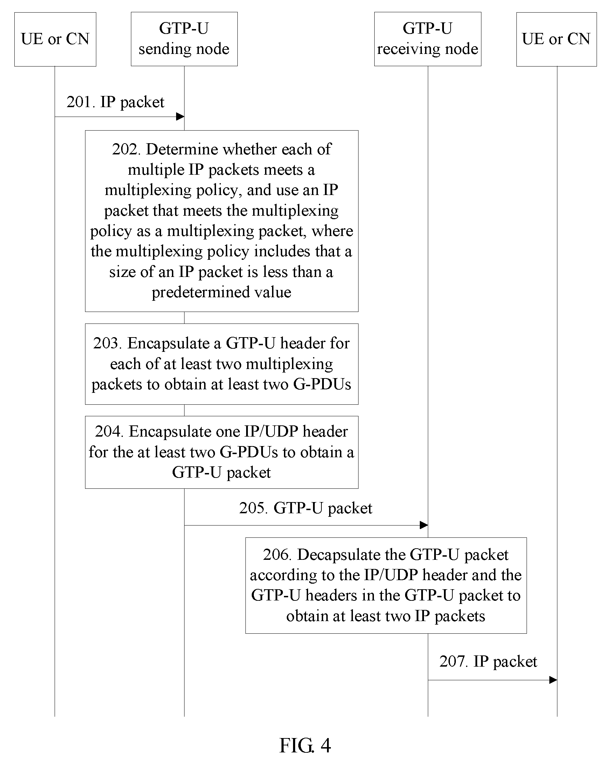

In this embodiment of the present invention, an example in which a GTP-U packet includes one IP header, one UDP header, at least two GTP-U headers, and at least two multiplexing packets, and the GTP-U headers are in one-to-one correspondence with the multiplexing packets is used for describing a data transmission method provided in the present invention. Referring to FIG. 4, the method includes the following steps:
Step 201: A GTP-U sending node receives at least two IP packets.
Step 202: The GTP-U sending node determines at least two multiplexing packets from the at least two IP packets according to a multiplexing policy.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, the GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:
When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

Step 203: The GTP-U sending node encapsulates a GTP-U header for each of the at least two multiplexing packets to obtain at least two GTP packet data units (GTP Packet Data Unit, G-PDU for short).

In an implementation manner of this embodiment, the GTP-U header may be a first GTP-U header, and the first GTP-U header includes a first Length field, a first TEID field, and a first multiplexing indication field. The first Length field is used to indicate a size of a multiplexing packet corresponding to the first GTP-U header, the first TEID field is used to indicate a GTP-U tunnel used for the multiplexing packet corresponding to the first GTP-U header, and the first multiplexing indication field is used to indicate whether there is another multiplexing packet that is in a GTP-U packet and follows the multiplexing packet corresponding to the first GTP-U header.

Specifically, the another multiplexing packet is a multiplexing packet, in the GTP-U packet, except the multiplexing packet corresponding to the first GTP-U header in which the first multiplexing indication field is located.

Optionally, the first multiplexing indication field may be an unused field in the GTP-U header or is carried in an extension header of the GTP-U header. In an existing format of the GTP-U header, the unused field is generally indicated by (*), and an existing GTP-U receiving node does not explain the (*) field in the GTP-U header.

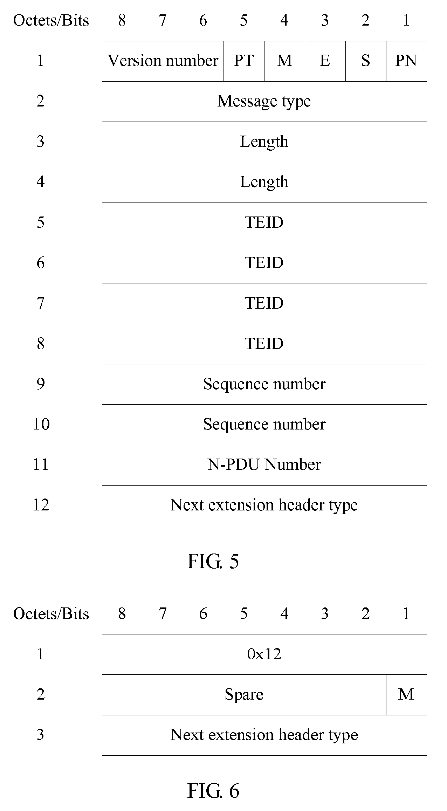

FIG. 5 shows a format of the GTP-U header in this embodiment. As shown in FIG. 5, the format of the GTP-U header may include 12 octets (Octet). In descending order of significance of bits, 8 bits (bit) of the first Octet are sequentially a version number (Version) field, a protocol type (Protocol Type, PT for short) field, a multiplexing indication (Multiplexing indication, M for short) field, an extension header flag (Extension header flag, E for short) field, a sequence number flag (Sequence number flag, S for short) field, and a layer N packet data unit (N Packet Data Unit, N-PDU for short) number flag (N-PDU Number flag, PN for short) field. The Version field is used to indicate a version number of the GTP-U, and a length of the field may be 3 bits; the PT field is used to indicate whether the protocol is the GTP protocol or the GTP' protocol, and a length of the field may be 1 bit; the M field is used to indicate whether there is a multiplexing packet that is in a GTP-U packet and follows a multiplexing packet corresponding to the GTP-U header, and a length of the field may be 1 bit; the E field is used to indicate whether an extension header is carried after the GTP-U header, and a length of the field may be 1 bit; the S field is used to indicate whether there is a sequence number in the GTP-U header, and a length of the field may be 1 bit; the PN field is used to indicate whether there is an N-PDU in the GTP-U header, and a length of the field may be 1 bit.

The second Octet is a message type (Message Type) field used to indicate a GTP message type. The third Octet and the fourth Octet are a length (Length) field used to indicate a length of the IP packet. The fifth Octet to the eighth Octet are a tunnel endpoint identifier (Tunnel Endpoint Identifier, TEID for short) field used to identify a GTP-U tunnel used for the IP packet. The ninth Octet and the tenth Octet are a sequence number (Sequence Number) field used to indicate a sequence number. The eleventh Octet is an N-PDU number (N-PDU Number) field used to indicate an N-PDU number. The twelfth Octet is a next extension header type (Next Extension Header Type) field used to indicate a type of a carried extension header that follows the GTP-U header; for example, if the Next Extension Header Type field is 0x01, it indicates that a next extension header is a service class indicator extension header (Service Class Indicator extension header).

Referring to FIG. 6, an extension header that carries a multiplexing indication field (referred to as a multiplexing indication extension header in the following) may include 3 Octets. The first Octet is a type of the extension header, and is indicated by 0x10, for example. The most significant 7 bits of the second Octet are a Spare (spare) field, and the least significant bit of the second Octet is an M field. The third Octet is a Next Extension Header Type field. For example, in a GTP-U packet, if there is another multiplexing packet that follows a multiplexing packet corresponding to a GTP-U header, the M field may be set to 1, and if there are no other multiplexing packets that follow the multiplexing packet corresponding to the GTP-U header, the M field may be set to 0. Conversely, if there is another multiplexing packet that follows the multiplexing packet corresponding to the GTP-U header, the M field may be set to 0, and if there are no other multiplexing packets that follow the multiplexing packet corresponding to the GTP-U header, the M field may be set to 1, which is not limited in the present invention.

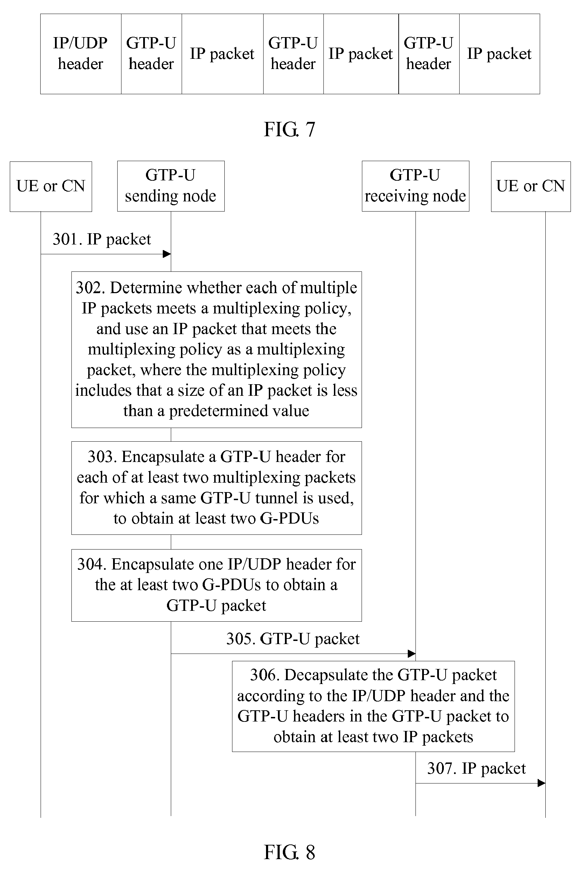

Step 204: The GTP-U sending node encapsulates one IP header and one UDP header for the at least two G-PDUs to obtain a GTP-U packet (a structure of the obtained GTP-U packet is shown in FIG. 7).

During specific implementation, the IP header and the UDP header generally include fields used to indicate an address of the GTP-U sending node and an address of the GTP-U receiving node.

By performing the foregoing steps 203 and 204, the GTP-U sending node encapsulates the at least two multiplexing packets into one GTP-U packet.

Step 205: The GTP-U sending node sends the GTP-U packet to a receiving node.

Step 206: The GTP-U receiving node decapsulates the GTP-U packet to obtain the at least two multiplexing packets.

In this embodiment, step 206 may include: determining, according to the first multiplexing indication fields in the first GTP-U headers in the at least two G-PDUs, the multiplexing packets that need to be decapsulated, and decapsulating the at least two G-PDUs according to the first Length fields, the first TEID fields, and the first multiplexing indication fields that are in the first GTP-U headers in the at least two G-PDUs, to obtain the at least two multiplexing packets.

Specifically, the determining, according to the first multiplexing indication fields in the first GTP-U headers in the at least two G-PDUs, the multiplexing packets that need to be decapsulated may include: determining, according to the first multiplexing indication fields in the first GTP-U headers, whether there are multiplexing packets that need to be decapsulated and follow the multiplexing packets corresponding to the first GTP-U headers.

Specifically, the decapsulating the at least two G-PDUs according to the first Length fields, the first TEID fields, and the first multiplexing indication fields that are in the first GTP-U headers in the at least two G-PDUs, to obtain the at least two multiplexing packets may include: learning, from the first Length fields in the first GTP-U headers, sizes of the multiplexing packets corresponding to the first GTP-U headers, and then obtaining the multiplexing packets according to the sizes of the multiplexing packets. This pertains to the prior art, and details are not described herein again.

It should be noted that in a decapsulation process, the receiving node may learn, from the first TEID field in the first GTP-U header, the GTP-U tunnel used for the multiplexing packet corresponding to the GTP-U header, so as to determine processing of the multiplexing packet, for example, a sending priority of the multiplexing packet, or discarding a multiplexing packet with a lower priority.

Step 207: The GTP-U receiving node sends the at least two multiplexing packets.

In another implementation manner of this embodiment, the method may further include a step of acquiring, by the GTP-U sending node, the multiplexing policy from an MME/a policy control and charging rules function entity (Policy Control and Charging Rules Function, PCRF for short). There is no executing sequence between this step and step 201 to step 207.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 3

This embodiment of the present invention provides a data transmission method, and differs from Embodiment 2 in that in this embodiment, at least two multiplexing packets encapsulated into one GTP-U packet are transmitted by using a same GTP-U tunnel, and the at least two multiplexing packets pertain to a same UE. Referring to FIG. 8, the method includes the following steps:
Step 301: A GTP-U sending node receives at least two IP packets.
Step 302: The GTP-U sending node determines at least two multiplexing packets from the at least two IP packets according to a multiplexing policy.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, the GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

Step 303: The GTP-U sending node encapsulates a GTP-U header for each of the at least two multiplexing packets to obtain at least two G-PDUs.

In an implementation manner of this embodiment, the GTP-U header may be a first GTP-U header, and the first GTP-U header includes a first Length field, a first TEID field, and a first multiplexing indication field. The first Length field is used to indicate a size of a multiplexing packet corresponding to the first GTP-U header, the first TEID field is used to indicate a GTP-U tunnel used for the multiplexing packet corresponding to the first GTP-U header, and the first multiplexing indication field is used to indicate whether there is another multiplexing packet that is in a GTP-U packet and follows the multiplexing packet corresponding to the first GTP-U header.

In another implementation manner of this embodiment, the GTP-U headers may include a first GTP-U header and a second GTP-U header. The second GTP-U header includes a second Length field and a second multiplexing indication field. The second Length field is used to indicate a size of a multiplexing packet corresponding to the second GTP-U header, and the second multiplexing indication field is used to indicate whether there is another multiplexing packet that is in a GTP-U packet and follows the multiplexing packet corresponding to the second GTP-U header.

Preferably, the first one GTP-U header of the GTP-U headers is the first GTP-U header, and a GTP-U header except the first GTP-U header is the second GTP-U header.

It should be noted that in an actual application, there is still a TEID field in the second GTP-U header; however, the TEID field is not padded with data indicating a GTP-U tunnel used for an IP packet.

Step 304: The GTP-U sending node encapsulates one IP header and one UDP header for the at least two G-PDUs to obtain a GTP-U packet.

By performing the foregoing steps 303 and 304, the GTP-U sending node encapsulates the at least two multiplexing packets into one GTP-U packet.

Step 305: The GTP-U sending node sends the GTP-U packet to a receiving node.

Step 306: The GTP-U receiving node decapsulates the GTP-U packet to obtain the at least two multiplexing packets.

In an implementation manner of this embodiment, step 306 may include: determining, according to the first multiplexing indication fields in the first GTP-U headers in the at least two G-PDUs, the multiplexing packets that need to be decapsulated, and decapsulating the at least two G-PDUs according to the first Length fields, the first TEID fields, and the first multiplexing indication fields that are in the first GTP-U headers in the at least two G-PDUs, to obtain the at least two multiplexing packets.

In another implementation manner of this embodiment, step 306 may include: determining, according to the first multiplexing indication field in the first GTP-U header in the at least two G-PDUs and the second multiplexing indication field in the second GTP-U header in the at least two G-PDUs, the multiplexing packets that need to be decapsulated, and decapsulating the at least two G-PDUs according to the first Length field, the first TEID field, and the first multiplexing indication field that are in the first GTP-U header in the at least two G-PDUs and the second Length field and the second multiplexing indication field that are in the second GTP-U header in the at least two G-PDUs, to obtain the at least two multiplexing packets.

Step 307: The GTP-U receiving node sends the at least two multiplexing packets.

In still another implementation manner of this embodiment, the method further includes a step of acquiring, by the GTP-U sending node, the multiplexing policy from an MME/a PCRF. There is no executing sequence between this step and step 301 to step 307.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 4

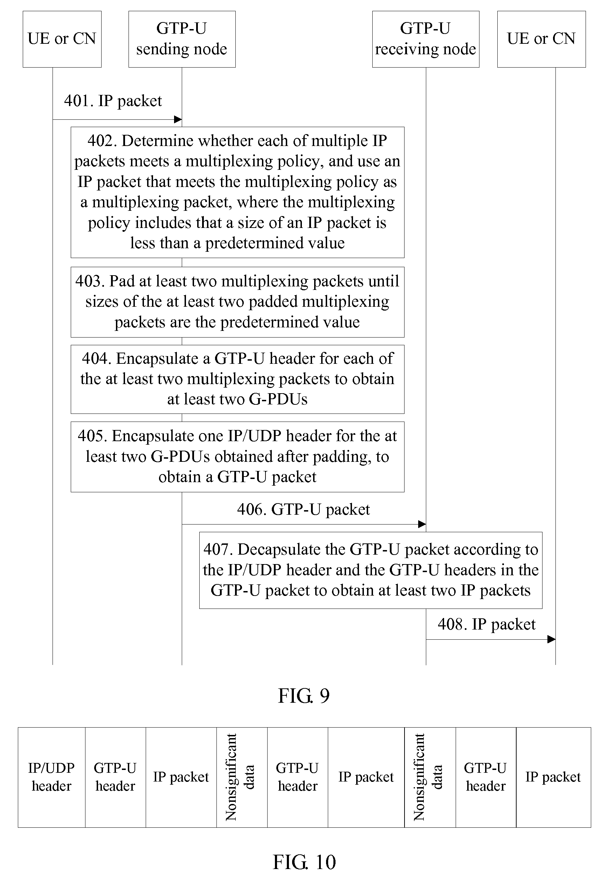

This embodiment of the present invention provides a data transmission method, and differs from Embodiment 2 in that in this embodiment, before at least two multiplexing packets are encapsulated, the at least two multiplexing packets are padded, so that sizes of the at least two padded multiplexing packets are the same. Referring to FIG. 9, the method includes the following steps:
Step 401: A GTP-U sending node receives at least two IP packets.
Step 402: The GTP-U sending node determines at least two multiplexing packets from the at least two IP packets according to a multiplexing policy.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, the GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

Step 403: The GTP-U sending node pads each of the at least two multiplexing packets, so that sizes of the at least two padded multiplexing packets each are a set value.

During specific implementation, step 403 may include: padding the multiplexing packets with nonsignificant data (padding), so that the sizes of the padded multiplexing packets reach the set value such as 128 bytes. The nonsignificant data is data not to be parsed by a GTP-U receiving node; for example, the nonsignificant data is data of a string of all 0s.

Step 404: The GTP-U sending node encapsulates a GTP-U header for each of the at least two padded multiplexing packets to obtain at least two G-PDUs.

In an implementation manner of this embodiment, the GTP-U header may be a first GTP-U header, and the first GTP-U header includes a first Length field, a first TEID field, and a first multiplexing indication field. The first Length field is used to indicate a size of a multiplexing packet corresponding to the first GTP-U header, the first TEID field is used to indicate a GTP-U tunnel used for the multiplexing packet corresponding to the first GTP-U header, and the first multiplexing indication field is used to indicate whether there is another multiplexing packet that is in a GTP-U packet and follows the multiplexing packet corresponding to the first GTP-U header.

In another implementation manner of this embodiment, the GTP-U header may be a third GTP-U header, the third GTP-U header includes a third TEID field and a third multiplexing indication field, the third TEID field is used to indicate a GTP-U tunnel used for a multiplexing packet corresponding to the third GTP-U header, and the third multiplexing indication field is used to indicate whether there is another multiplexing packet that is in a GTP-U packet and follows the multiplexing packet corresponding to the third GTP-U header.

In still another implementation manner of this embodiment, the GTP-U headers may include a first GTP-U header and a third GTP-U header.

Preferably, the first one GTP-U header of the GTP-U headers is the first GTP-U header, and a GTP-U header except the first GTP-U header is the third GTP-U header.

It should be noted that in an actual application, there is still a Length field in the third GTP-U header; however, the Length field is not padded with data indicating a length of an IP packet.

Step 405: The GTP-U sending node encapsulates one IP header and one UDP header for the multiple G-PDUs to obtain a GTP-U packet (a structure of the obtained GTP-U packet is shown in FIG. 10).

By performing the foregoing steps 403 to 405, the GTP-U sending node encapsulates the multiple multiplexing packets into one GTP-U packet.

Step 406: The GTP-U sending node sends the GTP-U packet to a receiving node.

Step 407: The GTP-U receiving node decapsulates the GTP-U packet to obtain the at least two multiplexing packets.

In an implementation manner of this embodiment, step 407 may include: determining, according to the first multiplexing indication fields in the first GTP-U headers in the at least two G-PDUs, the multiplexing packets that need to be decapsulated, and decapsulating the at least two G-PDUs according to the first Length fields, the first TEID fields, and the first multiplexing indication fields that are in the first GTP-U headers in the at least two G-PDUs, to obtain the at least two multiplexing packets.

In another implementation manner of this embodiment, step 407 may include: determining, according to the third multiplexing indication fields in the third GTP-U headers in the at least two G-PDUs, the multiplexing packets that need to be decapsulated, and decapsulating the at least two G-PDUs according to the third TEID fields and the third multiplexing indication fields that are in the third GTP-U headers in the at least two G-PDUs, and a network configuration, to obtain the at least two multiplexing packets.

In this embodiment, the network configuration is used to indicate a size of the set value.

In still another implementation manner of this embodiment, step 407 may include: determining, according to the first multiplexing indication field in the first GTP-U header in the at least two G-PDUs and the third multiplexing indication field in the third GTP-U header in the at least two G-PDUs, the multiplexing packets that need to be decapsulated, and decapsulating the at least two G-PDUs according to the first Length field, the first TEID field, and the first multiplexing indication field that are in the first GTP-U header in the at least two G-PDUs and the third TEID field and the third multiplexing indication field that are in the third GTP-U header in the at least two G-PDUs, to obtain the at least two multiplexing packets.

Step 408: The GTP-U receiving node sends the at least two multiplexing packets.

In still another implementation manner of this embodiment, the method further includes a step of acquiring, by the GTP-U sending node, the multiplexing policy from an MME/a PCRF. There is no executing sequence between this step and step 401 to step 408.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 5

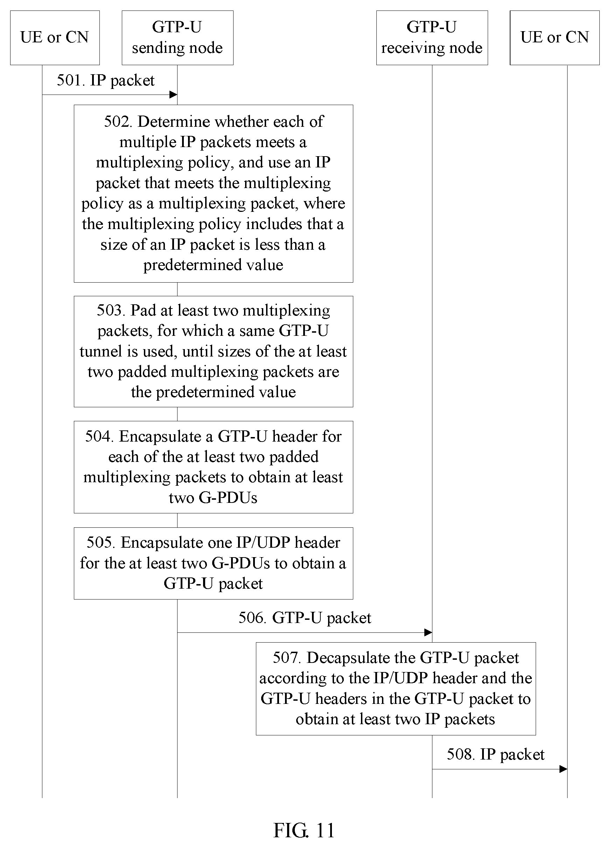

This embodiment of the present invention provides a data transmission method, and differs from Embodiment 2 in that in this embodiment, at least two multiplexing packets encapsulated into one GTP-U packet are transmitted by using a same GTP-U tunnel, the at least two multiplexing packets pertain to a same UE, and before the at least two multiplexing packets are encapsulated, the at least two multiplexing packets are padded, so that sizes of the at least two padded multiplexing packets are the same. Referring to FIG. 11, the method includes the following steps:
Step 501: A GTP-U sending node receives at least two IP packets.
Step 502: The GTP-U sending node determines at least two multiplexing packets from the at least two IP packets according to a multiplexing policy.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, the GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

Step 503: The GTP-U sending node pads each of the at least two multiplexing packets, so that sizes of the at least two padded multiplexing packets each are a set value.

During specific implementation, step 503 may be the same as step 303 in Embodiment 3, and details are not described herein again.

Step 504: The GTP-U sending node encapsulates a GTP-U header for each of the at least two padded multiplexing packets to obtain at least two G-PDUs.

In an implementation manner of this embodiment, the GTP-U header may be a third GTP-U header, the third GTP-U header includes a third TEID field and a third multiplexing indication field, the third TEID field is used to indicate a GTP-U tunnel used for a multiplexing packet corresponding to the third GTP-U header, and the third multiplexing indication field is used to indicate whether there is another multiplexing packet that is in a GTP-U packet and follows the multiplexing packet corresponding to the third GTP-U header.

In another implementation manner of this embodiment, the GTP-U headers may include a third GTP-U header and a fourth GTP-U header, and the fourth GTP-U header includes a fourth multiplexing indication field. The fourth multiplexing indication field is used to indicate whether there is another multiplexing packet that is in a GTP-U packet and follows a multiplexing packet corresponding to the fourth GTP-U header.

Preferably, the first GTP-U header of the GTP-U headers is the third GTP-U header, and a GTP-U header except the first GTP-U header is the fourth GTP-U header.

In still another implementation manner of this embodiment, the third GTP-U header may further include a third Length field, the fourth GTP-U header may further include a fourth Length field, the third Length field is used to indicate a size of the multiplexing packet corresponding to the third GTP-U header, and the fourth Length field is used to indicate a size of the multiplexing packet corresponding to the fourth GTP-U header.

It should be noted that in an actual application, there is still a TEID field in the fourth GTP-U header; however, the TEID field is not padded with data indicating a GTP-U tunnel used for an IP packet. A Length field is similar to the TEID field, and details are not described herein again.

Step 505: The GTP-U sending node encapsulates one IP header and one UDP header for the at least two G-PDUs to obtain a GTP-U packet.

By performing the foregoing steps 503 to 505, the GTP-U sending node encapsulates the at least two multiplexing packets into one GTP-U packet.

Step 506: The GTP-U sending node sends the GTP-U packet to a receiving node.

Step 507: The GTP-U receiving node decapsulates the GTP-U packet to obtain the at least two multiplexing packets.

In an implementation manner of this embodiment, step 507 may include: determining, according to the third multiplexing indication fields in the third GTP-U headers in the at least two G-PDUs, the multiplexing packets that need to be decapsulated, and decapsulating the at least two G-PDUs according to the third TEID fields and the third multiplexing indication fields that are in the third GTP-U headers in the at least two G-PDUs, and a network configuration, to obtain the at least two multiplexing packets.

In another implementation manner of this embodiment, step 507 may include: determining, according to the third multiplexing indication field in the third GTP-U header in the at least two G-PDUs and the fourth multiplexing indication field in the fourth GTP-U header in the at least two G-PDUs, the multiplexing packets that need to be decapsulated, and decapsulating the at least two G-PDUs according to the first TEID field and the first multiplexing indication field that are in the third GTP-U header in the at least two G-PDUs, the fourth multiplexing indication field in the fourth GTP-U header in the at least two G-PDUs, and a network configuration, to obtain the at least two multiplexing packets.

Step 508: The GTP-U receiving node sends the at least two multiplexing packets.

In still another implementation manner of this embodiment, the method further includes a step of acquiring, by the GTP-U sending node, the multiplexing policy from an MME/a PCRF. There is no executing sequence between this step and step 501 to step 508.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 6

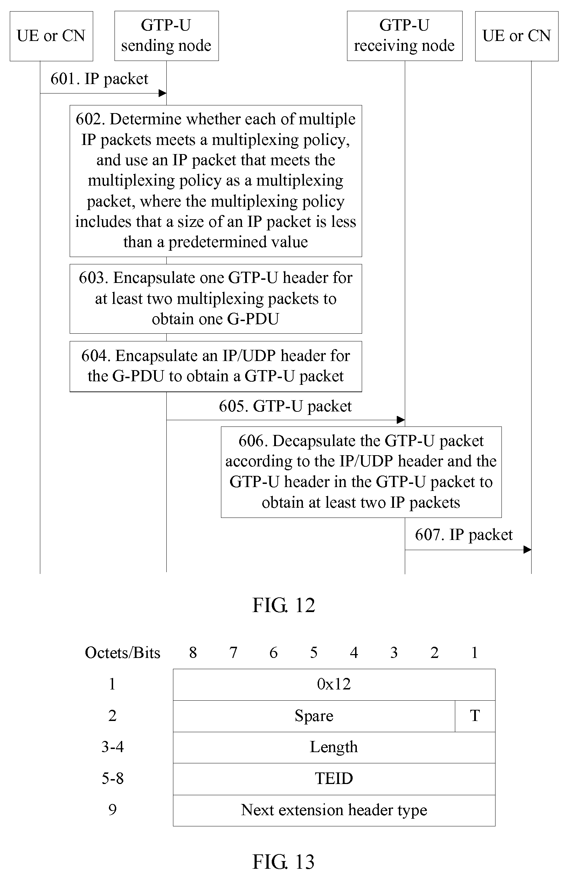

This embodiment of the present invention provides a data transmission method. In this embodiment, a GTP-U packet includes one IP header, one UDP header, one GTP-U header, and at least two multiplexing packets, and the GTP-U header includes at least two multiplexing extension headers or at least one multiplexing extension header. When the GTP-U header includes at least two multiplexing extension headers, the multiplexing extension headers are in one-to-one correspondence with the multiplexing packets. When the GTP-U header includes at least one multiplexing extension header, the GTP-U header includes a first Next Extension Header Type field, the first Next Extension Header Type field is corresponding to the first multiplexing packet in the GTP-U packet, the at least one multiplexing extension header is in one-to-one correspondence with a multiplexing packet, except the first multiplexing packet, in the GTP-U packet, and the first Next Extension Header Type field is used to indicate whether the first extension header in the GTP-U header in the GTP-U packet is a multiplexing extension header. Referring to FIG. 12, the method includes the following steps:
Step 601: A GTP-U sending node receives at least two IP packets.
Step 602: The GTP-U sending node determines at least two multiplexing packets from the at least two IP packets according to a multiplexing policy.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, the GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

Step 603: The GTP-U sending node encapsulates one GTP-U header for the at least two multiplexing packets to obtain one G-PDU.

In an implementation manner of this embodiment, a multiplexing extension header may be a first multiplexing extension header, and the first multiplexing extension header includes a fifth Length field, a fifth TEID field, and a second Next Extension Header Type field. The fifth Length field is used to indicate a size of a multiplexing packet corresponding to the first multiplexing extension header, the fifth TEID field is used to indicate a GTP-U tunnel used for the multiplexing packet corresponding to the first multiplexing extension header, and the second Next Extension Header Type field is used to indicate whether there is another multiplexing extension header that is in a GTP-U packet and follows the first multiplexing extension header.

In another implementation manner of this embodiment, the first multiplexing extension header may further include a first TEID flag (TEID symbol, T for short) field, and the first T field is used to indicate whether the GTP-U tunnel used for the multiplexing packet corresponding to the first multiplexing extension header is the same as a GTP-U tunnel used for a multiplexing packet previous to the multiplexing packet corresponding to the first multiplexing extension header. When the first T field indicates that the GTP-U tunnel used for the multiplexing packet corresponding to the first multiplexing extension header is the same as the GTP-U tunnel used for the multiplexing packet previous to the multiplexing packet corresponding to the first multiplexing extension header, the first multiplexing extension header does not include the fifth TEID field.

When the GTP-U header includes at least two multiplexing extension headers, and the multiplexing extension headers are in one-to-one correspondence with the multiplexing packets, there is still a Length field and a TEID field in the GTP-U header; however, the Length field is not padded with data indicating a length of an IP packet, and the TEID field is not padded with data indicating a GTP-U tunnel used for the IP packet.

When the GTP-U header includes at least one multiplexing extension header, the GTP-U header includes a first Next Extension Header Type field, the first Next Extension Header Type field is corresponding to the first multiplexing packet in the GTP-U packet, and the at least one multiplexing extension header is in one-to-one correspondence with a multiplexing packet, except the first multiplexing packet, in the GTP-U packet, the GTP-U header further includes a ninth Length field and a ninth TEID field. The ninth Length field is used to indicate a size of the first multiplexing packet, and the ninth TEID field is used to indicate a GTP-U tunnel used for the first multiplexing packet.

FIG. 13 shows a format of the multiplexing extension header in this embodiment. As shown in FIG. 13, the format of the multiplexing extension header may include 9 Octets. The first Octet is a type of the extension header, such as 0x12. The most significant 7 bits of the second Octet are a Spare field, and the least significant bit of the second Octet is a T field used to indicate whether there is a TEID field in the multiplexing extension header. The third Octet and the fourth Octet are both a Length field. The fifth Octet to the eighth Octet each are a TEID field. The ninth Octet is a Next Extension Header Type field. If the TEID field of the extension header is the same as a TEID field of a previous extension header, the extension header may not include a TEID field and the T field indicates that there is no TEID field; for example, the T field is 0.

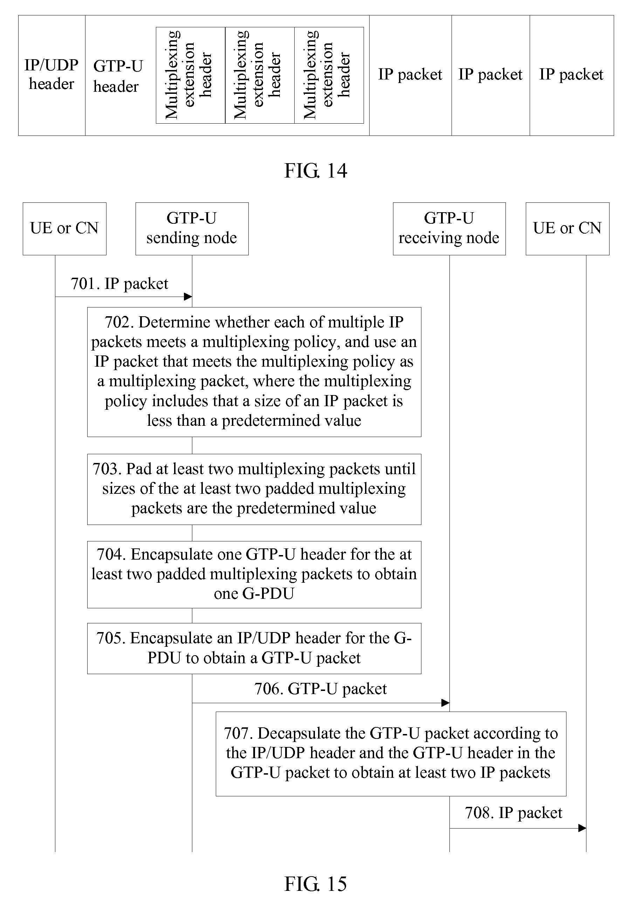

Step 604: The GTP-U sending node encapsulates an IP header and a UDP header for the G-PDU to obtain a GTP-U packet (a structure of the obtained GTP-U packet is shown in FIG. 14).

By performing the foregoing steps 603 and 604, the GTP-U sending node encapsulates the at least two multiplexing packets into one GTP-U packet.

Step 605: The GTP-U sending node sends the GTP-U packet to a receiving node.

Step 606: The GTP-U receiving node decapsulates the GTP-U packet to obtain the at least two multiplexing packets.

In an implementation manner of this embodiment, step 606 may include: determining, according to the second Next Extension Header Type field in the first multiplexing extension header in the G-PDU, the multiplexing packets that need to be decapsulated, and decapsulating the G-PDU according to the fifth Length field, the fifth TEID field, and the second Next Extension Header Type field that are in the first multiplexing extension header in the G-PDU, to obtain the at least two multiplexing packets.

Specifically, the determining, according to the second Next Extension Header Type field in the first multiplexing extension header in the G-PDU, the multiplexing packets that need to be decapsulated may include: determining, from the second Next Extension Header Type field in the first multiplexing extension header, whether there is another multiplexing extension header that follows the first multiplexing extension header.

Specifically, the decapsulating the G-PDU according to the fifth Length field, the fifth TEID field, and the second Next Extension Header Type field that are in the first multiplexing extension header in the G-PDU, to obtain the at least two multiplexing packets may include: learning, from the fifth Length field in the first multiplexing extension header, the size of the multiplexing packet corresponding to the first multiplexing extension header, and then obtaining the multiplexing packet according to the size of the multiplexing packet.

It should be noted that in a decapsulation process, the GTP-U receiving node may learn, from the first TEID field in the first multiplexing extension header, the GTP-U tunnel used for the multiplexing packet corresponding to the first multiplexing extension header, so as to determine processing of the multiplexing packet, for example, a sending priority of the multiplexing packet, or discarding a multiplexing packet with a lower priority.

In another implementation manner of this embodiment, step 606 may further include: determining, according to the first Next Extension Header Type field in the G-PDU in the G-PDU, whether there is a multiplexing packet that needs to be decapsulated and follows the first multiplexing packet, and decapsulating the G-PDU according to the ninth Length field and the ninth TEID field that are in the G-PDU in the G-PDU, to obtain the first multiplexing packet.

Step 607: The GTP-U receiving node sends the at least two multiplexing packets.

In still another implementation manner of this embodiment, the method may further include a step of acquiring, by the GTP-U sending node, the multiplexing policy from an MME/a PCRF. There is no executing sequence between this step and step 601 to step 607.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 7

This embodiment of the present invention provides a data transmission method, and differs from Embodiment 6 in that in this embodiment, before at least two multiplexing packets are encapsulated, the at least two multiplexing packets are padded, so that sizes of the at least two padded multiplexing packets are the same. Referring to FIG. 15, the method includes the following steps:
Step 701: A GTP-U sending node receives at least two IP packets.
Step 702: The GTP-U sending node determines at least two multiplexing packets from the at least two IP packets according to a multiplexing policy.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, the GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

Step 703: The GTP-U sending node pads each of the at least two multiplexing packets, so that sizes of the at least two padded multiplexing packets each are a set value.

During specific implementation, step 703 may be the same as step 303 in Embodiment 3, and details are not described herein again.

Step 704: The GTP-U sending node encapsulates one GTP-U header for the at least two padded multiplexing packets to obtain one G-PDU.

In an implementation manner of this embodiment, the multiplexing extension header may be a first multiplexing extension header, and the first multiplexing extension header includes a fifth Length field, a fifth TEID field, and a second Next Extension Header Type field. The fifth Length field is used to indicate a size of a multiplexing packet corresponding to the first multiplexing extension header, the fifth TEID field is used to indicate a GTP-U tunnel used for the multiplexing packet corresponding to the first multiplexing extension header, and the second Next Extension Header Type field is used to indicate whether there is another multiplexing extension header that is in a GTP-U packet and follows the first multiplexing extension header.

In another implementation manner of this embodiment, the multiplexing extension header may be a second multiplexing extension header, and the second multiplexing extension includes a sixth TEID field and a third Next Extension Header Type field. The sixth TEID field is used to indicate a GTP-U tunnel used for a multiplexing packet corresponding to the second multiplexing extension header, and the third Next Extension Header Type field is used to indicate whether there is another multiplexing extension header that is in a GTP-U packet and follows the second multiplexing extension header.

In still another implementation manner of this embodiment, the multiplexing extension headers may include a first multiplexing extension header and a second multiplexing extension header.

Preferably, the first multiplexing extension header of the multiplexing extension headers is the first multiplexing extension header, and a multiplexing extension header except the first multiplexing extension header is the second multiplexing extension header.

In still another implementation manner of this embodiment, the first multiplexing extension header may further include a first T field, and the second multiplexing extension header may further include a second T field. The first T field is used to indicate whether a GTP-U tunnel used for a multiplexing packet corresponding to the first multiplexing extension header is the same as a GTP-U tunnel used for a multiplexing packet previous to the multiplexing packet corresponding to the first multiplexing extension header. The second T field is used to indicate whether a GTP-U tunnel used for a multiplexing packet corresponding to the second multiplexing extension header is the same as a GTP-U tunnel used for a multiplexing packet previous to the multiplexing packet corresponding to the second multiplexing extension header.

When the GTP-U header includes at least two multiplexing extension headers, and the multiplexing extension headers are in one-to-one correspondence with the multiplexing packets, there is still a Length field and a TEID field in the GTP-U header; however, the Length field is not padded with data indicating a length of an IP packet, and the TEID field is not padded with data indicating a GTP-U tunnel used for the IP packet.

When the GTP-U header includes at least one multiplexing extension header, the GTP-U header includes a first Next Extension Header Type field, the first Next Extension Header Type field is corresponding to the first multiplexing packet in the GTP-U packet, and the at least one multiplexing extension header is in one-to-one correspondence with a multiplexing packet, except the first multiplexing packet, in the GTP-U packet, the GTP-U header may include a ninth TEID field and the first Next Extension Header Type field, or may include the first Next Extension Header Type field. The ninth TEID field is used to indicate a GTP-U tunnel used for the first multiplexing packet. When the GTP-U header includes the ninth TEID field and the first Next Extension Header Type field, the multiplexing extension header may be a first multiplexing extension header, or may be a second multiplexing extension header, or the multiplexing extension headers may include a first multiplexing extension header and a second multiplexing extension header. When the GTP-U header includes the first Next Extension Header Type field, the multiplexing extension header may be a first multiplexing extension header, or the multiplexing extension headers may include a first multiplexing extension header and a second multiplexing extension header.

It should be noted that in an actual application, there is still a Length field in the GTP-U header; however, the Length field is not padded with data indicating a length of an IP packet. There is no Length field in the second multiplexing extension header.

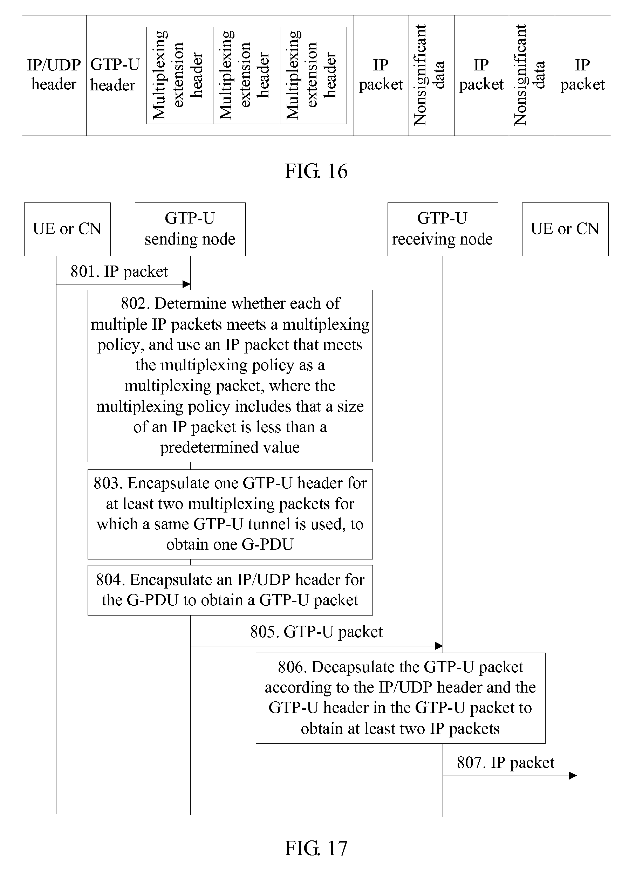

Step 705: The GTP-U sending node encapsulates an IP header and a UDP header for the G-PDU to obtain a GTP-U packet (a structure of the obtained GTP-U packet is shown in FIG. 16).

By performing the foregoing steps 703 to 705, the GTP-U sending node encapsulates the at least two multiplexing packets into one GTP-U packet.

Step 706: The GTP-U sending node sends the GTP-U packet to a receiving node.

Step 707: The GTP-U receiving node decapsulates the GTP-U packet to obtain the at least two multiplexing packets.

In an implementation manner of this embodiment, step 707 may include: determining, according to the second Next Extension Header Type field in the first multiplexing extension header in the G-PDU, the multiplexing packets that need to be decapsulated, and decapsulating the G-PDU according to the fifth Length field, the fifth TEID field, and the second Next Extension Header Type field that are in the first multiplexing extension header in the G-PDU, to obtain the at least two multiplexing packets.

In another implementation manner of this embodiment, step 707 may include: determining, according to the third Next Extension Header Type field in the second multiplexing extension header in the G-PDU, the multiplexing packets that need to be decapsulated, and decapsulating the G-PDU according to the sixth TEID field and the third Next Extension Header Type field that are in the second multiplexing extension header in the G-PDU, and a network configuration, to obtain the at least two multiplexing packets.

In still another implementation manner of this embodiment, step 707 may include: determining, according to a second Next Extension Header Type field in the first multiplexing extension header in the G-PDU and a third Next Extension Header Type field in the second multiplexing extension header in the G-PDU, the multiplexing packets that need to be decapsulated, and decapsulating the G-PDU according to the fifth Length field, the fifth TEID field, and the second Next Extension Header Type field that are in the first multiplexing extension header in the G-PDU and the sixth TEID field and the third Next Extension Header Type field that are in the second multiplexing extension header in the G-PDU, to obtain the at least two multiplexing packets.

Step 708: The GTP-U receiving node sends the at least two multiplexing packets.

In still another implementation manner of this embodiment, the method further includes a step of acquiring, by the GTP-U sending node, the multiplexing policy from an MME/a PCRF. There is no executing sequence between this step and step 701 to step 708.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 8

This embodiment of the present invention provides a data transmission method, and differs from Embodiment 6 in that in this embodiment, at least two multiplexing packets encapsulated into one GTP-U packet are transmitted by using a same GTP-U tunnel, and the at least two multiplexing packets pertain to a same UE. Referring to FIG. 17, the method includes the following steps:
Step 801: A GTP-U sending node receives at least two IP packets.
Step 802: The GTP-U sending node determines at least two multiplexing packets from the at least two IP packets according to a multiplexing policy.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, the GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

Step 803: The GTP-U sending node encapsulates one GTP-U header for the at least two multiplexing packets to obtain one G-PDU.

In an implementation manner of this embodiment, the multiplexing extension header may be a first multiplexing extension header, and the first multiplexing extension header includes a fifth Length field, a fifth TEID field, and a second Next Extension Header Type field. The fifth Length field is used to indicate a size of a multiplexing packet corresponding to the first multiplexing extension header, the fifth TEID field is used to indicate a GTP-U tunnel used for the multiplexing packet corresponding to the first multiplexing extension header, and the second Next Extension Header Type field is used to indicate whether there is another multiplexing extension header that is in a GTP-U packet and follows the first multiplexing extension header.

In another implementation manner of this embodiment, the multiplexing extension headers may include a first multiplexing extension header and a third multiplexing extension header, and the third multiplexing extension header includes a seventh Length field and a fourth Next Extension Header Type field. The seventh Length field is used to indicate a size of a multiplexing packet corresponding to the third multiplexing extension header, and the fourth Next Extension Header Type field is used to indicate whether there is another multiplexing extension header that is in a GTP-U packet and follows the third multiplexing extension header.

Preferably, the first multiplexing extension header of the multiplexing extension headers is the first multiplexing extension header, and a multiplexing extension header except the first multiplexing extension header is the third multiplexing extension header.

In still another implementation manner of this embodiment, the first multiplexing extension header may further include a first T field, and the third multiplexing extension header may further include a third T field. The first T field is used to indicate whether a GTP-U tunnel used for a multiplexing packet corresponding to the first multiplexing extension header is the same as a GTP-U tunnel used for a multiplexing packet previous to the multiplexing packet corresponding to the first multiplexing extension header. The third T field is used to indicate whether a GTP-U tunnel used for a multiplexing packet corresponding to the third multiplexing extension header is the same as a GTP-U tunnel used for a multiplexing packet previous to the multiplexing packet corresponding to the third multiplexing extension header.

When the GTP-U header includes at least two multiplexing extension headers, and the multiplexing extension headers are in one-to-one correspondence with the multiplexing packets, there is still a Length field and a TEID field in the GTP-U header; however, the Length field is not padded with data indicating a length of an IP packet, and the TEID field is not padded with data indicating a GTP-U tunnel used for the IP packet.

When the GTP-U header includes at least one multiplexing extension header, the GTP-U header includes a first Next Extension Header Type field, the first Next Extension Header Type field is corresponding to the first multiplexing packet in a GTP-U packet, and the at least one multiplexing extension header is in one-to-one correspondence with a multiplexing packet, except the first multiplexing packet, in the GTP-U packet, the GTP-U header may include a ninth Length field, a ninth TEID field, and the first Next Extension Header Type field, or may include a ninth Length field and the first Next Extension Header Type field. The ninth Length field is used to indicate a size of the first multiplexing packet, and the ninth TEID field is used to indicate a GTP-U tunnel used for the first multiplexing packet. When the GTP-U header includes the ninth Length field, the ninth TEID field, and the first Next Extension Header Type field, the multiplexing extension header may be a first multiplexing extension header, or may be a third multiplexing extension header, or the multiplexing extension headers may include a first multiplexing extension header and a third multiplexing extension header. When the GTP-U header includes the ninth Length field and the first Next Extension Header Type field, the multiplexing extension header may be a first multiplexing extension header, or the multiplexing extension headers may include a first multiplexing extension header and a third multiplexing extension header.

It should be noted that in an actual application, there is still a TEID field in the GTP-U header; however, the TEID field is not padded with data indicating a GTP-U tunnel used for an IP packet. There is no TEID field in the third multiplexing extension header.

Step 804: The GTP-U sending node encapsulates an IP header and a UDP header for the G-PDU to obtain a GTP-U packet.

By performing the foregoing steps 803 and 804, the GTP-U sending node encapsulates the at least two multiplexing packets into one GTP-U packet.

Step 805: The GTP-U sending node sends the GTP-U packet to a receiving node.

Step 806: The GTP-U receiving node decapsulates the GTP-U packet to obtain the at least two multiplexing packets.

In an implementation manner of this embodiment, step 707 may include: determining, according to the second Next Extension Header Type field in the first multiplexing extension header in the G-PDU, the multiplexing packets that need to be decapsulated, and decapsulating the G-PDU according to the fifth Length field, the fifth TEID field, and the second Next Extension Header Type field that are in the first multiplexing extension header in the G-PDU, to obtain the at least two multiplexing packets.

In another implementation manner of this embodiment, step 707 may include: determining, according to the second Next Extension Header Type field in the first multiplexing extension header in the G-PDU and the fourth Next Extension Header Type field in the third multiplexing extension header in the G-PDU, the multiplexing packets that need to be decapsulated, and decapsulating the G-PDU according to the fifth Length field, the fifth TEID field, and the second Next Extension Header Type field that are in the first multiplexing extension header in the G-PDU and the seventh Length field and the fourth Next Extension Header Type field that are in the third multiplexing extension header in the G-PDU, to obtain the at least two multiplexing packets.

Step 807: The GTP-U receiving node sends the at least two multiplexing packets.

In still another implementation manner of this embodiment, the method further includes a step of acquiring, by the GTP-U sending node, the multiplexing policy from an MME/a PCRF. There is no executing sequence between this step and step 801 to step 807.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 9

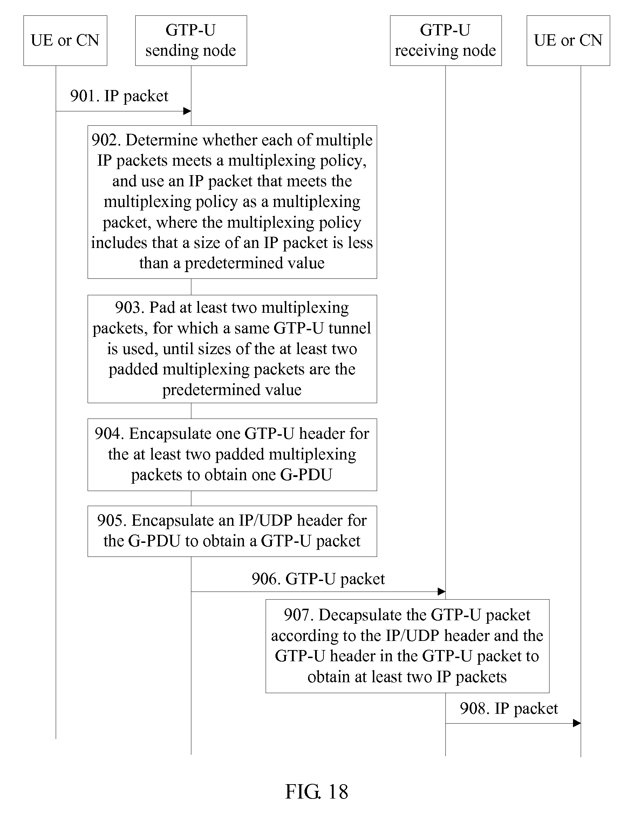

This embodiment of the present invention provides a data transmission method, and differs from Embodiment 6 in that in this embodiment, at least two multiplexing packets encapsulated into one GTP-U packet are transmitted by using a same GTP-U tunnel, the at least two multiplexing packets pertain to a same UE, and before the at least two multiplexing packets are encapsulated, the at least two multiplexing packets are padded, so that sizes of the at least two padded multiplexing packets are the same. Referring to FIG. 18, the method includes the following steps:
Step 901: A GTP-U sending node receives at least two IP packets.
Step 902: The GTP-U sending node determines at least two multiplexing packets from the at least two IP packets according to a multiplexing policy.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, the GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

Step 903: The GTP-U sending node pads each of the at least two multiplexing packets, so that sizes of the at least two padded multiplexing packets each are a set value.

During specific implementation, step 903 may be the same as step 303 in Embodiment 3, and details are not described herein again.

Step 904: The GTP-U sending node encapsulates one GTP-U header for the at least two padded multiplexing packets to obtain one G-PDU.

In an implementation manner of this embodiment, the multiplexing extension header may be a second multiplexing extension header, and the second multiplexing extension header includes a sixth TEID field and a third Next Extension Header Type field. The sixth TEID field is used to indicate a GTP-U tunnel used for a multiplexing packet corresponding to the second multiplexing extension header, and the third Next Extension Header Type field is used to indicate whether there is another multiplexing extension header that is in a GTP-U packet and follows the second multiplexing extension header.

In another implementation manner of this embodiment, the multiplexing extension headers may include a second multiplexing extension header and a fourth multiplexing extension header, and the fourth multiplexing extension header includes a fifth Next Extension Header Type field. The fifth Next Extension Header Type field is used to indicate whether there is another multiplexing extension header that is in a GTP-U packet and follows the fourth multiplexing extension header.

In still another implementation manner of this embodiment, the second multiplexing extension header may further include a sixth Length field, and the fourth multiplexing extension header may further include an eighth Length field. The sixth Length field is used to indicate a size of a multiplexing packet corresponding to the second multiplexing extension header, and the eighth Length field is used to indicate a size of a multiplexing packet corresponding to the fourth multiplexing extension header.

Preferably, the first multiplexing extension header of the multiplexing extension headers is the second multiplexing extension header, and a multiplexing extension header except the first multiplexing extension header is the fourth multiplexing extension header.

In still another implementation manner of this embodiment, the second multiplexing extension header may further include a second T field, and the fourth multiplexing extension header may further include a fourth T field. The second T field is used to indicate whether a GTP-U tunnel used for the multiplexing packet corresponding to the second multiplexing extension header is the same as a GTP-U tunnel used for a multiplexing packet previous to the multiplexing packet corresponding to the second multiplexing extension header. The fourth T field is used to indicate whether a GTP-U tunnel used for the multiplexing packet corresponding to the fourth multiplexing extension header is the same as a GTP-U tunnel used for a multiplexing packet previous to the multiplexing packet corresponding to the fourth multiplexing extension header.

When the GTP-U header includes at least two multiplexing extension headers, and the multiplexing extension headers are in one-to-one correspondence with the multiplexing packets, there is still a Length field and a TEID field in the GTP-U header; however, the Length field is not padded with data indicating a length of an IP packet, and the TEID field is not padded with data indicating a GTP-U tunnel used for the IP packet.

When the GTP-U header includes at least one multiplexing extension header, the GTP-U header includes a first Next Extension Header Type field, the first Next Extension Header Type field is corresponding to the first multiplexing packet in a GTP-U packet, and the at least one multiplexing extension header is in one-to-one correspondence with a multiplexing packet, except the first multiplexing packet, in the GTP-U packet, the GTP-U header may include a ninth Length field, a ninth TEID field, and the first Next Extension Header Type field, or may include a ninth TEID field and the first Next Extension Header Type field, or may include a ninth Length field and the first Next Extension Header Type field, or may include the first Next Extension Header Type field. The ninth Length field is used to indicate a size of the first multiplexing packet, and the ninth TEID field is used to indicate a GTP-U tunnel used for the first multiplexing packet. When the GTP-U header includes the ninth Length field, the ninth TEID field, and the first Next Extension Header Type field, or the GTP-U header includes the ninth TEID field and the first Next Extension Header Type field, the multiplexing extension header may be a second multiplexing extension header, or may be a fourth multiplexing extension header, or the multiplexing extension headers may include a second multiplexing extension header and a fourth multiplexing extension header. When the GTP-U header includes the ninth Length field and the first Next Extension Header Type field, or the GTP-U header includes the first Next Extension Header Type field, the multiplexing extension header may be a second multiplexing extension header, or the multiplexing extension headers may include a second multiplexing extension header and a fourth multiplexing extension header.

It should be noted that in an actual application, there is still a Length field and a TEID field in the GTP-U header; however, the Length field is not padded with data indicating a length of an IP packet, and the TEID field is not padded with data indicating a GTP-U tunnel used for the IP packet. There is no TEID field in the fourth multiplexing extension header.

Step 905: The GTP-U sending node encapsulates an IP header and a UDP header for the G-PDU to obtain a GTP-U packet.

By performing the foregoing steps 903 to 905, the GTP-U sending node encapsulates the at least two multiplexing packets into one GTP-U packet.

Step 906: The GTP-U sending node sends the GTP-U packet to a receiving node.

Step 907: The GTP-U receiving node decapsulates the GTP-U packet to obtain the at least two multiplexing packets.

In an implementation manner of this embodiment, step 707 may include: determining, according to the third Next Extension Header Type field in the second multiplexing extension header in the G-PDU, the multiplexing packets that need to be decapsulated, and decapsulating the G-PDU according to the sixth TEID field and the third Next Extension Header Type field that are in the second multiplexing extension header in the G-PDU, and a network configuration, to obtain the at least two multiplexing packets.

In another implementation manner of this embodiment, step 707 may include: determining, according to the third Next Extension Header Type field in the second multiplexing extension header in the G-PDU and the fifth Next Extension Header Type field in the fourth multiplexing extension header in the G-PDU, the multiplexing packets that need to be decapsulated, and decapsulating the G-PDU according to the sixth TEID field and the third Next Extension Header Type field that are in the second multiplexing extension header in the G-PDU and the fifth Next Extension Header Type field in the fourth multiplexing extension header in the G-PDU, to obtain the at least two multiplexing packets.

Step 908: The GTP-U receiving node sends the at least two multiplexing packets.

In still another implementation manner of this embodiment, the method further includes a step of acquiring, by the GTP-U receiving node, the multiplexing policy from an MME/a PCRF. There is no executing sequence between this step and step 901 to step 908.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 10

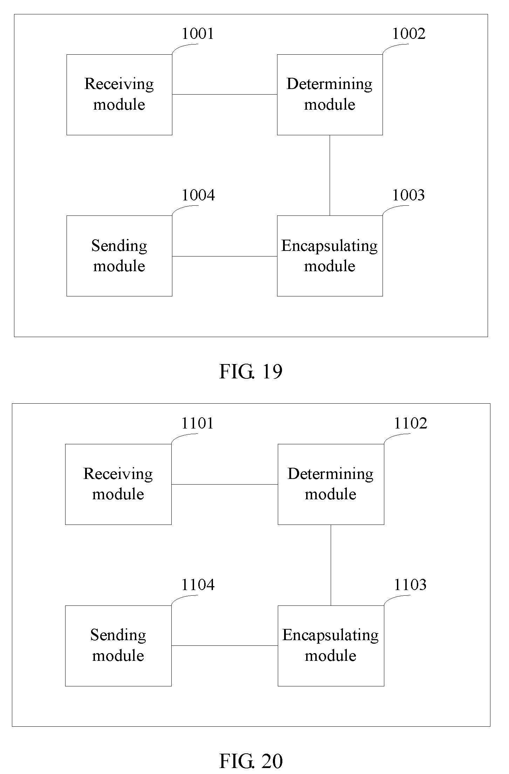

This embodiment of the present invention provides a data transmission apparatus. Referring to FIG. 19, the apparatus includes:
a receiving module 1001, configured to receive at least two IP packets;
a determining module 1002, configured to determine, according to a multiplexing policy, at least two multiplexing packets from the at least two IP packets received by the receiving module 1001, where the multiplexing policy includes at least one of the following conditions: the multiplexing packets are IP packets whose sizes are less than or equal to a set value, bearer identifiers of the multiplexing packets are the same, quality of service class identifiers QCIs of the multiplexing packets are the same, and flow description information of the multiplexing packets is the same;
an encapsulating module 1003, configured to encapsulate the at least two multiplexing packets into one GTP-U packet; and
a sending module 1004, configured to send the GTP-U packet obtained by the encapsulating module 1003.

In this embodiment, the multiplexing policy may include: the multiplexing packet is an IP packet whose size is less than or equal to the set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, a GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 11

In this embodiment of the present invention, an example in which a GTP-U packet includes one IP header, one UDP header, at least two GTP-U headers, and at least two multiplexing packets, and the GTP-U headers are in one-to-one correspondence with the multiplexing packets is used for describing a data transmission apparatus provided in the present invention. Referring to FIG. 20, the apparatus includes:
a receiving module 1101, configured to receive at least two IP packets;
a determining module 1102, configured to determine, according to a multiplexing policy, at least two multiplexing packets from the at least two IP packets received by the receiving module 1101;
an encapsulating module 1103, configured to encapsulate the at least two multiplexing packets into one GTP-U packet; and
a sending module 1104, configured to send the GTP-U packet obtained by the encapsulating module 1103.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, a GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

In this embodiment, the encapsulating module 1103 includes:
a first encapsulating unit, configured to encapsulate a GTP-U header for each of the at least two multiplexing packets to obtain at least two G-PDUs; and
a second encapsulating unit, configured to encapsulate one IP header and one UDP header for the at least two G-PDUs obtained by the first encapsulating unit, to obtain the GTP-U packet.

In an implementation manner of this embodiment, the first encapsulating unit is configured to set a first Length field, a first TEID field, and a first multiplexing indication field in a first GTP-U header. The first Length field is used to indicate a size of a multiplexing packet corresponding to the first GTP-U header, the first TEID field is used to indicate a GTP-U tunnel used for the multiplexing packet corresponding to the first GTP-U header, and the first multiplexing indication field is used to indicate whether there is another multiplexing packet that is in the GTP-U packet and follows the multiplexing packet corresponding to the first GTP-U header.

Optionally, the first encapsulating unit is configured to: use an unused field in the first GTP-U header as the first multiplexing indication field, or add the first multiplexing indication field to an extension header of the first GTP-U header.

In another implementation manner of this embodiment, when the at least two multiplexing packets for which the first encapsulating unit performs encapsulation are transmitted by using a same GTP-U tunnel, and the at least two multiplexing packets pertain to a same UE, the first encapsulating unit is configured to: set a first Length field, a first TEID field, and a first multiplexing indication field in a first GTP-U header, or set a first Length field, a first TEID field, and a first multiplexing indication field in a first GTP-U header, and set a second Length field and a second multiplexing indication field in a second GTP-U header. The second Length field is used to indicate a size of a multiplexing packet corresponding to the second GTP-U header, and the second multiplexing indication field is used to indicate whether there is another multiplexing packet that is in the GTP-U packet and follows the multiplexing packet corresponding to the second GTP-U header.

Optionally, the first encapsulating unit is configured to: use an unused field in the first GTP-U header as the first multiplexing indication field, or add the first multiplexing indication field to an extension header of the first GTP-U header, and use an unused field in the second GTP-U header as the second multiplexing indication field, or add the second multiplexing indication field to an extension header of the second GTP-U header.

In still another implementation manner of this embodiment, the encapsulating module further includes a padding unit, configured to: before the first encapsulating unit encapsulates the GTP-U header for each of the at least two multiplexing packets, pad each of the at least two multiplexing packets, so that sizes of the at least two padded multiplexing packets each are the set value.

Correspondingly, the first encapsulating unit is configured to: set a first Length field, a first TEID field, and a first multiplexing indication field in a first GTP-U header, or set a third TEID field and a third multiplexing indication field in a third GTP-U header, or set a first Length field, a first TEID field, and a first multiplexing indication field in a first GTP-U header, and set a third TEID field and a third multiplexing indication field in a third GTP-U header. The third TEID field is used to indicate a GTP-U tunnel used for a multiplexing packet corresponding to the third GTP-U header, and the third multiplexing indication field is used to indicate whether there is another multiplexing packet that is in the GTP-U packet and follows the multiplexing packet corresponding to the third GTP-U header.

Optionally, the first encapsulating unit is configured to: use an unused field in the first GTP-U header as the first multiplexing indication field, or add the first multiplexing indication field to an extension header of the first GTP-U header, and use an unused field in the third GTP-U header as the third multiplexing indication field, or add the third multiplexing indication field to an extension header of the third GTP-U header.

In still another implementation manner of this embodiment, when the at least two multiplexing packets for which the first encapsulating unit performs encapsulation are transmitted by using a same GTP-U tunnel, and the at least two multiplexing packets pertain to a same UE, the encapsulating module further includes a padding unit, configured to: before the first encapsulating unit encapsulates the GTP-U header for each of the at least two multiplexing packets, pad each of the at least two multiplexing packets, so that sizes of the at least two padded multiplexing packets each are the set value.

Correspondingly, the first encapsulating unit is configured to: set a third TEID field and a third multiplexing indication field in a third GTP-U header, or set a third TEID field and a third multiplexing indication field in a third GTP-U header, and set a fourth multiplexing indication field in a fourth GTP-U header. The fourth multiplexing indication field is used to indicate whether there is another multiplexing packet that is in the GTP-U packet and follows a multiplexing packet corresponding to the fourth GTP-U header.

Optionally, the first encapsulating unit is configured to: use an unused field in the third GTP-U header as the third multiplexing indication field, or add the third multiplexing indication field to an extension header of the third GTP-U header, and use an unused field in the fourth GTP-U header as the fourth multiplexing indication field, or add the fourth multiplexing indication field to an extension header of the fourth GTP-U header.

Further, the first encapsulating unit is further configured to: set a third Length field in the third GTP-U header, and set a fourth Length field in the fourth GTP-U header. The third Length field is used to indicate a size of the multiplexing packet corresponding to the third GTP-U header, and the fourth Length field is used to indicate a size of the multiplexing packet corresponding to the fourth GTP-U header.

In still another implementation manner of this embodiment, the apparatus further includes an acquiring module, configured to acquire the multiplexing policy from an MME/a PCRF.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 12

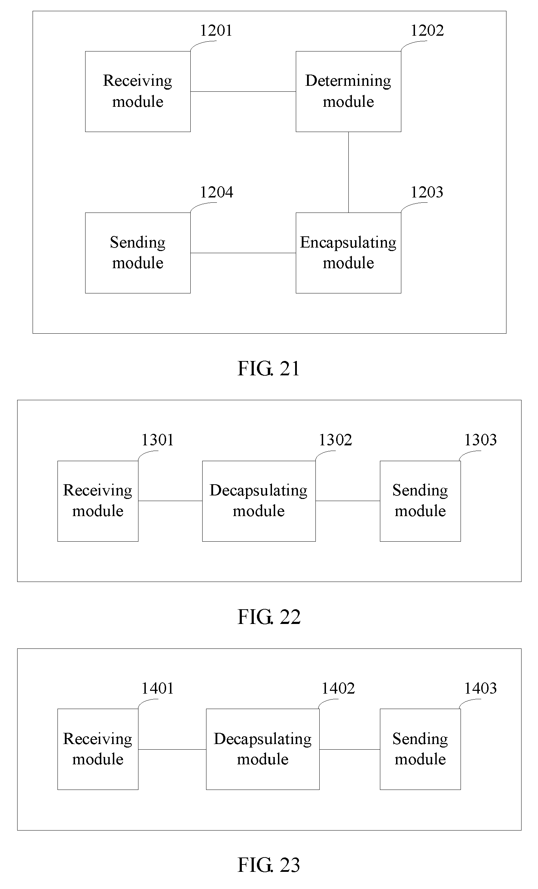

In this embodiment of the present invention, an example in which a GTP-U packet includes one IP header, one UDP header, one GTP-U header, and at least two multiplexing packets, the GTP-U header includes at least two multiplexing extension headers, and the multiplexing extension headers are in one-to-one correspondence with the multiplexing packets, or the GTP-U header includes at least one multiplexing extension header, the GTP-U header includes a first Next Extension Header Type field, the first Next Extension Header Type field is corresponding to the first multiplexing packet in the GTP-U packet, the at least one multiplexing extension header is in one-to-one correspondence with a multiplexing packet, except the first multiplexing packet, in the GTP-U packet, and the first Next Extension Header Type field is used to indicate whether the first extension header in the GTP-U header in the GTP-U packet is a multiplexing extension header is used for describing a data transmission apparatus provided in the present invention. Referring to FIG. 21, the apparatus includes:
a receiving module 1201, configured to receive at least two IP packets;
a determining module 1202, configured to determine, according to a multiplexing policy, at least two multiplexing packets from the at least two IP packets received by the receiving module 1201;
an encapsulating module 1203, configured to encapsulate the at least two multiplexing packets into one GTP-U packet; and
a sending module 1204, configured to send the GTP-U packet obtained by the encapsulating module 1203.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, a GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

In this embodiment, the encapsulating module 1203 includes:
a third encapsulating unit, configured to encapsulate one GTP-U header for the at least two multiplexing packets, so that the at least two encapsulated multiplexing packets are one G-PDU; and
a fourth encapsulating unit, configured to encapsulate an IP header and a UDP header for the G-PDU obtained by the third encapsulating unit, to obtain the GTP-U packet.

In an implementation manner of this embodiment, the third encapsulating unit is configured to set a fifth Length field, a fifth TEID field, and a second Next Extension Header Type field in a first multiplexing extension header. The fifth Length field is used to indicate a size of a multiplexing packet corresponding to the first multiplexing extension header, the fifth TEID field is used to indicate a GTP-U tunnel used for the multiplexing packet corresponding to the first multiplexing extension header, and the second Next Extension Header Type field is used to indicate whether there is another multiplexing extension header that is in the GTP-U packet and follows the first multiplexing extension header.

Optionally, the third encapsulating unit is configured to further set a first T field in the first multiplexing extension header, and the first T field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

In another implementation manner of this embodiment, the encapsulating module further includes a padding unit, configured to: before the third encapsulating unit encapsulates the GTP-U header for the at least two multiplexing packets, pad each of the at least two multiplexing packets, so that sizes of the at least two padded multiplexing packets each are the set value.

Correspondingly, the third encapsulating unit is configured to: set a fifth Length field, a TEID field, and a second Next Extension Header Type field in a first multiplexing extension header, or set a sixth TEID field and a third Next Extension Header Type field in a second multiplexing extension header, or set a fifth Length field, a TEID field, and a second Next Extension Header Type field in a first multiplexing extension header, and set a sixth TEID field and a third Next Extension Header Type field in a second multiplexing extension header.

Optionally, the third encapsulating unit is configured to: further set a first T field in the first multiplexing extension header, and further set a second T field in the second multiplexing extension header. The first T field is used to indicate whether a GTP-U tunnel used for a multiplexing packet corresponding to the first multiplexing extension header is the same as a GTP-U tunnel used for a multiplexing packet corresponding to a multiplexing extension header previous to the first multiplexing extension header. The second T field is used to indicate whether a GTP-U tunnel used for a multiplexing packet corresponding to the second multiplexing extension header is the same as a GTP-U tunnel used for a multiplexing packet corresponding to a multiplexing extension header previous to the second multiplexing extension header.

In still another implementation manner of this embodiment, when the at least two multiplexing packets for which the third encapsulating unit performs encapsulation are transmitted by using a same GTP-U tunnel, and the at least two multiplexing packets pertain to a same UE, the third encapsulating unit is configured to: set a fifth Length field, a fifth TEID field, and a second Next Extension Header Type field in a first multiplexing extension header, or set a fifth Length field, a fifth TEID field, and a second Next Extension Header Type field in a first multiplexing extension header, and set a seventh Length field and a fourth Next Extension Header Type field in a third multiplexing extension header.

Optionally, the third encapsulating unit is configured to: further set a first T field in the first multiplexing extension header, and further set a third T field in the third multiplexing extension header. The first T field is used to indicate whether a GTP-U tunnel used for a multiplexing packet corresponding to the first multiplexing extension header is the same as a GTP-U tunnel used for a multiplexing packet corresponding to a multiplexing extension header previous to the first multiplexing extension header. The third T field is used to indicate whether a GTP-U tunnel used for a multiplexing packet corresponding to the third multiplexing extension header is the same as a GTP-U tunnel used for a multiplexing packet corresponding to a multiplexing extension header previous to the second multiplexing extension header.

In still another implementation manner of this embodiment, when the at least two multiplexing packets for which the third encapsulating unit performs encapsulation are transmitted by using a same GTP-U tunnel, and the at least two multiplexing packets pertain to a same UE, the encapsulating module further includes a padding unit, configured to: before the third encapsulating unit encapsulates the GTP-U header for the at least two multiplexing packets, pad each of the at least two multiplexing packets, so that sizes of the at least two padded multiplexing packets each are the set value.

Correspondingly, the third encapsulating unit is configured to: set a sixth TEID field and a third Next Extension Header Type field in a second multiplexing extension header, or set a sixth TEID field and a third Next Extension Header Type field in a second multiplexing extension header, and set a fifth Next Extension Header Type field in a fourth multiplexing extension header.

Optionally, the third encapsulating unit is configured to: further set a second T field in the second multiplexing extension header, and further set a fourth T field in the fourth multiplexing extension header. The second T field is used to indicate whether a GTP-U tunnel used for a multiplexing packet corresponding to the second multiplexing extension header is the same as a GTP-U tunnel used for a multiplexing packet corresponding to a multiplexing extension header previous to the second multiplexing extension header. The fourth T field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

Further, the third encapsulating unit is further configured to: set a sixth Length field in the second multiplexing extension header, and set an eighth Length field in the fourth multiplexing extension header.

When the GTP-U header includes at least two multiplexing extension headers, and the multiplexing extension headers are in one-to-one correspondence with the multiplexing packets, there is still a Length field and a TEID field in the GTP-U header; however, the Length field is not padded with data indicating a length of an IP packet, and the TEID field is not padded with data indicating a GTP-U tunnel used for the IP packet.

When the GTP-U header includes at least one multiplexing extension header, the GTP-U header includes a first Next Extension Header Type field, the first Next Extension Header Type field is corresponding to the first multiplexing packet in the GTP-U packet, and the at least one multiplexing extension header is in one-to-one correspondence with a multiplexing packet, except the first multiplexing packet, in the GTP-U packet, the GTP-U header further includes a ninth Length field and a ninth TEID field, the ninth Length field is used to indicate a length of the first multiplexing packet in the GTP-U packet, and the ninth TEID field is used to indicate a GTP-U tunnel used for the first multiplexing packet.

In still another implementation manner of this embodiment, the apparatus further includes an acquiring module, configured to acquire the multiplexing policy from an MME/a PCRF.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 13

This embodiment of the present invention provides a data transmission apparatus. Referring to FIG. 22, the apparatus includes:
a receiving module 1301, configured to receive a GTP-U packet, where the GTP-U packet is obtained by encapsulating at least two multiplexing packets, and the at least two multiplexing packets are at least two IP packets determined according to a multiplexing policy;
a decapsulating module 1302, configured to decapsulate the GTP-U packet received by the receiving module 1301, to obtain the at least two multiplexing packets; and
a sending module 1303, configured to send the at least two multiplexing packets obtained by the decapsulating module 1302.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, a GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 14

In this embodiment of the present invention, an example in which a GTP-U packet includes one IP header, one UDP header, at least two GTP-U headers, and at least two multiplexing packets, and the GTP-U headers are in one-to-one correspondence with the multiplexing packets is used for describing a data transmission apparatus provided in the present invention. Referring to FIG. 23, the apparatus includes:
a receiving module 1401, configured to receive a GTP-U packet, where the GTP-U packet is obtained by encapsulating at least two multiplexing packets, and the at least two multiplexing packets are at least two IP packets determined according to a multiplexing policy;
a decapsulating module 1402, configured to decapsulate the GTP-U packet received by the receiving module 1401, to obtain the at least two multiplexing packets; and
a sending module 1403, configured to send the at least two multiplexing packets obtained by the decapsulating module 1402.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, a GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

In this embodiment, the decapsulating module 1502 includes:
a first decapsulating unit, configured to decapsulate the GTP-U packet according to an IP header and a UDP header in the GTP-U packet to obtain at least two G-PDUs, where each G-PDU of the at least two G-PDUs includes one GTP-U header; and
a second decapsulating unit, configured to decapsulate, according to the GTP-U headers in the at least two G-PDUs, the at least two G-PDUs obtained by the first decapsulating unit, to obtain the at least two multiplexing packets.

In an implementation manner of this embodiment, when the GTP-U header is a first GTP-U header, the second decapsulating unit is configured to: determine, according to first multiplexing indication fields in the first GTP-U headers in the at least two G-PDUs, the multiplexing packets that need to be decapsulated, and decapsulate the at least two G-PDUs according to first Length fields, first TEID fields, and the first multiplexing indication fields that are in the first GTP-U headers in the at least two G-PDUs, to obtain the at least two multiplexing packets.

In this embodiment, the first GTP-U header includes the first Length field, the first TEID field, and the first multiplexing indication field. The first Length field is used to indicate a size of a multiplexing packet corresponding to the first GTP-U header, the first TEID field is used to indicate a GTP-U tunnel used for the multiplexing packet corresponding to the first GTP-U header, and the first multiplexing indication field is used to indicate whether there is another multiplexing packet that is in the GTP-U packet and follows the multiplexing packet corresponding to the first GTP-U header.

Optionally, the first multiplexing indication field is an unused field in the first GTP-U header or is carried in an extension header of the first GTP-U header.

In another implementation manner of this embodiment, when the at least two multiplexing packets are transmitted by using a same GTP-U tunnel and the GTP-U header is a first GTP-U header, the second decapsulating unit is configured to: determine, according to first multiplexing indication fields in the first GTP-U headers in the at least two G-PDUs, the multiplexing packets that need to be decapsulated, and decapsulate the at least two G-PDUs according to first Length fields, first TEID fields, and the first multiplexing indication fields that are in the first GTP-U headers in the at least two G-PDUs, to obtain the at least two multiplexing packets.

Alternatively, when the at least two multiplexing packets are transmitted by using a same GTP-U tunnel, the first GTP-U header of the GTP-U headers is a first GTP-U header, and a GTP-U header except the first GTP-U header is a second GTP-U header, the second decapsulating unit is configured to: determine, according to a first multiplexing indication field in the first GTP-U header in the at least two G-PDUs and a second multiplexing indication field in the second GTP-U header in the at least two G-PDUs, the multiplexing packets that need to be decapsulated, and decapsulate the at least two G-PDUs according to a first Length field, a first TEID field, and the first multiplexing indication field that are in the first GTP-U header in the at least two G-PDUs and a second Length field and the second multiplexing indication field that are in the second GTP-U header in the at least two G-PDUs, to obtain the at least two multiplexing packets.

In this embodiment, the second GTP-U header includes the second Length field and the second multiplexing indication field. The second Length field is used to indicate a size of a multiplexing packet corresponding to the second GTP-U header, and the second multiplexing indication field is used to indicate whether there is another multiplexing packet that is in the GTP-U packet and follows the multiplexing packet corresponding to the second GTP-U header.

Optionally, the first multiplexing indication field is an unused field in the first GTP-U header or is carried in an extension header of the first GTP-U header, and the second multiplexing indication field is an unused field in the second GTP-U header or is carried in an extension header of the second GTP-U header.

In still another implementation manner of this embodiment, when sizes of the at least two multiplexing packets each are the set value and the GTP-U header is a first GTP-U header, the second decapsulating unit is configured to: determine, according to first multiplexing indication fields in the first GTP-U headers in the at least two G-PDUs, the multiplexing packets that need to be decapsulated, and decapsulate the at least two G-PDUs according to first Length fields, first TEID fields, and the first multiplexing indication fields that are in the first GTP-U headers in the at least two G-PDUs, to obtain the at least two multiplexing packets.

Alternatively, when sizes of the at least two multiplexing packets each are the set value and the GTP-U header is a third GTP-U header, the second decapsulating unit is configured to: determine, according to third multiplexing indication fields in the third GTP-U headers in the at least two G-PDUs, the multiplexing packets that need to be decapsulated, and decapsulate the at least two G-PDUs according to third TEID fields and the third multiplexing indication fields that are in the third GTP-U headers in the at least two G-PDUs, and a network configuration, to obtain the at least two multiplexing packets, where the network configuration is used to indicate a size of the set value.

Alternatively, when sizes of the at least two multiplexing packets each are the set value, the first GTP-U header of the GTP-U headers is a first GTP-U header, and a GTP-U header except the first GTP-U header is a third GTP-U header, the second decapsulating unit is configured to: determine, according to a first multiplexing indication field in the first GTP-U header in the at least two G-PDUs and a third multiplexing indication field in the third GTP-U header in the at least two G-PDUs, the multiplexing packets that need to be decapsulated, and decapsulate the at least two G-PDUs according to a first Length field, a first TEID field, and the first multiplexing indication field that are in the first GTP-U header in the at least two G-PDUs and a third TEID field and the third multiplexing indication field that are in the third GTP-U header in the at least two G-PDUs, to obtain the at least two multiplexing packets.

In this embodiment, the third GTP-U header includes the third TEID field and the third multiplexing indication field. The third TEID field is used to indicate a GTP-U tunnel used for a multiplexing packet corresponding to the third GTP-U header, and the third multiplexing indication field is used to indicate whether there is another multiplexing packet that is in the GTP-U packet and follows the multiplexing packet corresponding to the third GTP-U header.

Optionally, the first multiplexing indication field is an unused field in the first GTP-U header or is carried in an extension header of the first GTP-U header, and the third multiplexing indication field is an unused field in the third GTP-U header or is carried in an extension header of the third GTP-U header.

In still another implementation manner of this embodiment, when the at least two multiplexing packets are transmitted by using a same GTP-U tunnel, sizes of the at least two multiplexing packets each are the set value, and the GTP-U header is a third GTP-U header, the second decapsulating unit is configured to: determine, according to third multiplexing indication fields in the third GTP-U headers in the at least two G-PDUs, the multiplexing packets that need to be decapsulated, and decapsulate the at least two G-PDUs according to third TEIDs and the third multiplexing indication fields that are in the third GTP-U headers in the at least two G-PDUs, to obtain the at least two multiplexing packets.

Alternatively, when the at least two multiplexing packets are transmitted by using a same GTP-U tunnel, sizes of the at least two multiplexing packets each are the set value, the first GTP-U header of the GTP-U headers is a third GTP-U header, and a GTP-U header except the first GTP-U header is a fourth GTP-U header, the second decapsulating unit is configured to: determine, according to a third multiplexing indication field in the third GTP-U header in the at least two G-PDUs and a fourth multiplexing indication field in the fourth GTP-U header in the at least two G-PDUs, the multiplexing packets that need to be decapsulated, and decapsulate the at least two G-PDUs according to a third TEID field and the third multiplexing indication field that are in the third GTP-U header in the at least two G-PDUs and the fourth multiplexing indication field in the fourth GTP-U header in the at least two G-PDUs, to obtain the at least two multiplexing packets.

In this embodiment, the fourth GTP-U header includes the fourth multiplexing indication field. The fourth multiplexing indication field is used to indicate whether there is another multiplexing packet that is in the GTP-U packet and follows a multiplexing packet corresponding to the fourth GTP-U header.

Optionally, the third multiplexing indication field is an unused field in the third GTP-U header or is carried in an extension header of the third GTP-U header, and the fourth multiplexing indication field is an unused field in the fourth GTP-U header or is carried in an extension header of the fourth GTP-U header.

Further, the third GTP-U header further includes a third Length field, the fourth GTP-U header further includes a fourth Length field, the third Length field is used to indicate a size of a padded multiplexing packet corresponding to the third GTP-U header, and the fourth Length field is used to indicate a size of a padded multiplexing packet corresponding to the fourth GTP-U header.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 15

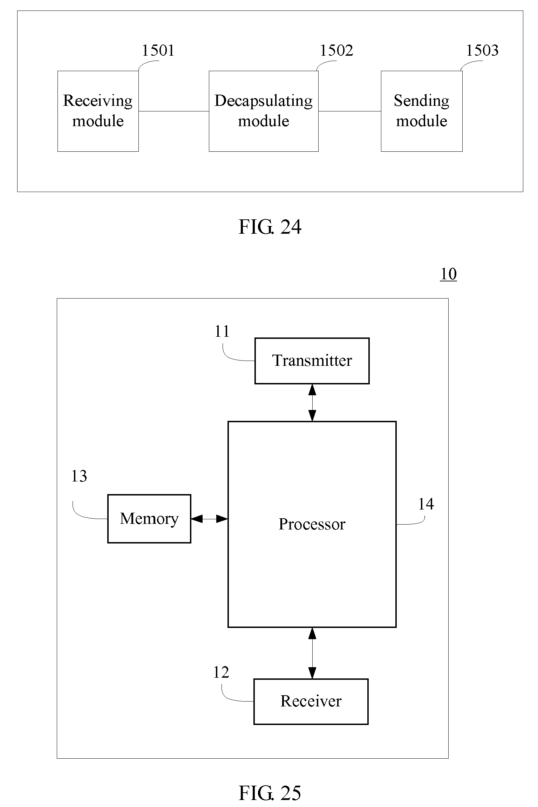

In this embodiment of the present invention, an example in which a GTP-U packet includes one IP header, one UDP header, one GTP-U header, and at least two multiplexing packets, the GTP-U header includes at least two multiplexing extension headers, and the multiplexing extension headers are in one-to-one correspondence with the multiplexing packets, or the GTP-U header includes at least one multiplexing extension header, the GTP-U header includes a first Next Extension Header Type field, the first Next Extension Header Type field is corresponding to the first multiplexing packet in the GTP-U packet, the at least one multiplexing extension header is in one-to-one correspondence with a multiplexing packet, except the first multiplexing packet, in the GTP-U packet, and the first Next Extension Header Type field is used to indicate whether the first extension header in the GTP-U header in the GTP-U packet is a multiplexing extension header is used for describing a data transmission apparatus provided in the present invention. Referring to FIG. 24, the apparatus includes:
a receiving module 1501, configured to receive a GTP-U packet, where the GTP-U packet is obtained by encapsulating at least two multiplexing packets, and the at least two multiplexing packets are at least two IP packets determined according to a multiplexing policy;
a decapsulating module 1502, configured to decapsulate the GTP-U packet received by the receiving module 1501, to obtain the at least two multiplexing packets; and
a sending module 1503, configured to send the at least two multiplexing packets obtained by the decapsulating module 1502.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, a GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

In this embodiment, the decapsulating module 1502 includes:
a third decapsulating unit, configured to decapsulate the GTP-U packet according to an IP header and a UDP header in the GTP-U packet to obtain one G-PDU; and
a fourth decapsulating unit, configured to decapsulate, according to a GTP-U header in the G-PDU, the G-PDU obtained by the third decapsulating unit, to obtain the at least two multiplexing packets.

In an implementation manner of this embodiment, when a multiplexing extension header is a first multiplexing extension header, the fourth decapsulating unit is configured to: determine, according to a second Next Extension Header Type field in the first multiplexing extension header in the G-PDU, the multiplexing packets that need to be decapsulated, and decapsulate the G-PDU according to a fifth Length field, a fifth TEID field, and the second Next Extension Header Type field that are in the first multiplexing extension header in the G-PDU, to obtain the at least two multiplexing packets.

In this embodiment, the first multiplexing extension header includes the fifth Length field, the fifth TEID field, and the second Next Extension Header Type field. The fifth Length field is used to indicate a size of a multiplexing packet corresponding to the first multiplexing extension header, the fifth TEID field is used to indicate a GTP-U tunnel used for the multiplexing packet corresponding to the first multiplexing extension header, and the second Next Extension Header Type field is used to indicate whether there is another multiplexing extension header that is in the GTP-U packet and follows the first multiplexing extension header.

Optionally, the first multiplexing extension header further includes a first T field, and the first T field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

In another implementation manner of this embodiment, when a size of one multiplexing packet is the set value and a multiplexing extension header is a first multiplexing extension header, the fourth decapsulating unit is configured to: determine, according to a second Next Extension Header Type field in the first multiplexing extension header in the G-PDU, the multiplexing packets that need to be decapsulated, and decapsulate the G-PDU according to a fifth Length field, a fifth TEID field, and the second Next Extension Header Type field that are in the first multiplexing extension header in the G-PDU, to obtain the at least two multiplexing packets.

Alternatively, when a size of one multiplexing packet is the set value and a multiplexing extension header is a second multiplexing extension header, the fourth decapsulating unit is configured to: determine, according to a third Next Extension Header Type field in the second multiplexing extension header in the G-PDU, the multiplexing packets that need to be decapsulated, and decapsulate the G-PDU according to a sixth TEID field and the third Next Extension Header Type field that are in the second multiplexing extension header in the G-PDU, and a network configuration, to obtain the at least two multiplexing packets, where the network configuration is used to indicate a size of the set value.

Alternatively, when a size of one multiplexing packet is the set value, the first multiplexing extension header of the multiplexing extension headers is a first multiplexing extension header, and a multiplexing extension header except the first multiplexing extension header is a second multiplexing extension header, the fourth decapsulating unit is configured to: determine, according to a second Next Extension Header Type field in the first multiplexing extension header in the G-PDU and a third Next Extension Header Type field in the second multiplexing extension header in the G-PDU, the multiplexing packets that need to be decapsulated, and decapsulate the G-PDU according to a fifth Length field, a fifth TEID field, and the second Next Extension Header Type field that are in the first multiplexing extension header in the G-PDU and a sixth TEID field and the third Next Extension Header Type field that are in the second multiplexing extension header in the G-PDU, to obtain the at least two multiplexing packets.

In this embodiment, the second multiplexing extension header includes the sixth TEID field and the third Next Extension Header Type field. The sixth TEID field is used to indicate a GTP-U tunnel used for a multiplexing packet corresponding to the second multiplexing extension header, and the third Next Extension Header Type field is used to indicate whether there is another multiplexing extension header that is in the GTP-U packet and follows the second multiplexing extension header.

Optionally, the first multiplexing extension header further includes a first T field, and the second multiplexing extension header further includes a second T field. The first T field is used to indicate whether a GTP-U tunnel used for a multiplexing packet corresponding to the first multiplexing extension header is the same as a GTP-U tunnel used for a multiplexing packet corresponding to a multiplexing extension header previous to the first multiplexing extension header. The second T field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header.

In still another implementation manner of this embodiment, when one multiplexing packet is transmitted by using a same GTP-U tunnel, and a multiplexing extension header in the GTP-U header is a first multiplexing extension header, the fourth decapsulating unit is configured to: determine, according to a second Next Extension Header Type field in the first multiplexing extension header in the G-PDU, the multiplexing packets that need to be decapsulated, and decapsulate the G-PDU according to a fifth Length field, a fifth TEID field, and the second Next Extension Header Type field that are in the first multiplexing extension header in the G-PDU, to obtain the at least two multiplexing packets.

Alternatively, when one multiplexing packet is transmitted by using a same GTP-U tunnel, the first multiplexing extension header of the multiplexing extension headers is a first multiplexing extension header, and a multiplexing extension header except the first multiplexing extension header is a third multiplexing extension header, the fourth decapsulating unit is configured to: determine, according to a second Next Extension Header Type field in the first multiplexing extension header in the G-PDU and a fourth Next Extension Header Type field in the third multiplexing extension header in the G-PDU, the multiplexing packets that need to be decapsulated, and decapsulate the G-PDU according to a fifth Length field, a fifth TEID field, and the second Next Extension Header Type field that are in the first multiplexing extension header in the G-PDU and a seventh Length field and the fourth Next Extension Header Type field that are in the third multiplexing extension header in the G-PDU, to obtain the at least two multiplexing packets.

In this embodiment, the third multiplexing extension header includes the seventh Length field and the fourth Next Extension Header Type field. The seventh Length field is used to indicate a GTP-U tunnel used for a multiplexing packet corresponding to the third multiplexing extension header, and the fourth Next Extension Header Type field is used to indicate whether there is another multiplexing extension header that is in the GTP-U packet and follows the third multiplexing extension header.

Optionally, the first multiplexing extension header further includes a first T field, and the third multiplexing extension header further includes a third T field. The first T field is used to indicate whether a GTP-U tunnel used for a multiplexing packet corresponding to the first multiplexing extension header is the same as a GTP-U tunnel used for a multiplexing packet corresponding to a multiplexing extension header previous to the first multiplexing extension header. The third T field is used to indicate whether a GTP-U tunnel used for the multiplexing packet corresponding to the third multiplexing extension header is the same as a GTP-U tunnel used for a multiplexing packet corresponding to a multiplexing extension header previous to the third multiplexing extension header.

In still another implementation manner of this embodiment, when the at least two multiplexing packets are transmitted by using a same GTP-U tunnel, a size of one multiplexing packet is the set value and a multiplexing extension header is a second multiplexing extension header, the fourth decapsulating unit is configured to: determine, according to a third Next Extension Header Type field in the second multiplexing extension header in the G-PDU, the multiplexing packets that need to be decapsulated, and decapsulate the G-PDU according to a sixth TEID field and the third Next Extension Header Type field that are in the second multiplexing extension header in the G-PDU, to obtain the at least two multiplexing packets.

Alternatively, when the at least two multiplexing packets are transmitted by using a same GTP-U tunnel, a size of one multiplexing packet is the set value, the first multiplexing extension header of the multiplexing extension headers is a second multiplexing extension header, and a multiplexing extension header except the first multiplexing extension header is a fourth multiplexing extension header, the fourth decapsulating unit is configured to: determine, according to a third Next Extension Header Type field in the second multiplexing extension header in the G-PDU and a fifth Next Extension Header Type field in the fourth multiplexing extension header in the G-PDU, the multiplexing packets that need to be decapsulated, and decapsulate the G-PDU according to a sixth TEID field and the third Next Extension Header Type field that are in the second multiplexing extension header in the G-PDU and the fifth Next Extension Header Type field in the fourth multiplexing extension header in the G-PDU, to obtain the at least two multiplexing packets.

In this embodiment, the fourth multiplexing extension header includes the fifth Next Extension Header Type field. The fifth Next Extension Header Type field is used to indicate whether there is another multiplexing extension header that is in the GTP-U packet and follows the fourth multiplexing extension header.

Optionally, the second multiplexing extension header further includes a second T field, and the fourth multiplexing extension header further includes a fourth T field. The second T field is used to indicate whether a GTP-U tunnel used for a multiplexing packet corresponding to the second multiplexing extension header is the same as a GTP-U tunnel used for a multiplexing packet corresponding to a multiplexing extension header previous to the second multiplexing extension header. The fourth T field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

Further, the second multiplexing extension header further includes a sixth Length field, the fourth multiplexing extension header further includes an eighth Length field, the sixth Length field is used to indicate a size of a padded multiplexing packet corresponding to the second multiplexing extension header, and the eighth Length field is used to indicate a size of a padded multiplexing packet corresponding to the fourth multiplexing extension header.

When the GTP-U header includes at least two multiplexing extension headers, and the multiplexing extension headers are in one-to-one correspondence with the multiplexing packets, there is still a Length field and a TEID field in the GTP-U header; however, the Length field is not padded with data indicating a length of an IP packet, and the TEID field is not padded with data indicating a GTP-U tunnel used for the IP packet.

When the GTP-U header includes at least one multiplexing extension header, the GTP-U header includes a first Next Extension Header Type field, the first Next Extension Header Type field is corresponding to the first multiplexing packet in the GTP-U packet, and the at least one multiplexing extension header is in one-to-one correspondence with a multiplexing packet, except the first multiplexing packet, in the GTP-U packet, the GTP-U header further includes a ninth Length field and a ninth TEID field, the ninth Length field is used to indicate a length of the first multiplexing packet in the GTP-U packet, and the ninth TEID field is used to indicate a GTP-U tunnel used for the first multiplexing packet.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 16

This embodiment of the present invention provides a data transmission apparatus, and the apparatus may be a GGSN, an SGSN, an S4-SGSN, a PGW, an SGW, an ePDG, an AP, a NodeB, or an eNB; or some of a GGSN, an SGSN, an S4-SGSN, a PGW, an SGW, an ePDG, an AP, a NodeB, and an eNB. Referring to FIG. 25, the apparatus includes a transmitter 11, a receiver 12, a memory 13, and a processor 14 (such as a CPU), and may be configured to execute the method in any embodiment of Embodiment 1 to Embodiment 9.

With reference to FIG. 25, the following makes a specific introduction to component parts of the data transmission apparatus 10.

The memory 13 may be configured to store a software program and an application module. By running the software program and the application module that are stored in the memory 13, the processor 13 executes various functional applications of the data transmission apparatus 10 and performs data processing. The memory 13 may mainly include a program storage area and a data storage area, where an operating system, an application program required by at least one function, and the like may be stored in the program storage area, and data (such as a GTP-U packet) created according to encapsulation processing may be stored in the data storage area. In addition, the memory 13 may include a high-speed random access memory (Random Access Memory, RAM for short), and may further include a non-volatile memory (non-volatile memory), such as at least one disk storage component, a flash memory component, or another volatile solid state storage component.

The receiver 12 may be configured to receive at least two IP packets, where the IP packets are sent by a UE or a CN.

The transmitter 11 may be configured to send a GTP-U packet.

The processor 14 is a control center of the data transmission apparatus 10, and connects various parts of the entire data transmission apparatus 10 by using various interfaces and lines.

Specifically, by running or executing the software program and the application module that are stored in the memory 13, and invoking data stored in the memory 13, the processor 14 may determine, according to a multiplexing policy, at least two multiplexing packets from the at least two IP packets received by the receiver 12, and encapsulate the at least two multiplexing packets into one GTP-U packet, and then the transmitter 11 sends the GTP-U packet.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, a GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

In an implementation manner of this embodiment, the processor 14 may encapsulate a GTP-U header for each of the at least two multiplexing packets to obtain at least two G-PDUs, and encapsulate one IP header and one UDP header for the at least two G-PDUs to obtain the GTP-U packet.

Optionally, the processor 14 may set a first Length field, a first TEID field, and a first multiplexing indication field in a first GTP-U header. The first Length field is used to indicate a size of a multiplexing packet corresponding to the first GTP-U header, the first TEID field is used to indicate a GTP-U tunnel used for the multiplexing packet corresponding to the first GTP-U header, and the first multiplexing indication field is used to indicate whether there is another multiplexing packet that is in the GTP-U packet and follows the multiplexing packet corresponding to the first GTP-U header.

Further, the processor 14 may use an unused field in the first GTP-U header as the first multiplexing indication field, or add the first multiplexing indication field to an extension header of the first GTP-U header.

Optionally, when the at least two multiplexing packets for which a first encapsulating unit performs encapsulation are transmitted by using a same GTP-U tunnel, and the at least two multiplexing packets pertain to a same UE, the processor 14 may set a first Length field, a first TEID field, and a first multiplexing indication field in a first GTP-U header, or set a first Length field, a first TEID field, and a first multiplexing indication field in a first GTP-U header, and set a second Length field and a second multiplexing indication field in a second GTP-U header. The second Length field is used to indicate a size of a multiplexing packet corresponding to the second GTP-U header, and the second multiplexing indication field is used to indicate whether there is another multiplexing packet that is in the GTP-U packet and follows the multiplexing packet corresponding to the second GTP-U header.

Further, the processor 14 may use an unused field in the first GTP-U header as the first multiplexing indication field, or add the first multiplexing indication field to an extension header of the first GTP-U header, and use an unused field in the second GTP-U header as the second multiplexing indication field, or add the second multiplexing indication field to an extension header of the second GTP-U header.

Optionally, the processor 14 may pad each of the at least two multiplexing packets, so that sizes of the at least two padded multiplexing packets each are the set value; and set a first Length field, a first TEID field, and a first multiplexing indication field in a first GTP-U header, or set a third TEID field and a third multiplexing indication field in a third GTP-U header, or set a first Length field, a first TEID field, and a first multiplexing indication field in a first GTP-U header, and set a third TEID field and a third multiplexing indication field in a third GTP-U header. The third TEID field is used to indicate a GTP-U tunnel used for a multiplexing packet corresponding to the third GTP-U header, and the third multiplexing indication field is used to indicate whether there is another multiplexing packet that is in the GTP-U packet and follows the multiplexing packet corresponding to the third GTP-U header.

Further, an unused field in the first GTP-U header is used as the first multiplexing indication field, or the first multiplexing indication field is added to an extension header of the first GTP-U header, and an unused field in the third GTP-U header is used as the third multiplexing indication field, or the third multiplexing indication field is added to an extension header in the third GTP-U header.

Optionally, the processor 14 may pad each of the at least two multiplexing packets, so that sizes of the at least two padded multiplexing packets each are the set value; and set a third TEID field and a third multiplexing indication field in a third GTP-U header, or set a third TEID field and a third multiplexing indication field in a third GTP-U header, and set a fourth multiplexing indication field in a fourth GTP-U header. The fourth multiplexing indication field is used to indicate whether there is another multiplexing packet that is in the GTP-U packet and follows a multiplexing packet corresponding to the fourth GTP-U header.

Further, the processor 14 may use an unused field in the third GTP-U header as the third multiplexing indication field, or add the third multiplexing indication field to an extension header of the third GTP-U header, and use an unused field in the fourth GTP-U header as the fourth multiplexing indication field, or add the fourth multiplexing indication field to an extension header of the fourth GTP-U header.

Further, the processor 14 may set a third Length field in the third GTP-U header, and set a fourth Length field in the fourth GTP-U header. The third Length field is used to indicate a size of a multiplexing packet corresponding to the third GTP-U header, and the fourth Length field is used to indicate a size of the multiplexing packet corresponding to the fourth GTP-U header.

Optionally, the receiver 12 may acquire the multiplexing policy from an MME/a PCRF.

In another implementation manner of this embodiment, the processor 14 may encapsulate one GTP-U header for the at least two multiplexing packets, so that the at least two encapsulated multiplexing packets are one G-PDU; and encapsulate an IP header and a UDP header for the G-PDU to obtain the GTP-U packet.

Optionally, the processor 14 may set a fifth Length field, a fifth TEID field, and a second Next Extension Header Type field in a first multiplexing extension header. The fifth Length field is used to indicate a size of a multiplexing packet corresponding to the first multiplexing extension header, the fifth TEID field is used to indicate a GTP-U tunnel used for the multiplexing packet corresponding to the first multiplexing extension header, and the second Next Extension Header Type field is used to indicate whether there is another multiplexing extension header that is in the GTP-U packet and follows the first multiplexing extension header.

Further, the processor 14 may further set a first T field in the first multiplexing extension header, and the first T field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

Optionally, the processor 14 may pad each of the at least two multiplexing packets, so that sizes of the at least two padded multiplexing packets each are the set value; and set a fifth Length field, a fifth TEID field, and a second Next Extension Header Type field in a first multiplexing extension header, or set a sixth TEID field and a third Next Extension Header Type field in a second multiplexing extension header, or set a fifth Length field, a TEID field, and a second Next Extension Header Type field in a first multiplexing extension header, and set a sixth TEID field and a third Next Extension Header Type field in a second multiplexing extension header.

Further, the processor 14 may further set a first T field in the first multiplexing extension header, and further set a second T field in the second multiplexing extension header. The first T field is used to indicate whether a GTP-U tunnel used for a multiplexing packet corresponding to the first multiplexing extension header is the same as a GTP-U tunnel used for a multiplexing packet corresponding to a multiplexing extension header previous to the first multiplexing extension header. The second T field is used to indicate whether a GTP-U tunnel used for a multiplexing packet corresponding to the second multiplexing extension header is the same as a GTP-U tunnel used for a multiplexing packet corresponding to a multiplexing extension header previous to the second multiplexing extension header.

Optionally, when the at least two multiplexing packets are transmitted by using a same GTP-U tunnel, and the at least two multiplexing packets pertain to a same UE, the processor 14 may set a fifth Length field, a fifth TEID field, and a second Next Extension Header Type field in a first multiplexing extension header, or set a fifth Length field, a fifth TEID field, and a second Next Extension Header Type field in a first multiplexing extension header, and set a seventh Length field and a fourth Next Extension Header Type field in a third multiplexing extension header.

Further, the processor 14 may further set a first T field in the first multiplexing extension header, and further set a third T field in the third multiplexing extension header. The first T field is used to indicate whether a GTP-U tunnel used for a multiplexing packet corresponding to the first multiplexing extension header is the same as a GTP-U tunnel used for a multiplexing packet corresponding to a multiplexing extension header previous to the first multiplexing extension header. The third T field is used to indicate whether a GTP-U tunnel used for a multiplexing packet corresponding to the third multiplexing extension header is the same as a GTP-U tunnel used for a multiplexing packet corresponding to a multiplexing extension header previous to the second multiplexing extension header.

Optionally, when the at least two multiplexing packets are transmitted by using a same GTP-U tunnel, and the at least two multiplexing packets pertain to a same UE, the processor 14 may pad each of the at least two multiplexing packets, so that sizes of the at least two padded multiplexing packets each are the set value; and set a sixth TEID field and a third Next Extension Header Type field in a second multiplexing extension header, or set a sixth TEID field and a third Next Extension Header Type field in a second multiplexing extension header, and set a fifth Next Extension Header Type field in a fourth multiplexing extension header.

Further, the processor 14 may further set a second T field in the second multiplexing extension header, and further set a fourth T field in the fourth multiplexing extension header. The second T field is used to indicate whether a GTP-U tunnel used for a multiplexing packet corresponding to the second multiplexing extension header is the same as a GTP-U tunnel used for a multiplexing packet corresponding to a multiplexing extension header previous to the second multiplexing extension header. The fourth T field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

The receiver is further configured to:
acquire the multiplexing policy from a mobility management entity MME/a policy control and charging rules function entity PCRF.

When the GTP-U header includes at least two multiplexing extension headers, and the multiplexing extension headers are in one-to-one correspondence with the multiplexing packets, there is still a Length field and a TEID field in the GTP-U header; however, the Length field is not padded with data indicating a length of an IP packet, and the TEID field is not padded with data indicating a GTP-U tunnel used for the IP packet.

When the GTP-U header includes at least one multiplexing extension header, the GTP-U header includes a first Next Extension Header Type field, the first Next Extension Header Type field is corresponding to the first multiplexing packet in the GTP-U packet, and the at least one multiplexing extension header is in one-to-one correspondence with a multiplexing packet, except the first multiplexing packet, in the GTP-U packet, the GTP-U header further includes a ninth Length field and a ninth TEID field, the ninth Length field is used to indicate a length of the first multiplexing packet in the GTP-U packet, and the ninth TEID field is used to indicate a GTP-U tunnel used for the first multiplexing packet.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 17

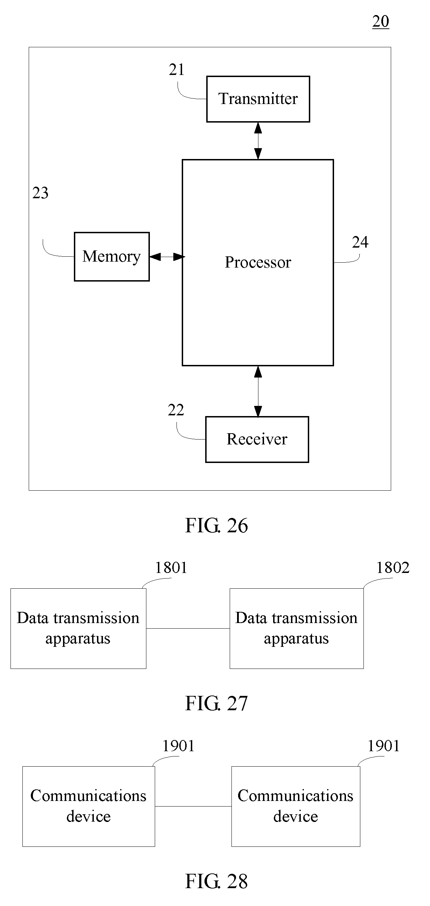

This embodiment of the present invention provides a data transmission apparatus, and the apparatus may be a GGSN, an SGSN, an S4-SGSN, a PGW, an SGW, an ePDG, an AP, a NodeB, or an eNB; or some of a GGSN, an SGSN, an S4-SGSN, a PGW, an SGW, an ePDG, an AP, a NodeB, and an eNB. Referring to FIG. 26, the apparatus includes a transmitter 21, a receiver 22, a memory 23, and a processor 24 (such as a CPU), and may be configured to execute the method in any embodiment of Embodiment 1 to Embodiment 9.

With reference to FIG. 26, the following makes a specific introduction to integral parts of the data transmission apparatus 20.

The memory 23 may be configured to store a software program and an application module. By running the software program and the application module that are stored in the memory 23, the processor 23 executes various functional applications of the data transmission apparatus 20 and performs data processing. The memory 23 may mainly include a program storage area and a data storage area, where an operating system, an application program required by at least one function, and the like may be stored in the program storage area, and data (such as an IP packet) created according to decapsulation processing may be stored in the data storage area. In addition, the memory 23 may include a high-speed RAM (Random Access Memory, random access memory), and may further include a non-volatile memory (non-volatile memory), such as at least one disk storage component, a flash memory component, or another volatile solid state storage component.

The receiver 22 may be configured to receive a GTP-U packet, where the GTP-U packet is sent by a GTP-U sending node, the GTP-U packet is obtained by encapsulating at least two multiplexing packets, and the at least two multiplexing packets are at least two IP packets determined according to a multiplexing policy.

In this embodiment, the multiplexing policy may include: the multiplexing packet is an IP packet whose size is less than or equal to a set value. During specific implementation, the size of the multiplexing packet is less than or equal to the set value and may be 128 bytes.

In addition to the size of the IP packet, the multiplexing policy may include a bearer identifier, a QCI, flow description information, and the like that are of the IP packet. After receiving the IP packet, the GTP-U node determines, according to at least one of conditions: a bearer to which the packet pertains, the QCI required by the packet, and information about a source address, a destination address, a source port, and a destination port that are in an IP header in the packet, whether the IP packet meets the multiplexing policy, and if the IP packet meets the multiplexing policy, performs the method in the present invention to perform data transmission of the IP packet that meets the multiplexing policy.

For example, if the multiplexing policy is "encapsulating a packet whose bearer identifier is 2, QCI is 3, and source address is 10.10.10.10", after receiving an IP packet, the GTP-U node determines whether the packet pertains to a bearer 2, whether a QCI required by the IP packet is 3, and whether a source address of the packet is 10.10.10.10, and if all the conditions are met, performs the manner in the present invention to perform data transmission.

When a GTP-U tunnel is being defined, a correspondence between a GTP-U tunnel and user information is established, where the correspondence includes a bearer identifier, a QCI, and flow description information that are of an IP packet, information about a source address, a destination address, a source port, and a destination port that are of the IP packet, and the like. Therefore, the foregoing bearer identifier, QCI, flow description information, and the like that are of the IP packet may be obtained in the following manner:

When encapsulating the multiplexing packet, the GTP-U sending node determines, according to a source address and a destination address of the multiplexing packet, a GTP-U tunnel used for the multiplexing packet, and obtains, according to the GTP-U tunnel used for the multiplexing packet, user information corresponding to the multiplexing packet.

In an actual application, the multiplexing policy may be corresponding to subscriber subscription information (such as a subscriber category) to which the IP packet pertains. A QCI of an IP packet is used as an example. For a subscribed gold subscriber, an IP packet whose QCI is 9 may be multiplexed, that is, an IP packet of relatively low importance may be a multiplexing packet; for a subscribed silver subscriber, an IP packet whose QCI ranges from 4 to 9 may be multiplexed, that is, most IP packets may be multiplexing packets; for a subscribed bronze subscriber, an IP packet whose QCI ranges from 1 to 9 may be multiplexed, that is, all IP packets may be multiplexing packets.

The transmitter 21 may be configured to send the at least two multiplexing packets.

The processor 24 is a control center of the data transmission apparatus 20, and connects parts of the entire data transmission apparatus 20 by using various interfaces and lines.

Specifically, by running or executing the software program and the application module that are stored in the memory 23, and invoking data stored in the memory 23, the processor 24 may decapsulate the GTP-U packet received by the receiver 22, to obtain the at least two multiplexing packets, and send the at least two multiplexing packets by using the transmitter 21.

In a manner of this embodiment, the processor 24 may decapsulate the GTP-U packet according to an IP header and a UDP header in the GTP-U packet to obtain at least two G-PDUs, where each G-PDU of the at least two G-PDUs includes one GTP-U header; and decapsulate the at least two G-PDUs according to the GTP-U headers in the at least two G-PDUs to obtain the at least two multiplexing packets.

Optionally, when the GTP-U header is a first GTP-U header, the processor 24 may determine, according to first multiplexing indication fields in the first GTP-U headers in the at least two G-PDUs, the multiplexing packets that need to be decapsulated, and decapsulate the at least two G-PDUs according to first Length fields, first TEID fields, and the first multiplexing indication fields that are in the first GTP-U headers in the at least two G-PDUs, to obtain the at least two multiplexing packets.

In this embodiment, the first GTP-U header includes the first Length field, the first TEID field, and the first multiplexing indication field, the first Length field is used to indicate a size of a multiplexing packet corresponding to the first GTP-U header, the first TEID field is used to indicate a GTP-U tunnel used for the multiplexing packet corresponding to the first GTP-U header, and the first multiplexing indication field is used to indicate whether there is another multiplexing packet that is in the GTP-U packet and follows the multiplexing packet corresponding to the first GTP-U header.

Further, the first multiplexing indication field is an unused field in the first GTP-U header or is carried in an extension header of the first GTP-U header.

Optionally, when the at least two multiplexing packets are transmitted by using a same GTP-U tunnel and the GTP-U header is a first GTP-U header, the processor 24 may determine, according to first multiplexing indication fields in the first GTP-U headers in the at least two G-PDUs, the multiplexing packets that need to be decapsulated, and decapsulate the at least two G-PDUs according to first Length fields, first TEID fields, and the first multiplexing indication fields that are in the first GTP-U headers in the at least two G-PDUs, to obtain the at least two multiplexing packets.

Alternatively, when the at least two multiplexing packets are transmitted by using a same GTP-U tunnel, the first GTP-U header of the GTP-U headers is a first GTP-U header, and a GTP-U header except the first GTP-U header is a second GTP-U header, the processor 24 may determine, according to a first multiplexing indication field in the first GTP-U header in the at least two G-PDUs and a second multiplexing indication field in the second GTP-U header in the at least two G-PDUs, the multiplexing packets that need to be decapsulated, and decapsulate the at least two G-PDUs according to a first Length field, a first TEID field, and the first multiplexing indication field that are in the first GTP-U header in the at least two G-PDUs and a second Length field and the second multiplexing indication field that are in the second GTP-U header in the at least two G-PDUs, to obtain the at least two multiplexing packets.

In this embodiment, the second GTP-U header includes the second Length field and the second multiplexing indication field, the second Length field is used to indicate a size of a multiplexing packet corresponding to the second GTP-U header, and the second multiplexing indication field is used to indicate whether there is another multiplexing packet that is in the GTP-U packet and follows the multiplexing packet corresponding to the second GTP-U header.

Further, the first multiplexing indication field is an unused field in the first GTP-U header or is carried in an extension header of the first GTP-U header, and the second multiplexing indication field is an unused field in the second GTP-U header or is carried in an extension header of the second GTP-U header.

Optionally, when sizes of the at least two multiplexing packets each are the set value and the GTP-U header is a first GTP-U header, the processor 24 may determine, according to first multiplexing indication fields in the first GTP-U headers in the at least two G-PDUs, the multiplexing packets that need to be decapsulated, and decapsulate the at least two G-PDUs according to first Length fields, first TEID fields, and the first multiplexing indication fields that are in the first GTP-U headers in the at least two G-PDUs, to obtain the at least two multiplexing packets.

Alternatively, when sizes of the at least two multiplexing packets each are the set value and the GTP-U header is a third GTP-U header, the processor 24 may determine, according to third multiplexing indication fields in the third GTP-U headers in the at least two G-PDUs, the multiplexing packets that need to be decapsulated, and decapsulate the at least two G-PDUs according to third TEID fields and the third multiplexing indication fields that are in the third GTP-U headers in the at least two G-PDUs, and a network configuration, to obtain the at least two multiplexing packets, where the network configuration is used to indicate a size of the set value.

Alternatively, when sizes of the at least two multiplexing packets each are the set value, the first GTP-U header of the GTP-U headers is a first GTP-U header, and a GTP-U header except the first GTP-U header is a third GTP-U header, the processor 24 may determine, according to a first multiplexing indication field in the first GTP-U header in the at least two G-PDUs and a third multiplexing indication field in the third GTP-U header in the at least two G-PDUs, the multiplexing packets that need to be decapsulated, and decapsulate the at least two G-PDUs according to a first Length field, a first TEID field, and the first multiplexing indication field that are in the first GTP-U header in the at least two G-PDUs and a third Length field and the third multiplexing indication field that are in the third GTP-U header in the at least two G-PDUs, to obtain the at least two multiplexing packets.

In this embodiment, the third GTP-U header includes the third TEID field and the third multiplexing indication field, the third TEID field is used to indicate a GTP-U tunnel used for a multiplexing packet corresponding to the third GTP-U header, and the third multiplexing indication field is used to indicate whether there is another multiplexing packet that is in the GTP-U packet and follows the multiplexing packet corresponding to the third GTP-U header.

Further, the first multiplexing indication field is an unused field in the first GTP-U header or is carried in an extension header of the first GTP-U header, and the third multiplexing indication field is an unused field in the third GTP-U header or is carried in an extension header of the third GTP-U header.

Optionally, when the at least two multiplexing packets are transmitted by using a same GTP-U tunnel, sizes of the at least two multiplexing packets each are the set value, and the GTP-U header is a third GTP-U header, the processor 24 may determine, according to third multiplexing indication fields in the third GTP-U headers in the at least two G-PDUs, the multiplexing packets that need to be decapsulated, and decapsulate the at least two G-PDUs according to third TEID fields and the third multiplexing indication fields that are in the third GTP-U headers in the at least two G-PDUs, to obtain the at least two multiplexing packets.

Alternatively, when the at least two multiplexing packets are transmitted by using a same GTP-U tunnel, sizes of the at least two multiplexing packets each are the set value, the first GTP-U header of the GTP-U headers is a third GTP-U header, and a GTP-U header except the first GTP-U header is a fourth GTP-U header, the processor 24 may determine, according to a third multiplexing indication field in the third GTP-U header in the at least two G-PDUs and a fourth multiplexing indication field in the fourth GTP-U header in the at least two G-PDUs, the multiplexing packets that need to be decapsulated, and decapsulate the at least two G-PDUs according to a third TEID field and the third multiplexing indication field that are in the third GTP-U header in the at least two G-PDUs and the fourth multiplexing indication field in the fourth GTP-U header in the at least two G-PDUs, to obtain the at least two multiplexing packets.

In this embodiment, the fourth GTP-U header includes the fourth multiplexing indication field, and the fourth multiplexing indication field is used to indicate whether there is another multiplexing packet that is in the GTP-U packet and follows a multiplexing packet corresponding to the third GTP-U header.

Further, the third multiplexing indication field is an unused field in the third GTP-U header or is carried in an extension header of the third GTP-U header, and the fourth multiplexing indication field is an unused field in the fourth GTP-U header or is carried in an extension header of the fourth GTP-U header.

Further, the third GTP-U header further includes a third Length field, the fourth GTP-U header further includes a fourth Length field, the third Length field is used to indicate a size of a padded multiplexing packet corresponding to the third GTP-U header, and the fourth Length field is used to indicate a size of a padded multiplexing packet corresponding to the fourth GTP-U header.

In another manner of this embodiment, the processor 24 may decapsulate the GTP-U packet according to an IP header and a UDP header in the GTP-U packet to obtain one G-PDU, and decapsulate the G-PDU according to a GTP-U header in the G-PDU to obtain the at least two multiplexing packets.

Optionally, when a multiplexing extension header is a first multiplexing extension header, the processor 24 may determine, according to a second Next Extension Header Type field in the first multiplexing extension header in the G-PDU, the multiplexing packets that need to be decapsulated, and decapsulate the G-PDU according to a fifth Length field, a fifth TEID field, and the second Next Extension Header Type field that are in the first multiplexing extension header in the G-PDU, to obtain the at least two multiplexing packets.

In this embodiment, the first multiplexing extension header includes the fifth Length field, the fifth TEID field, and the second Next Extension Header Type field, the fifth Length field is used to indicate a size of a multiplexing packet corresponding to the first multiplexing extension header, the fifth TEID field is used to indicate a GTP-U tunnel used for the multiplexing packet corresponding to the first multiplexing extension header, and the second Next Extension Header Type field is used to indicate whether there is another multiplexing extension header that is in the GTP-U packet and follows the first multiplexing extension header.

Further, the first multiplexing extension header further includes a first T field, and the first T field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

Optionally, when a size of one multiplexing packet is the set value and a multiplexing extension header is a first multiplexing extension header, the processor 24 may determine, according to a second Next Extension Header Type field in the first multiplexing extension header in the G-PDU, the multiplexing packets that need to be decapsulated, and decapsulate the G-PDU according to a fifth Length field, a fifth TEID field, and the second Next Extension Header Type field that are in the first multiplexing extension header in the G-PDU, to obtain the at least two multiplexing packets.

Alternatively, when a size of one multiplexing packet is the set value and a multiplexing extension header is a second multiplexing extension header, the processor 24 may determine, according to a third Next Extension Header Type field in the second multiplexing extension header in the G-PDU, the multiplexing packets that need to be decapsulated, and decapsulate the G-PDU according to a sixth TEID field and the third Next Extension Header Type field that are in the second multiplexing extension header in the G-PDU, and a network configuration, to obtain the at least two multiplexing packets, where the network configuration is used to indicate a size of the set value.

Alternatively, when a size of one multiplexing packet is the set value, the first multiplexing extension header of the multiplexing extension headers is a first multiplexing extension header, and a multiplexing extension header except the first multiplexing extension header is a second multiplexing extension header, the processor 24 may determine, according to a second Next Extension Header Type field in the first multiplexing extension header in the G-PDU and a third Next Extension Header Type field in the second multiplexing extension header in the G-PDU, the multiplexing packets that need to be decapsulated, and decapsulate the G-PDU according to a fifth Length field, a fifth TEID field, and the second Next Extension Header Type field that are in the first multiplexing extension header in the G-PDU and a sixth TEID field and the third Next Extension Header Type field that are in the second multiplexing extension header in the G-PDU, to obtain the at least two multiplexing packets.

In this embodiment, the second multiplexing extension header includes the sixth TEID field and the third Next Extension Header Type field, the sixth TEID field is used to indicate a GTP-U tunnel used for a multiplexing packet corresponding to the second multiplexing extension header, and the third Next Extension Header Type field is used to indicate whether there is another multiplexing extension header that is in the GTP-U packet and follows the second multiplexing extension header.

Further, the first multiplexing extension header further includes a first T field, the second multiplexing extension header further includes a second T field, the first T field is used to indicate whether a GTP-U tunnel used for a multiplexing packet corresponding to the first multiplexing extension header is the same as a GTP-U tunnel used for a multiplexing packet corresponding to a multiplexing extension header previous to the first multiplexing extension header, and the second T field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header.

Optionally, when one multiplexing packet is transmitted by using a same GTP-U tunnel, and a multiplexing extension header in the GTP-U header is a first multiplexing extension header, the processor 24 may determine, according to a second Next Extension Header Type field in the first multiplexing extension header in the G-PDU, the multiplexing packets that need to be decapsulated, and decapsulate the G-PDU according to a fifth Length field, a fifth TEID field, and the second Next Extension Header Type field that are in the first multiplexing extension header in the G-PDU, to obtain the at least two multiplexing packets.

Alternatively, when one multiplexing packet is transmitted by using a same GTP-U tunnel, the first multiplexing extension header of the multiplexing extension headers is a first multiplexing extension header, and a multiplexing extension header except the first multiplexing extension header is a third multiplexing extension header, the processor 24 may determine, according to a second Next Extension Header Type field in the first multiplexing extension header in the G-PDU and a fourth Next Extension Header Type field in the third multiplexing extension header in the G-PDU, the multiplexing packets that need to be decapsulated, and decapsulate the G-PDU according to a fifth Length field, a fifth TEID field, and the second Next Extension Header Type field that are in the first multiplexing extension header in the G-PDU and a seventh Length field and the fourth Next Extension Header Type field that are in the third multiplexing extension header in the G-PDU, to obtain the at least two multiplexing packets.

In this embodiment, the third multiplexing extension header includes the seventh Length field and the fourth Next Extension Header Type field, the seventh Length field is used to indicate a size of a multiplexing packet corresponding to the third multiplexing extension header, and the fourth Next Extension Header Type field is used to indicate whether there is another multiplexing extension header that is in the GTP-U packet and follows the third multiplexing extension header.

Further, the first multiplexing extension header further includes a first T field, the third multiplexing extension header further includes a third T field, the first T field is used to indicate whether a GTP-U tunnel used for a multiplexing packet corresponding to the first multiplexing extension header is the same as a GTP-U tunnel used for a multiplexing packet corresponding to a multiplexing extension header previous to the first multiplexing extension header, and the third T field is used to indicate whether a GTP-U tunnel used for the multiplexing packet corresponding to the third multiplexing extension header is the same as a GTP-U tunnel used for a multiplexing packet corresponding to a multiplexing extension header previous to the third multiplexing extension header.

Optionally, when the at least two multiplexing packets are transmitted by using a same GTP-U tunnel, a size of one multiplexing packet is the set value and a multiplexing extension header is a second multiplexing extension header, the processor 24 may determine, according to a third Next Extension Header Type field in the second multiplexing extension header in the G-PDU, the multiplexing packets that need to be decapsulated, and decapsulate the G-PDU according to a sixth TEID field and the third Next Extension Header Type field that are in the second multiplexing extension header in the G-PDU, to obtain the at least two multiplexing packets.

Alternatively, when the two multiplexing packets are transmitted by using a same GTP-U tunnel, a size of one multiplexing packet is the set value, the first multiplexing extension header of the multiplexing extension headers is a second multiplexing extension header, and a multiplexing extension header except the first multiplexing extension header is a fourth multiplexing extension header, the processor 24 may determine, according to a third Next Extension Header Type field in the second multiplexing extension header in the G-PDU and a fifth Next Extension Header Type field in the fourth multiplexing extension header in the G-PDU, the multiplexing packets that need to be decapsulated, and decapsulate the G-PDU according to a sixth TEID field and the third Next Extension Header Type field that are in the second multiplexing extension header in the G-PDU and the fifth Next Extension Header Type field in the fourth multiplexing extension header in the G-PDU, to obtain the at least two multiplexing packets.

In this embodiment, the fourth multiplexing extension header includes the fifth Next Extension Header Type field, and the fifth Next Extension Header Type field is used to indicate whether there is another multiplexing extension header that is in the GTP-U packet and follows the fourth multiplexing extension header.

Further, the second multiplexing extension header further includes a second T field, the fourth multiplexing extension header further includes a fourth T field, the second T field is used to indicate whether a GTP-U tunnel used for a multiplexing packet corresponding to the second multiplexing extension header is the same as a GTP-U tunnel used for a multiplexing packet corresponding to a multiplexing extension header previous to the second multiplexing extension header, and the fourth T field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

Further, the second multiplexing extension header further includes a sixth Length field, the fourth multiplexing extension header further includes an eighth Length field, the sixth Length field is used to indicate a size of a padded multiplexing packet corresponding to the second multiplexing extension header, and the eighth Length field is used to indicate a size of a padded multiplexing packet corresponding to the fourth multiplexing extension header.

When the GTP-U header includes at least two multiplexing extension headers, and the multiplexing extension headers are in one-to-one correspondence with the multiplexing packets, there is still a Length field and a TEID field in the GTP-U header; however, the Length field is not padded with data indicating a length of an IP packet, and the TEID field is not padded with data indicating a GTP-U tunnel used for the IP packet.

When the GTP-U header includes at least one multiplexing extension header, the GTP-U header includes a first Next Extension Header Type field, the first Next Extension Header Type field is corresponding to the first multiplexing packet in the GTP-U packet, and the at least one multiplexing extension header is in one-to-one correspondence with a multiplexing packet, except the first multiplexing packet, in the GTP-U packet, the GTP-U header further includes a ninth Length field and a ninth TEID field, the ninth Length field is used to indicate a length of the first multiplexing packet in the GTP-U packet, and the ninth TEID field is used to indicate a GTP-U tunnel used for the first multiplexing packet.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 18

This embodiment of the present invention provides a communications device. Referring to FIG. 27, the device includes an apparatus 1801 provided in Embodiment 10, Embodiment 11, Embodiment 12, or Embodiment 16 and an apparatus 1802 provided in Embodiment 13, Embodiment 14, Embodiment 15, or Embodiment 17.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

### Embodiment 19

This embodiment of the present invention provides a communications system. Referring to FIG. 28, the system includes at least two communications devices 1901 provided in Embodiment 18.

In this embodiment of the present invention, at least two IP packets determined according to a multiplexing policy are encapsulated into one GTP-U packet, and the GTP-U packet is sent. In a process of data transmission on a PRN, a GTP-U node forwards the GTP-U packet multiple times, and resources need to be consumed once each time when the forwarding is performed, so as to obtain one route from an IP header. For each GTP-U packet, resources consumed each time when the forwarding is performed are the same. Therefore, each time when the forwarding is performed, each IP packet of at least two IP packets encapsulated into one GTP-U packet consumes fewer resources than one IP packet encapsulated into one GTP-U packet in the prior art. In addition, one IP header and one UDP header are encapsulated for each GTP-U packet; therefore, a proportion, to an entire GTP-U packet, of each IP packet of at least two IP packets encapsulated into one GTP-U packet is higher than a proportion, to an entire GTP-U packet, of one IP packet encapsulated into one GTP-U packet in the prior art, so that network bandwidth utilization is improved, and transmission efficiency is improved.

It should be noted that when the data transmission apparatus provided in the foregoing embodiments performs data transmission, merely division of the foregoing functional modules is used as an example for description. In an actual application, the functions may be allocated to different functional modules for implementation as required. That is, an internal structure of the apparatus is divided into different functional modules to implement all or a part of the functions described above. In addition, the data transmission apparatus and the data transmission method embodiments that are provided in the foregoing embodiments pertain to a same concept. For a specific implementation process of the data transmission apparatus, refer to the method embodiments, and details are not described herein again.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The sequence numbers of the foregoing embodiments of the present invention are merely for illustrative purposes, and are not intended to indicate priorities of the embodiments.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A data transmission method, wherein the method comprises:
receiving at least two Internet Protocol IP packets;
determining at least two multiplexing packets from the at least two IP packets according to a multiplexing policy, wherein the multiplexing policy comprises at least one of the following conditions: the multiplexing packets are IP packets whose sizes are less than or equal to a set value, bearer identifiers of the multiplexing packets are the same, quality of service class identifiers QCIs of the multiplexing packets are the same, and flow description information of the multiplexing packets is the same;
encapsulating the at least two multiplexing packets into one general packet radio service Tunneling Protocol-User plane GTP-U packet; and
sending the GTP-U packet.

2. The method according to claim 1, wherein the encapsulating the at least two multiplexing packets into one GTP-U packet comprises:
encapsulating a GTP-U header for each of the at least two multiplexing packets to obtain at least two general packet radio service Tunneling Protocol packet data units G-PDUs; and
encapsulating one IP header and one User Datagram Protocol UDP header for the at least two G-PDUs to obtain the GTP-U packet.

3. The method according to claim 2, wherein the GTP-U header is a first GTP-U header, and the first GTP-U header comprises a first length field, a first tunnel identifier field, and a first multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header; and
the first multiplexing indication field is used to indicate whether there is another multiplexing packet that is in the GTP-U packet and follows the multiplexing packet corresponding to the first GTP-U header.

4. The method according to claim 3, wherein the first multiplexing indication field is an unused field in the first GTP-U header or is carried in an extension header of the first GTP-U header.

5. The method according to claim 2, wherein when the at least two multiplexing packets are transmitted by using a same GTP-U tunnel, the GTP-U header is a first GTP-U header, or the first one GTP-U header of the GTP-U headers is a first GTP-U header, and a GTP-U header except the first one GTP-U header is a second GTP-U header;
the first GTP-U header comprises a first length field, a first tunnel identifier field, and a first multiplexing indication field, and the second GTP-U header comprises a second length field and a second multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the second length field is used to indicate a size of a multiplexing packet corresponding to the second GTP-U header; and
the second multiplexing indication field is used to indicate whether there is another multiplexing packet that is in the GTP-U packet and follows the multiplexing packet corresponding to the second GTP-U header.

6. The method according to claim 5, wherein the first multiplexing indication field is an unused field in the first GTP-U header or is carried in an extension header of the first GTP-U header, and the second multiplexing indication field is an unused field in the second GTP-U header or is carried in an extension header of the second GTP-U header.

7. The method according to claim 2, wherein before the encapsulating a GTP-U header for each of the at least two multiplexing packets, the method further comprises:
padding each of the at least two multiplexing packets, so that sizes of the at least two padded multiplexing packets each are the set value; and
the encapsulating a GTP-U header for each of the at least two multiplexing packets comprises:
encapsulating a first GTP-U header for each of the at least two padded multiplexing packets; or
encapsulating a third GTP-U header for each of the at least two padded multiplexing packets; or
encapsulating a first GTP-U header for the first multiplexing packet of the at least two padded multiplexing packets, and encapsulating a third GTP-U header for a multiplexing packet, except the first multiplexing packet, in the at least two padded multiplexing packets; wherein
the first GTP-U header comprises a first length field, a first tunnel identifier field, and a first multiplexing indication field, and the third GTP-U header comprises a third tunnel identifier field and a third multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the third tunnel identifier field is used to indicate a GTP-U tunnel used for a multiplexing packet corresponding to the third GTP-U header; and
the third multiplexing indication field is used to indicate whether there is another multiplexing packet that is in the GTP-U packet and follows the multiplexing packet corresponding to the third GTP-U header.

8. The method according to claim 7, wherein the first multiplexing indication field is an unused field in the first GTP-U header or is carried in an extension header of the first GTP-U header, and the third multiplexing indication field is an unused field in the third GTP-U header or is carried in an extension header of the third GTP-U header.

9. The method according to claim 2, wherein when the at least two multiplexing packets are transmitted by using a same GTP-U tunnel, before the encapsulating a GTP-U header for each of the at least two multiplexing packets, the method further comprises:
padding each of the at least two multiplexing packets, so that sizes of the at least two padded multiplexing packets each are the set value; and
the encapsulating a GTP-U header for each of the at least two multiplexing packets comprises:
encapsulating a third GTP-U header for each of the at least two padded multiplexing packets; or
encapsulating a third GTP-U header for the first multiplexing packet of the at least two padded multiplexing packets, and encapsulating a fourth GTP-U header for a multiplexing packet, except the first multiplexing packet, in the at least two padded multiplexing packets; wherein
the third GTP-U header comprises a third tunnel identifier field and a third multiplexing indication field, and the fourth GTP-U header comprises a fourth multiplexing indication field;
the third tunnel identifier field is used to indicate a GTP-U tunnel used for a multiplexing packet corresponding to the third GTP-U header;
the third multiplexing indication field is used to indicate whether there is another multiplexing packet that is in the GTP-U packet and follows the multiplexing packet corresponding to the third GTP-U header; and
the fourth multiplexing indication field is used to indicate whether there is another multiplexing packet that is in the GTP-U packet and follows a multiplexing packet corresponding to the fourth GTP-U header.

10. The method according to claim 9, wherein the third multiplexing indication field is an unused field in the third GTP-U header or is carried in an extension header of the third GTP-U header, and the fourth multiplexing indication field is an unused field in the fourth GTP-U header or is carried in an extension header of the fourth GTP-U header.

11. The method according to claim 9 or 10, wherein the third GTP-U header further comprises a third length field, the fourth GTP-U header further comprises a fourth length field, the third length field is used to indicate a size of a padded multiplexing packet corresponding to the third GTP-U header, and the fourth length field is used to indicate a size of a padded multiplexing packet corresponding to the fourth GTP-U header.

12. The method according to claim 1, wherein the encapsulating the at least two multiplexing packets into one GTP-U packet comprises:
encapsulating one GTP-U header for the at least two multiplexing packets, so that the at least two encapsulated multiplexing packets are one G-PDU; wherein
the GTP-U header comprises at least two multiplexing extension headers, and the at least two multiplexing extension headers are in one-to-one correspondence with the at least two multiplexing packets; or the GTP-U header comprises at least one multiplexing extension header, the GTP-U header comprises a first next extension header type field, the first next extension header type field is corresponding to the first multiplexing packet in the GTP-U packet, the at least one multiplexing extension header is in one-to-one correspondence with a multiplexing packet, except the first multiplexing packet, in the GTP-U packet, and the first next extension header type field is used to indicate whether the first extension header in the GTP-U header in the GTP-U packet is a multiplexing extension header; and
encapsulating an IP header and a UDP header for the G-PDU to obtain the GTP-U packet.

13. The method according to claim 12, wherein the multiplexing extension header is a first multiplexing extension header, and the first multiplexing extension header comprises a fifth length field, a fifth tunnel identifier field, and a second next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header; and
the second next extension header type field is used to indicate whether there is another multiplexing extension header that is in the GTP-U packet and follows the first multiplexing extension header.

14. The method according to claim 13, wherein the first multiplexing extension header further comprises a first tunnel identifier flag field, and the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

15. The method according to claim 12, wherein before the encapsulating one GTP-U header for the at least two multiplexing packets, the method further comprises:
padding each of the at least two multiplexing packets, so that sizes of the at least two padded multiplexing packets each are the set value; and
the encapsulating one GTP-U header for the at least two multiplexing packets comprises:
encapsulating one GTP-U header for the at least two padded multiplexing packets, wherein a multiplexing extension header in the GTP-U header is a first multiplexing extension header; or
a multiplexing extension header in the GTP-U header is a second multiplexing extension header; or
the first one multiplexing extension header in the GTP-U header is a first multiplexing extension header, and another multiplexing extension header, except the first one multiplexing extension header, in the GTP-U header is a second multiplexing extension header; wherein
the first multiplexing extension header comprises a fifth tunnel identifier field, a fifth length field, and a second next extension header type field;
the second multiplexing extension header comprises a sixth tunnel identifier field and a third next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the sixth tunnel identifier field is used to indicate a GTP-U tunnel used for a multiplexing packet corresponding to the second multiplexing extension header; and
the third next extension header type field is used to indicate whether there is another multiplexing extension header that is in the GTP-U packet and follows the second multiplexing extension header.

16. The method according to claim 15, wherein the first multiplexing extension header further comprises a first tunnel identifier flag field, the second multiplexing extension header further comprises a second tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header.

17. The method according to claim 12, wherein when the at least two multiplexing packets are transmitted by using a same GTP-U tunnel, the multiplexing extension headers in the GTP-U header comprise a first multiplexing extension header and a third multiplexing extension header, the first multiplexing extension header comprises a fifth length field, a fifth tunnel identifier field, and a second next extension header type field, and the third multiplexing extension header comprises a seventh length field and a fourth next extension header type field; wherein
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the seventh length field is used to indicate a size of a multiplexing packet corresponding to the third multiplexing extension header; and
the fourth next extension header type field is used to indicate whether there is another multiplexing extension header that is in the GTP-U packet and follows the third multiplexing extension header.

18. The method according to claim 17, wherein the first multiplexing extension header further comprises a first tunnel identifier flag field, the third multiplexing extension header further comprises a third tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the third tunnel identifier flag field is used to indicate whether a GTP-U tunnel used for the multiplexing packet corresponding to the third multiplexing extension header is the same as a GTP-U tunnel used for a multiplexing packet corresponding to a multiplexing extension header previous to the third multiplexing extension header.

19. The method according to claim 12, wherein when the at least two multiplexing packets are transmitted by using a same GTP-U tunnel, before the encapsulating one GTP-U header for the at least two multiplexing packets, the method further comprises:
padding each of the at least two multiplexing packets, so that sizes of the at least two padded multiplexing packets each are the set value; and
the encapsulating one GTP-U header for the at least two multiplexing packets comprises:
encapsulating one GTP-U header for the at least two padded multiplexing packets, wherein a multiplexing extension header in the GTP-U header is a second multiplexing extension header; or
the first one multiplexing extension header in the GTP-U header is a second multiplexing extension header, and the multiplexing extension header except the first one multiplexing extension header is a fourth multiplexing extension header; wherein
the second multiplexing extension header comprises a sixth tunnel identifier field and a third next extension header type field, and the fourth multiplexing extension header comprises a fifth next extension header type field;
the sixth tunnel identifier field is used to indicate a GTP-U tunnel used for a multiplexing packet corresponding to the second multiplexing extension header;
the third next extension header type field is used to indicate whether there is another multiplexing extension header that is in the GTP-U packet and follows the second multiplexing extension header; and
the fifth next extension header type field is used to indicate whether there is another multiplexing extension header that is in the GTP-U packet and follows the fourth multiplexing extension header.

20. The method according to claim 19, wherein the second multiplexing extension header further comprises a second tunnel identifier flag field, the fourth multiplexing extension header further comprises a fourth tunnel identifier flag field, the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header, and the fourth tunnel identifier flag field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

21. The method according to claim 19 or 20, wherein the second multiplexing extension header further comprises a sixth length field, the fourth multiplexing extension header further comprises an eighth length field, the sixth length field is used to indicate a size of a padded multiplexing packet corresponding to the second multiplexing extension header, and the eighth length field is used to indicate a size of a padded multiplexing packet corresponding to the fourth multiplexing extension header.

22. The method according to any one of claims 12 to 21, wherein the GTP-U header further comprises a ninth length field and a ninth tunnel identifier field, the ninth length field is used to indicate a length of the first multiplexing packet in the GTP-U packet, and the ninth tunnel identifier field is used to indicate a GTP-U tunnel used for the first multiplexing packet.

23. The method according to any one of claims 1 to 22, wherein the method further comprises:
acquiring the multiplexing policy from a mobility management entity MME/a policy control and charging rules function entity PCRF.

24. A data transmission method, wherein the method comprises:
receiving a general packet radio service Tunneling Protocol-User plane GTP-U packet, wherein the GTP-U packet is obtained by encapsulating at least two multiplexing packets, the at least two multiplexing packets are at least two Internet Protocol IP packets determined according to a multiplexing policy, and the multiplexing policy comprises at least one of the following conditions: the multiplexing packets are IP packets whose sizes are less than or equal to a set value, bearer identifiers of the multiplexing packets are the same, quality of service class identifiers QCIs of the multiplexing packets are the same, and flow description information of the multiplexing packets is the same;
decapsulating the GTP-U packet to obtain the at least two multiplexing packets; and
sending the at least two multiplexing packets.

25. The method according to claim 24, wherein the decapsulating the GTP-U packet to obtain the at least two multiplexing packets comprises:
decapsulating the GTP-U packet according to an IP header and a User Datagram Protocol UDP header in the GTP-U packet to obtain at least two general packet radio service Tunneling Protocol packet data units G-PDUs, wherein each G-PDU of the at least two G-PDUs comprises one GTP-U header; and
decapsulating the at least two G-PDUs according to the GTP-U headers in the at least two G-PDUs to obtain the at least two multiplexing packets.

26. The method according to claim 25, wherein the GTP-U header is a first GTP-U header, and the first GTP-U header comprises a first length field, a first tunnel identifier field, and a first multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header; and
the decapsulating the at least two G-PDUs according to the GTP-U headers in the at least two G-PDUs to obtain the at least two multiplexing packets comprises:
determining, according to the first multiplexing indication fields in the first GTP-U headers in the at least two G-PDUs, the multiplexing packets that need to be decapsulated, and decapsulating the at least two G-PDUs according to the first length fields, the first tunnel identifier fields, and the first multiplexing indication fields that are in the first GTP-U headers in the at least two G-PDUs, to obtain the at least two multiplexing packets.

27. The method according to claim 26, wherein the first multiplexing indication field is an unused field in the first GTP-U header or is carried in an extension header of the first GTP-U header.

28. The method according to claim 25, wherein when the at least two multiplexing packets are transmitted by using a same GTP-U tunnel and the GTP-U header is a first GTP-U header, the decapsulating the at least two G-PDUs according to the GTP-U headers in the at least two G-PDUs to obtain the at least two multiplexing packets comprises:
determining, according to first multiplexing indication fields in the first GTP-U headers in the at least two G-PDUs, the multiplexing packets that need to be decapsulated, and decapsulating the at least two G-PDUs according to first length fields, first tunnel identifier fields, and the first multiplexing indication fields that are in the first GTP-U headers in the at least two G-PDUs, to obtain the at least two multiplexing packets; or
when the at least two multiplexing packets are transmitted by using a same GTP-U tunnel, the first one GTP-U header of the GTP-U headers is a first GTP-U header, and the GTP-U header except the first one GTP-U header is a second GTP-U header, the decapsulating the at least two G-PDUs according to the GTP-U headers in the at least two G-PDUs to obtain the at least two multiplexing packets comprises:
determining, according to a first multiplexing indication field in the first GTP-U header in the at least two G-PDUs and a second multiplexing indication field in the second GTP-U header in the at least two G-PDUs, the multiplexing packets that need to be decapsulated, and decapsulating the at least two G-PDUs according to a first length field, a first tunnel identifier field, and the first multiplexing indication field that are in the first GTP-U header in the at least two G-PDUs and a second length field and the second multiplexing indication field that are in the second GTP-U header in the at least two G-PDUs, to obtain the at least two multiplexing packets; wherein
the first GTP-U header comprises the first length field, the first tunnel identifier field, and the first multiplexing indication field, and the second GTP-U header comprises the second length field and the second multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the second length field is used to indicate a size of a multiplexing packet corresponding to the second GTP-U header; and
the second multiplexing indication field is used to indicate whether there is another multiplexing packet that is in the GTP-U packet and follows the multiplexing packet corresponding to the second GTP-U header.

29. The method according to claim 28, wherein the first multiplexing indication field is an unused field in the first GTP-U header or is carried in an extension header of the first GTP-U header, and the second multiplexing indication field is an unused field in the second GTP-U header or is carried in an extension header of the second GTP-U header.

30. The method according to claim 25, wherein when sizes of the at least two multiplexing packets each are the set value and the GTP-U header is a first GTP-U header, the decapsulating the at least two G-PDUs according to the GTP-U headers in the at least two G-PDUs to obtain the at least two multiplexing packets comprises:
determining, according to first multiplexing indication fields in the first GTP-U headers in the at least two G-PDUs, the multiplexing packets that need to be decapsulated, and decapsulating the at least two G-PDUs according to first length fields, first tunnel identifier fields, and the first multiplexing indication fields that are in the first GTP-U headers in the at least two G-PDUs, to obtain the at least two multiplexing packets; or
when sizes of the at least two multiplexing packets each are the set value and the GTP-U header is a third GTP-U header, the decapsulating the at least two G-PDUs according to the GTP-U headers in the at least two G-PDUs to obtain the at least two multiplexing packets comprises:
determining, according to third multiplexing indication fields in the third GTP-U headers in the at least two G-PDUs, the multiplexing packets that need to be decapsulated, and decapsulating the at least two G-PDUs according to third tunnel identifier fields and the third multiplexing indication fields that are in the third GTP-U headers in the at least two G-PDUs, and a network configuration, to obtain the at least two multiplexing packets, wherein the network configuration is used to indicate a size of the set value; or
when sizes of the at least two multiplexing packets each are the set value, the first one GTP-U header of the GTP-U headers is a first GTP-U header, and the GTP-U header except the first one GTP-U header is a third GTP-U header, the decapsulating the at least two G-PDUs according to the GTP-U headers in the at least two G-PDUs to obtain the at least two multiplexing packets comprises:
determining, according to a first multiplexing indication field in the first GTP-U header in the at least two G-PDUs and a third multiplexing indication field in the third GTP-U header in the at least two G-PDUs, the multiplexing packets that need to be decapsulated, and decapsulating the at least two G-PDUs according to a first length field, a first tunnel identifier field, and the first multiplexing indication field that are in the first GTP-U header in the at least two G-PDUs and a second length field and the second multiplexing indication field that are in the second GTP-U header in the at least two G-PDUs, to obtain the at least two multiplexing packets; wherein
the first GTP-U header comprises the first length field, the first tunnel identifier field, and the first multiplexing indication field, and the third GTP-U header comprises the third tunnel identifier field and the third multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the third tunnel identifier field is used to indicate a GTP-U tunnel used for a multiplexing packet corresponding to the third GTP-U header; and
the third multiplexing indication field is used to indicate whether there is another multiplexing packet that is in the GTP-U packet and follows the multiplexing packet corresponding to the third GTP-U header.

31. The method according to claim 30, wherein the first multiplexing indication field is an unused field in the first GTP-U header or is carried in an extension header of the first GTP-U header, and the third multiplexing indication field is an unused field in the third GTP-U header or is carried in an extension header of the third GTP-U header.

32. The method according to claim 25, wherein when the at least two multiplexing packets are transmitted by using a same GTP-U tunnel, sizes of the at least two multiplexing packets each are the set value, and the GTP-U header is a third GTP-U header, the decapsulating the at least two G-PDUs according to the GTP-U headers in the at least two G-PDUs to obtain the at least two multiplexing packets comprises:
determining, according to third multiplexing indication fields in the third GTP-U headers in the at least two G-PDUs, the multiplexing packets that need to be decapsulated, and decapsulating the at least two G-PDUs according to third tunnel identifier fields and the third multiplexing indication fields that are in the third GTP-U headers in the at least two G-PDUs, to obtain the at least two multiplexing packets; or
when the at least two multiplexing packets are transmitted by using a same GTP-U tunnel, sizes of the at least two multiplexing packets each are the set value, the first one GTP-U header of the GTP-U headers is a third GTP-U header, and the GTP-U header except the first one GTP-U header is a fourth GTP-U header, the decapsulating the at least two G-PDUs according to the GTP-U headers in the at least two G-PDUs to obtain the at least two multiplexing packets comprises:
determining, according to a third multiplexing indication field in the third GTP-U header in the at least two G-PDUs and a fourth multiplexing indication field in the fourth GTP-U header in the at least two G-PDUs, the multiplexing packets that need to be decapsulated, and decapsulating the at least two G-PDUs according to a third tunnel identifier field and the third multiplexing indication field that are in the third GTP-U header in the at least two G-PDUs and the fourth multiplexing indication field in the fourth GTP-U header in the at least two G-PDUs, to obtain the at least two multiplexing packets; wherein
the third GTP-U header comprises the third tunnel identifier field and the third multiplexing indication field, and the fourth GTP-U header comprises the fourth multiplexing indication field;
the third tunnel identifier field is used to indicate a GTP-U tunnel used for a multiplexing packet corresponding to the third GTP-U header;
the third multiplexing indication field is used to indicate whether there is another multiplexing packet that is in the GTP-U packet and follows the multiplexing packet corresponding to the third GTP-U header; and
the fourth multiplexing indication field is used to indicate whether there is another multiplexing packet that is in the GTP-U packet and follows a multiplexing packet corresponding to the fourth GTP-U header.

33. The method according to claim 32, wherein the third multiplexing indication field is an unused field in the third GTP-U header or is carried in an extension header of the third GTP-U header, and the fourth multiplexing indication field is an unused field in the fourth GTP-U header or is carried in an extension header of the fourth GTP-U header.

34. The method according to claim 32 or 33, wherein the third GTP-U header further comprises a third length field, the fourth GTP-U header further comprises a fourth length field, the third length field is used to indicate a size of the multiplexing packet corresponding to the third GTP-U header, and the fourth length field is used to indicate a size of the multiplexing packet corresponding to the fourth GTP-U header.

35. The method according to claim 24, wherein the decapsulating the GTP-U packet to obtain the at least two multiplexing packets comprises:
decapsulating the GTP-U packet according to an IP header and a UDP header in the GTP-U packet to obtain one G-PDU, wherein a GTP-U header in the G-PDU comprises at least two multiplexing extension headers, and the at least two multiplexing extension headers are in one-to-one correspondence to the at least two multiplexing packets; or the GTP-U header comprises at least one multiplexing extension header and a first next extension header type field, the first next extension header type field is corresponding to the first multiplexing packet in the GTP-U packet, the at least one multiplexing extension header is in one-to-one correspondence with a multiplexing packet, except the first one multiplexing packet, in the GTP-U packet, and the first next extension header type field is used to indicate whether the first extension header in the GTP-U header in the GTP-U packet is a multiplexing extension header; and
decapsulating the G-PDU according to the GTP-U header in the G-PDU to obtain the at least two multiplexing packets.

36. The method according to claim 35, wherein the multiplexing extension header is a first multiplexing extension header, and the first multiplexing extension header comprises a fifth length field, a fifth tunnel identifier field, and a second next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header; and
the decapsulating the G-PDU according to the GTP-U header in the G-PDU to obtain the at least two multiplexing packets comprises:
determining, according to the second next extension header type field in the first multiplexing extension header in the G-PDU, the multiplexing packets that need to be decapsulated, and decapsulating the G-PDU according to the fifth length field, the fifth tunnel identifier field, and the second next extension header type field that are in the first multiplexing extension header in the G-PDU, to obtain the at least two multiplexing packets.

37. The method according to claim 36, wherein the first multiplexing extension header further comprises a first tunnel identifier flag field, and the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

38. The method according to claim 35, wherein when a size of the multiplexing packet is the set value and the multiplexing extension header is a first multiplexing extension header, the decapsulating the G-PDU according to the GTP-U header in the G-PDU to obtain the at least two multiplexing packets comprises:
determining, according to a second next extension header type field in the first multiplexing extension header in the G-PDU, the multiplexing packets that need to be decapsulated, and decapsulating the G-PDU according to a fifth length field, a fifth tunnel identifier field, and the second next extension header type field that are in the first multiplexing extension header in the G-PDU, to obtain the at least two multiplexing packets; or
when a size of the multiplexing packet is the set value and the multiplexing extension header is a second multiplexing extension header, the decapsulating the G-PDU according to the GTP-U header in the G-PDU to obtain the at least two multiplexing packets comprises:
determining, according to a third next extension header type field in the second multiplexing extension header in the G-PDU, the multiplexing packets that need to be decapsulated, and decapsulating the G-PDU according to a sixth tunnel identifier field and the third next extension header type field that are in the second multiplexing extension header in the G-PDU, and a network configuration, to obtain the at least two multiplexing packets, wherein the network configuration is used to indicate a size of the set value; or
when a size of the multiplexing packet is the set value, the first one multiplexing extension header of the multiplexing extension headers is a first multiplexing extension header, and the multiplexing extension header except the first one multiplexing extension header is a second multiplexing extension header, the decapsulating the G-PDU according to the GTP-U header in the G-PDU to obtain the at least two multiplexing packets comprises:
determining, according to a second next extension header type field in the first multiplexing extension header in the G-PDU and a third next extension header type field in the second multiplexing extension header in the G-PDU, the multiplexing packets that need to be decapsulated, and decapsulating the G-PDU according to a fifth length field, a fifth tunnel identifier field, and the second next extension header type field that are in the first multiplexing extension header in the G-PDU and a sixth tunnel identifier field and the third next extension header type field that are in the second multiplexing extension header in the G-PDU, to obtain the at least two multiplexing packets; wherein
the first multiplexing extension header comprises the fifth tunnel identifier field, the fifth length field, and the second next extension header type field;
the second multiplexing extension header comprises the sixth tunnel identifier field and the third next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the sixth tunnel identifier field is used to indicate a GTP-U tunnel used for a multiplexing packet corresponding to the second multiplexing extension header; and
the third next extension header type field is used to indicate whether there is another multiplexing extension header that is in the GTP-U packet and follows the second multiplexing extension header.

39. The method according to claim 38, wherein the first multiplexing extension header further comprises a first tunnel identifier flag field, the second multiplexing extension header further comprises a second tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header.

40. The method according to claim 35, wherein when the multiplexing packet is transmitted by using a same GTP-U tunnel and the multiplexing extension header in the GTP-U header is a first multiplexing extension header, the decapsulating the G-PDU according to the GTP-U header in the G-PDU to obtain the at least two multiplexing packets comprises:
determining, according to a second next extension header type field in the first multiplexing extension header in the G-PDU, the multiplexing packets that need to be decapsulated, and decapsulating the G-PDU according to a fifth length field, a fifth tunnel identifier field, and the second next extension header type field that are in the first multiplexing extension header in the G-PDU, to obtain the at least two multiplexing packets; or
when the multiplexing packet is transmitted by using a same GTP-U tunnel, the first one multiplexing extension header of the multiplexing extension headers is a first multiplexing extension header, and the multiplexing extension header except the first one multiplexing extension header is a third multiplexing extension header, the decapsulating the G-PDU according to the GTP-U header in the G-PDU to obtain the at least two multiplexing packets comprises:
determining, according to a second next extension header type field in the first multiplexing extension header in the G-PDU and a fourth next extension header type field in the third multiplexing extension header in the G-PDU, the multiplexing packets that need to be decapsulated, and decapsulating the G-PDU according to a fifth length field, a fifth tunnel identifier field, and the second next extension header type field that are in the first multiplexing extension header in the G-PDU and a seventh length field and the fourth next extension header type field that are in the third multiplexing extension header in the G-PDU, to obtain the at least two multiplexing packets; wherein
the first multiplexing extension header comprises the fifth length field, the fifth tunnel identifier field, and the second next extension header type field, and the third multiplexing extension header comprises the seventh length field and the fourth next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the seventh length field is used to indicate a size of a multiplexing packet corresponding to the third multiplexing extension header; and
the fourth next extension header type field is used to indicate whether there is another multiplexing extension header that is in the GTP-U packet and follows the third multiplexing extension header.

41. The method according to claim 40, wherein the first multiplexing extension header further comprises a first tunnel identifier flag field, the third multiplexing extension header further comprises a third tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the third tunnel identifier flag field is used to indicate whether a GTP-U tunnel used for the multiplexing packet corresponding to the third multiplexing extension header is the same as a GTP-U tunnel used for a multiplexing packet corresponding to a multiplexing extension header previous to the third multiplexing extension header.

42. The method according to claim 35, wherein when the at least two multiplexing packets are transmitted by using a same GTP-U tunnel, a size of the multiplexing packet is the set value, and the multiplexing extension header is a second multiplexing extension header, the decapsulating the G-PDU according to the GTP-U header in the G-PDU to obtain the at least two multiplexing packets comprises:
determining, according to a third next extension header type field in the second multiplexing extension header in the G-PDU, the multiplexing packets that need to be decapsulated, and decapsulating the G-PDU according to a sixth tunnel identifier field and the third next extension header type field that are in the second multiplexing extension header in the G-PDU, to obtain the at least two multiplexing packets; or
when the at least two multiplexing packets are transmitted by using a same GTP-U tunnel, a size of the multiplexing packet is the set value, the first one multiplexing extension header of the multiplexing extension headers is a second multiplexing extension header, and the multiplexing extension header except the first one multiplexing extension header is a fourth multiplexing extension header, the decapsulating the G-PDU according to the GTP-U header in the G-PDU to obtain the at least two multiplexing packets comprises:
determining, according to a third next extension header type field in the second multiplexing extension header in the G-PDU and a fifth next extension header type field in the fourth multiplexing extension header in the G-PDU, the multiplexing packets that need to be decapsulated, and decapsulating the G-PDU according to a sixth tunnel identifier field and the third next extension header type field that are in the second multiplexing extension header in the G-PDU, the fifth next extension header type field in the fourth multiplexing extension header in the G-PDU, and a network configuration, to obtain the at least two multiplexing packets; wherein
the second multiplexing extension header comprises the sixth tunnel identifier field and the third next extension header type field, and the fourth multiplexing extension header comprises the fifth next extension header type field;
the sixth tunnel identifier field is used to indicate a GTP-U tunnel used for a multiplexing packet corresponding to the second multiplexing extension header;
the third next extension header type field is used to indicate whether there is another multiplexing extension header that is in the GTP-U packet and follows the second multiplexing extension header; and
the fifth next extension header type field is used to indicate whether there is another multiplexing extension header that is in the GTP-U packet and follows the fourth multiplexing extension header.

43. The method according to claim 42, wherein the second multiplexing extension header further comprises a second tunnel identifier flag field, the fourth multiplexing extension header further comprises a fourth tunnel identifier flag field, the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header, and the fourth tunnel identifier flag field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

44. The method according to claim 42 or 43, wherein the second multiplexing extension header further comprises a sixth length field, the fourth multiplexing extension header further comprises an eighth length field, the sixth length field is used to indicate a size of a padded multiplexing packet corresponding to the second multiplexing extension header, and the eighth length field is used to indicate a size of a padded multiplexing packet corresponding to the fourth multiplexing extension header.

45. The method according to any one of claims 35 to 44, wherein the GTP-U header further comprises a ninth length field and a ninth tunnel identifier field, the ninth length field is used to indicate a length of the first multiplexing packet in the GTP-U packet, and the ninth tunnel identifier field is used to indicate a GTP-U tunnel used for the first multiplexing packet.

46. The method according to any one of claims 24 to 45, wherein the multiplexing policy is acquired from a mobility management entity MME/a policy control and charging rules function entity PCRF.

47. A data transmission apparatus, wherein the apparatus comprises:
a receiving module, configured to receive at least two Internet Protocol IP packets;
a determining module, configured to determine, according to a multiplexing policy, at least two multiplexing packets from the at least two IP packets received by the receiving module, wherein the multiplexing policy comprises at least one of the following conditions: the multiplexing packets are IP packets whose sizes are less than or equal to a set value, bearer identifiers of the multiplexing packets are the same, quality of service class identifiers QCIs of the multiplexing packets are the same, and flow description information of the multiplexing packets is the same;
an encapsulating module, configured to encapsulate the at least two multiplexing packets into one general packet radio service Tunneling Protocol-User plane GTP-U packet; and
a sending module, configured to send the GTP-U packet obtained by the encapsulating module.

48. The apparatus according to claim 47, wherein the encapsulating module comprises:
a first encapsulating unit, configured to encapsulate a GTP-U header for each of the at least two multiplexing packets to obtain at least two general packet radio service Tunneling Protocol packet data units G-PDUs; and
a second encapsulating unit, configured to encapsulate one IP header and one User Datagram Protocol UDP header for the at least two G-PDUs obtained by the first encapsulating unit, to obtain the GTP-U packet.

49. The apparatus according to claim 48, wherein the first encapsulating unit is configured to:
set a first length field, a first tunnel identifier field, and a first multiplexing indication field in a first GTP-U header; wherein
the first length field is used to indicate a size of a multiplexing packet corresponding to the first GTP-U header;
the first tunnel identifier field is used to indicate a GTP-U tunnel used for the multiplexing packet corresponding to the first GTP-U header; and
the first multiplexing indication field is used to indicate whether there is another multiplexing packet that is in the GTP-U packet and follows the multiplexing packet corresponding to the first GTP-U header.

50. The method according to claim 49, wherein the first encapsulating unit is configured to:
use an unused field in the first GTP-U header as the first multiplexing indication field, or add the first multiplexing indication field to an extension header of the first GTP-U header.

51. The apparatus according to claim 48, wherein when the at least two multiplexing packets for which the first encapsulating unit performs encapsulation are transmitted by using a same GTP-U tunnel, the first encapsulating unit is configured to:
set a first length field, a first tunnel identifier field, and a first multiplexing indication field in a first GTP-U header; or
set a first length field, a first tunnel identifier field, and a first multiplexing indication field in a first GTP-U header, and set a second length field and a second multiplexing indication field in a second GTP-U header; wherein
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the second length field is used to indicate a size of a multiplexing packet corresponding to the second GTP-U header; and
the second multiplexing indication field is used to indicate whether there is another multiplexing packet that is in the GTP-U packet and follows the multiplexing packet corresponding to the second GTP-U header.

52. The apparatus according to claim 51, wherein the first encapsulating unit is configured to:
use an unused field in the first GTP-U header as the first multiplexing indication field, or add the first multiplexing indication field to an extension header of the first GTP-U header, and use an unused field in the second GTP-U header as the second multiplexing indication field, or add the second multiplexing indication field to an extension header of the second GTP-U header.

53. The apparatus according to claim 48, wherein the encapsulating module further comprises:
a padding unit, configured to: before the first encapsulating unit encapsulates the GTP-U header for each of the at least two multiplexing packets, pad each of the at least two multiplexing packets, so that sizes of the at least two padded multiplexing packets each are the set value; and
the first encapsulating unit is configured to:
set a first length field, a first tunnel identifier field, and a first multiplexing indication field in a first GTP-U header; or
set a third tunnel identifier field and a third multiplexing indication field in a third GTP-U header; or
set a first length field, a first tunnel identifier field, and a first multiplexing indication field in a first GTP-U header, and set a third tunnel identifier field and a third multiplexing indication field in a third GTP-U header; wherein
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the third tunnel identifier field is used to indicate a GTP-U tunnel used for a multiplexing packet corresponding to the third GTP-U header; and
the third multiplexing indication field is used to indicate whether there is another multiplexing packet that is in the GTP-U packet and follows the multiplexing packet corresponding to the third GTP-U header.

54. The apparatus according to claim 53, wherein the first encapsulating unit is configured to:
use an unused field in the first GTP-U header as the first multiplexing indication field, or add the first multiplexing indication field to an extension header of the first GTP-U header, and use an unused field in the third GTP-U header as the third multiplexing indication field, or add the third multiplexing indication field to an extension header of the third GTP-U header.

55. The apparatus according to claim 48, wherein when the at least two multiplexing packets for which the first encapsulating unit performs encapsulation are transmitted by using a same GTP-U tunnel, the encapsulating module further comprises:
a padding unit, configured to: before the first encapsulating unit encapsulates the GTP-U header for each of the at least two multiplexing packets, pad each of the at least two multiplexing packets, so that sizes of the at least two padded multiplexing packets each are the set value; and
the first encapsulating unit is configured to:
set a third tunnel identifier field and a third multiplexing indication field in a third GTP-U header; or
set a third tunnel identifier field and a third multiplexing indication field in a third GTP-U header, and set a fourth multiplexing indication field in a fourth GTP-U header; wherein
the third tunnel identifier field is used to indicate a GTP-U tunnel used for a multiplexing packet corresponding to the third GTP-U header;
the third multiplexing indication field is used to indicate whether there is another multiplexing packet that is in the GTP-U packet and follows the multiplexing packet corresponding to the third GTP-U header; and
the fourth multiplexing indication field is used to indicate whether there is another multiplexing packet that is in the GTP-U packet and follows a multiplexing packet corresponding to the fourth GTP-U header.

56. The apparatus according to claim 55, wherein the first encapsulating unit is configured to:
use an unused field in the third GTP-U header as the third multiplexing indication field, or add the third multiplexing indication field to an extension header of the third GTP-U header, and use an unused field in the fourth GTP-U header as the fourth multiplexing indication field, or add the fourth multiplexing indication field to an extension header of the fourth GTP-U header.

57. The apparatus according to claim 55 or 56, wherein the first encapsulating unit is further configured to:
further set a third length field in the third GTP-U header, and further set a fourth length field in the fourth GTP-U header, wherein the third length field is used to indicate a size of a padded multiplexing packet corresponding to the third GTP-U header, and the fourth length field is used to indicate a size of a padded multiplexing packet corresponding to the fourth GTP-U header.

58. The apparatus according to claim 47, wherein the apparatus comprises:
a third encapsulating unit, configured to encapsulate one GTP-U header for the at least two multiplexing packets, so that the at least two encapsulated multiplexing packets are one G-PDU, wherein the GTP-U header comprises at least two multiplexing extension headers, and the at least two multiplexing extension headers are in one-to-one correspondence with the at least two multiplexing packets, or the GTP-U header comprises at least one multiplexing extension header, the GTP-U header comprises a first next extension header type field, the first next extension header type field is corresponding to the first multiplexing packet in the GTP-U packet, the at least one multiplexing extension header is in one-to-one correspondence with a multiplexing packet, except the first multiplexing packet, in the GTP-U packet, and the first next extension header type field is used to indicate whether the first extension header in the GTP-U header in the GTP-U packet is a multiplexing extension header; and
a fourth encapsulating unit, configured to encapsulate an IP header and a UDP header for the G-PDU obtained by the third encapsulating unit, to obtain the GTP-U packet.

59. The apparatus according to claim 58, wherein the third encapsulating unit is configured to:
set a fifth length field, a fifth tunnel identifier field, and a second next extension header type field in a first multiplexing extension header; wherein
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header; and
the second next extension header type field is used to indicate whether there is another multiplexing extension header that is in the GTP-U packet and follows the first multiplexing extension header.

60. The apparatus according to claim 59, wherein the third encapsulating unit is configured to:
further set a first tunnel identifier flag field in the first multiplexing extension header, wherein the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

61. The apparatus according to claim 58, wherein the encapsulating module further comprises:
a padding unit, configured to: before the third encapsulating unit encapsulates the GTP-U header for the at least two multiplexing packets, pad each of the at least two multiplexing packets, so that sizes of the at least two padded multiplexing packets each are the set value; and
the third encapsulating unit is configured to:
set a fifth length field, a fifth tunnel identifier field, and a second next extension header type field in a first multiplexing extension header; or
set a sixth tunnel identifier field and a third next extension header type field in a second multiplexing extension header; or
set a fifth length field, a fifth tunnel identifier field, and a second next extension header type field in a first multiplexing extension header, and set a sixth tunnel identifier field and a third next extension header type field in a second multiplexing extension header; wherein
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the sixth tunnel identifier field is used to indicate a GTP-U tunnel used for a multiplexing packet corresponding to the second multiplexing extension header; and
the third next extension header type field is used to indicate whether there is another multiplexing extension header that is in the GTP-U packet and follows the second multiplexing extension header.

62. The apparatus according to claim 61, wherein the third encapsulating unit is configured to:
further set a first tunnel identifier flag field in the first multiplexing extension header, and further set a second tunnel identifier flag field in the second multiplexing extension header, wherein the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header.

63. The apparatus according to claim 58, wherein when the at least two multiplexing packets for which the third encapsulating unit performs encapsulation are transmitted by using a same GTP-U tunnel, the third encapsulating unit is configured to:
set a fifth length field, a fifth tunnel identifier field, and the first next extension header type field in a first multiplexing extension header; or
set a fifth length field, a fifth tunnel identifier field, and the first next extension header type field in a first multiplexing extension header, and set a seventh length field and a fourth next extension header type field in a third multiplexing extension header; wherein
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the seventh length field is used to indicate a size of a multiplexing packet corresponding to the third multiplexing extension header; and
the fourth next extension header type field is used to indicate whether there is another multiplexing extension header that is in the GTP-U packet and follows the third multiplexing extension header.

64. The apparatus according to claim 63, wherein the third encapsulating unit is configured to:
further set a first tunnel identifier flag field in the first multiplexing extension header, and further set a third tunnel identifier flag field in the third multiplexing extension header, wherein the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the third tunnel identifier flag field is used to indicate whether a GTP-U tunnel used for the multiplexing packet corresponding to the third multiplexing extension header is the same as a GTP-U tunnel used for a multiplexing packet corresponding to a multiplexing extension header previous to the third multiplexing extension header.

65. The apparatus according to claim 58, wherein when the at least two multiplexing packets for which the third encapsulating unit performs encapsulation are transmitted by using a same GTP-U tunnel, the apparatus further comprises:
a padding unit, configured to: before the third encapsulating unit encapsulates the GTP-U header for the at least two multiplexing packets, pad each of the at least two multiplexing packets, so that sizes of the at least two padded multiplexing packets each are the set value; and
the third encapsulating unit is configured to:
set a sixth tunnel identifier field and a third next extension header type field in a second multiplexing extension header; or
set a sixth tunnel identifier field and a third next extension header type field in a second multiplexing extension header, and set a fifth next extension header type field in a fourth multiplexing extension header; wherein
the sixth tunnel identifier field is used to indicate a GTP-U tunnel used for a multiplexing packet corresponding to the second multiplexing extension header;
the third next extension header type field is used to indicate whether there is another multiplexing extension header that is in the GTP-U packet and follows the second multiplexing extension header; and
the fifth next extension header type field is used to indicate whether there is another multiplexing extension header that is in the GTP-U packet and follows the fourth multiplexing extension header.

66. The apparatus according to claim 65, wherein the third encapsulating unit is configured to:
further set a third tunnel identifier flag field in the third multiplexing extension header, and further set a fourth tunnel identifier flag field in the fourth multiplexing extension header, wherein the third tunnel identifier flag field is used to indicate whether the GTP-U tunnel used for the multiplexing packet corresponding to the third multiplexing extension header is the same as a GTP-U tunnel used for a multiplexing packet corresponding to a multiplexing extension header previous to the third multiplexing extension header, and the fourth tunnel identifier flag field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

67. The apparatus according to claim 65 or 66, wherein the third encapsulating unit is further configured to:
further set a sixth length field in the second multiplexing extension header, and further set an eighth length field in the fourth multiplexing extension header, wherein the sixth length field is used to indicate a size of the padded multiplexing packet corresponding to the second multiplexing extension header, and the eighth length field is used to indicate a size of the padded multiplexing packet corresponding to the fourth multiplexing extension header.

68. The apparatus according to any one of claims 58 to 67, wherein the third encapsulating unit is configured to:
set a ninth length field and a ninth tunnel identifier field in the GTP-U header, wherein the ninth length field is used to indicate a length of the first multiplexing packet in the GTP-U packet, and the ninth tunnel identifier field is used to indicate a GTP-U tunnel used for the first multiplexing packet.

69. The apparatus according to any one of claims 47 to 68, wherein the apparatus further comprises:
an acquiring module, configured to acquire the multiplexing policy from an MME/a PCRF.

70. A data transmission apparatus, wherein the apparatus comprises:
a receiving module, configured to receive a general packet radio service Tunneling Protocol-User plane GTP-U packet, wherein the GTP-U packet is obtained by encapsulating at least two multiplexing packets, the at least two multiplexing packets are at least two Internet Protocol IP packets determined according to a multiplexing policy, and the multiplexing policy comprises at least one of the following conditions: the multiplexing packets are IP packets whose sizes are less than or equal to a set value, bearer identifiers of the multiplexing packets are the same, quality of service class identifiers QCIs of the multiplexing packets are the same, and flow description information of the multiplexing packets is the same;
a decapsulating module, configured to decapsulate the GTP-U packet received by the receiving module, to obtain the at least two multiplexing packets; and
a sending module, configured to send the at least two multiplexing packets obtained by the decapsulating module.

71. The apparatus according to claim 70, wherein the decapsulating module comprises:
a first decapsulating unit, configured to decapsulate the GTP-U packet according to an IP header and a User Datagram Protocol UDP header in the GTP-U packet to obtain at least two general packet radio service Tunneling Protocol packet data units G-PDUs, wherein each G-PDU of the at least two G-PDUs comprises one GTP-U header; and
a second decapsulating unit, configured to decapsulate, according to the GTP-U headers in the at least two G-PDUs, the at least two G-PDUs obtained by the first decapsulating unit, to obtain the at least two multiplexing packets.

72. The apparatus according to claim 71, wherein the GTP-U header is a first GTP-U header, and the first GTP-U header comprises a first length field, a first tunnel identifier field, and a first multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header; and
the second decapsulating unit is configured to:
determine, according to the first multiplexing indication fields in the first GTP-U headers in the at least two G-PDUs, the multiplexing packets that need to be decapsulated, and decapsulate the at least two G-PDUs according to the first length fields, the first tunnel identifier fields, and the first multiplexing indication fields that are in the first GTP-U headers in the at least two G-PDUs, to obtain the at least two multiplexing packets.

73. The apparatus according to claim 72, wherein the first multiplexing indication field is an unused field in the first GTP-U header or is carried in an extension header of the first GTP-U header.

74. The apparatus according to claim 71, wherein when the at least two multiplexing packets are transmitted by using a same GTP-U tunnel and the GTP-U header is a first GTP-U header, the second decapsulating unit is configured to:
determine, according to first multiplexing indication fields in the first GTP-U headers in the at least two G-PDUs, the multiplexing packets that need to be decapsulated, and decapsulate the at least two G-PDUs according to first length fields, first tunnel identifier fields, and the first multiplexing indication fields that are in the first GTP-U headers in the at least two G-PDUs, to obtain the at least two multiplexing packets; or
when the at least two multiplexing packets are transmitted by using a same GTP-U tunnel, the first one GTP-U header of the GTP-U headers is a first GTP-U header, and the GTP-U header except the first one GTP-U header is a second GTP-U header, the second decapsulating unit is configured to:
determine, according to a first multiplexing indication field in the first GTP-U header in the at least two G-PDUs and a second multiplexing indication field in the second GTP-U header in the at least two G-PDUs, the multiplexing packets that need to be decapsulated, and decapsulate the at least two G-PDUs according to a first length field, a first tunnel identifier field, and the first multiplexing indication field that are in the first GTP-U header in the at least two G-PDUs and a second length field and the second multiplexing indication field that are in the second GTP-U header in the at least two G-PDUs, to obtain the at least two multiplexing packets; wherein
the first GTP-U header comprises the first length field, the first tunnel identifier field, and the first multiplexing indication field, and the second GTP-U header comprises the second length field and the second multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the second length field is used to indicate a size of a multiplexing packet corresponding to the second GTP-U header; and
the second multiplexing indication field is used to indicate whether there is another multiplexing packet that is in the GTP-U packet and follows the multiplexing packet corresponding to the second GTP-U header.

75. The apparatus according to claim 74, wherein the first multiplexing indication field is an unused field in the first GTP-U header or is carried in an extension header of the first GTP-U header, and the second multiplexing indication field is an unused field in the second GTP-U header or is carried in an extension header of the second GTP-U header.

76. The apparatus according to claim 71, wherein when sizes of the at least two multiplexing packets each are the set value and the GTP-U header is a first GTP-U header, the second decapsulating unit is configured to:
determine, according to first multiplexing indication fields in the first GTP-U headers in the at least two G-PDUs, the multiplexing packets that need to be decapsulated, and decapsulate the at least two G-PDUs according to first length fields, first tunnel identifier fields, and the first multiplexing indication fields that are in the first GTP-U headers in the at least two G-PDUs, to obtain the at least two multiplexing packets; or
when sizes of the at least two multiplexing packets each are the set value and the GTP-U header is a third GTP-U header, the second decapsulating unit is configured to:
determine, according to third multiplexing indication fields in the third GTP-U headers in the at least two G-PDUs, the multiplexing packets that need to be decapsulated, and decapsulate the at least two G-PDUs according to third tunnel identifier fields and the third multiplexing indication fields that are in the third GTP-U headers in the at least two G-PDUs, and a network configuration, to obtain the at least two multiplexing packets, wherein the network configuration is used to indicate a size of the set value; or
when sizes of the at least two multiplexing packets each are the set value, the first one GTP-U header of the GTP-U headers is a first GTP-U header, and the GTP-U header except the first one GTP-U header is a third GTP-U header, the second decapsulating unit is configured to:
determine, according to a first multiplexing indication field in the first GTP-U header in the at least two G-PDUs and a third multiplexing indication field in the third GTP-U header in the at least two G-PDUs, the multiplexing packets that need to be decapsulated, and decapsulate the at least two G-PDUs according to a first length field, a first tunnel identifier field, and the first multiplexing indication field that are in the first GTP-U header in the at least two G-PDUs and a third tunnel identifier field and the third multiplexing indication field that are in the third GTP-U header in the at least two G-PDUs, to obtain the at least two multiplexing packets; wherein
the first GTP-U header comprises the first length field, the first tunnel identifier field, and the first multiplexing indication field, and the third GTP-U header comprises the third tunnel identifier field and the third multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the third tunnel identifier field is used to indicate a GTP-U tunnel used for a multiplexing packet corresponding to the third GTP-U header; and
the third multiplexing indication field is used to indicate whether there is another multiplexing packet that is in the GTP-U packet and follows the multiplexing packet corresponding to the third GTP-U header.

77. The apparatus according to claim 76, wherein the first multiplexing indication field is an unused field in the first GTP-U header or is carried in an extension header of the first GTP-U header, and the third multiplexing indication field is an unused field in the third GTP-U header or is carried in an extension header of the third GTP-U header.

78. The apparatus according to claim 71, wherein when the at least two multiplexing packets are transmitted by using a same GTP-U tunnel, sizes of the at least two multiplexing packets each are the set value, and the GTP-U header is a third GTP-U header, the second decapsulating unit is configured to:
determine, according to third multiplexing indication fields in the third GTP-U headers in the at least two G-PDUs, the multiplexing packets that need to be decapsulated, and decapsulate the at least two G-PDUs according to third tunnel identifier fields and the third multiplexing indication fields that are in the third GTP-U headers in the at least two G-PDUs, and a network configuration, to obtain the at least two multiplexing packets, wherein the network configuration is used to indicate a size of the set value; or
when the at least two multiplexing packets are transmitted by using a same GTP-U tunnel, sizes of the at least two multiplexing packets each are the set value, the first one GTP-U header of the GTP-U headers is a third GTP-U header, and the GTP-U header except the first one GTP-U header is a fourth GTP-U header, the second decapsulating unit is configured to:
determine, according to a third multiplexing indication field in the third GTP-U header in the at least two G-PDUs and a fourth multiplexing indication field in the fourth GTP-U header in the at least two G-PDUs, the multiplexing packets that need to be decapsulated, and decapsulate the at least two G-PDUs according to a third tunnel identifier field and the third multiplexing indication field that are in the third GTP-U header in the at least two G-PDUs and the fourth multiplexing indication field in the fourth GTP-U header in the at least two G-PDUs, to obtain the at least two multiplexing packets; wherein
the third GTP-U header comprises the third tunnel identifier field and the third multiplexing indication field, and the fourth GTP-U header comprises the fourth multiplexing indication field;
the third tunnel identifier field is used to indicate a GTP-U tunnel used for a multiplexing packet corresponding to the third GTP-U header;
the third multiplexing indication field is used to indicate whether there is another multiplexing packet that is in the GTP-U packet and follows the multiplexing packet corresponding to the third GTP-U header; and
the fourth multiplexing indication field is used to indicate whether there is another multiplexing packet that is in the GTP-U packet and follows a multiplexing packet corresponding to the fourth GTP-U header.

79. The apparatus according to claim 78, wherein the third multiplexing indication field is an unused field in the third GTP-U header or is carried in an extension header of the third GTP-U header, and the fourth multiplexing indication field is an unused field in the fourth GTP-U header or is carried in an extension header of the fourth GTP-U header.

80. The apparatus according to claim 78 or 79, wherein the third GTP-U header further comprises a third length field, the fourth GTP-U header further comprises a fourth length field, the third length field is used to indicate a size of a padded multiplexing packet corresponding to the third GTP-U header, and the fourth length field is used to indicate a size of a padded multiplexing packet corresponding to the fourth GTP-U header.

81. The apparatus according to claim 70, wherein the decapsulating module comprises:
a third decapsulating unit, configured to decapsulate the GTP-U packet according to an IP header and a UDP header in the GTP-U packet to obtain one G-PDU, wherein a GTP-U header in the G-PDU comprises at least two multiplexing extension headers, and the at least two multiplexing extension headers are in one-to-one correspondence with the at least two multiplexing packets, or the GTP-U header comprises at least one multiplexing extension header and a first next extension header type field, the first next extension header type field is corresponding to the first multiplexing packet in the GTP-U packet, the at least one multiplexing extension header is in one-to-one correspondence with a multiplexing packet, except the first multiplexing packet, in the GTP-U packet, and the first next extension header type field is used to indicate whether the first extension header in the GTP-U header in the GTP-U packet is a multiplexing extension header; and
a fourth decapsulating unit, configured to decapsulate, according to the GTP-U header in the G-PDU, the G-PDU obtained by the third decapsulating unit, to obtain the at least two multiplexing packets.

82. The apparatus according to claim 81, wherein the multiplexing extension header is a first multiplexing extension header, and the first multiplexing extension header comprises a fifth length field, a fifth tunnel identifier field, and a second next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header; and
the fourth decapsulating unit is configured to:
determine, according to the second next extension header type field in the first multiplexing extension header in the G-PDU, the multiplexing packets that need to be decapsulated, and decapsulate the G-PDU according to the fifth length field, the fifth tunnel identifier field, and the second next extension header type field that are in the first multiplexing extension header in the G-PDU, to obtain the at least two multiplexing packets.

83. The apparatus according to claim 82, wherein the first multiplexing extension header further comprises a first tunnel identifier flag field, and the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

84. The apparatus according to claim 81, wherein when a size of the multiplexing packet is the set value and the multiplexing extension header is a first multiplexing extension header, the fourth decapsulating unit is configured to:
determine, according to a second next extension header type field in the first multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU, to obtain the at least two multiplexing packets; or
when a size of the multiplexing packet is the set value and the multiplexing extension header is a second multiplexing extension header, the fourth decapsulating unit is configured to:
determine, according to a third next extension header type field in the second multiplexing extension header in the G-PDU, the multiplexing packets that need to be decapsulated, and decapsulate the G-PDU according to a sixth tunnel identifier field and the third next extension header type field that are in the second multiplexing extension header in the G-PDU, and a network configuration, to obtain the at least two multiplexing packets, wherein the network configuration is used to indicate a size of the set value; or
when a size of the multiplexing packet is the set value, the first one multiplexing extension header of the multiplexing extension headers is a first multiplexing extension header, and the multiplexing extension header except the first one multiplexing extension header is a second multiplexing extension header, the fourth decapsulating unit is configured to:
determine, according to a second next extension header type field in the first multiplexing extension header in the G-PDU and a third next extension header type field in the second multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU and a sixth tunnel identifier field and the third next extension header type field that are in the second multiplexing extension header in the G-PDU, to obtain the at least two multiplexing packets; wherein
the first multiplexing extension header comprises the fifth tunnel identifier field, the fifth length field, and the second next extension header type field;
the second multiplexing extension header comprises the sixth tunnel identifier field and the third next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the sixth tunnel identifier field is used to indicate a GTP-U tunnel used for a multiplexing packet corresponding to the second multiplexing extension header; and
the third next extension header type field is used to indicate whether there is another multiplexing extension header that is in the GTP-U packet and follows the second multiplexing extension header.

85. The apparatus according to claim 84, wherein the first multiplexing extension header further comprises a first tunnel identifier flag field, the second multiplexing extension header further comprises a second tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header.

86. The apparatus according to claim 81, wherein when the multiplexing packet is transmitted by using a same GTP-U tunnel and the multiplexing extension header in the GTP-U header is a first multiplexing extension header, the fourth decapsulating unit is configured to:
determine, according to a second next extension header type field in the first multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU, to obtain the at least two multiplexing packets; or
when the multiplexing packet is transmitted by using a same GTP-U tunnel, the first one multiplexing extension header of the multiplexing extension headers is a first multiplexing extension header, and the multiplexing extension header except the first one multiplexing extension header is a third multiplexing extension header, the fourth decapsulating unit is configured to:
determine, according to a second next extension header type field in the first multiplexing extension header in the G-PDU and a fourth next extension header type field in the third multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU and a seventh length field and the fourth next extension header type field that are in the third multiplexing extension header in the G-PDU, to obtain the at least two multiplexing packets; wherein
the first multiplexing extension header comprises the fifth length field, the fifth tunnel identifier field, and the second next extension header type field, and the third multiplexing extension header comprises the seventh length field and the fourth next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the seventh length field is used to indicate a size of a multiplexing packet corresponding to the third multiplexing extension header; and
the fourth next extension header type field is used to indicate whether there is another multiplexing extension header that is in the GTP-U packet and follows the third multiplexing extension header.

87. The apparatus according to claim 86, wherein the first multiplexing extension header further comprises a first tunnel identifier flag field, the third multiplexing extension header further comprises a third tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the third tunnel identifier flag field is used to indicate whether a GTP-U tunnel used for the multiplexing packet corresponding to the third multiplexing extension header is the same as a GTP-U tunnel used for a multiplexing packet corresponding to a multiplexing extension header previous to the third multiplexing extension header.

88. The apparatus according to claim 81, wherein when the at least two multiplexing packets are transmitted by using a same GTP-U tunnel, a size of the multiplexing packet is the set value, and the multiplexing extension header is a second multiplexing extension header, the fourth decapsulating unit is configured to:
determine, according to a third next extension header type field in the second multiplexing extension header in the G-PDU, the multiplexing packets that need to be decapsulated, and decapsulate the G-PDU according to a sixth tunnel identifier field and the third next extension header type field that are in the second multiplexing extension header in the G-PDU, to obtain the at least two multiplexing packets; or
when the at least two multiplexing packets are transmitted by using a same GTP-U tunnel, a size of the multiplexing packet is the set value, the first one multiplexing extension header of the multiplexing extension headers is a second multiplexing extension header, and the multiplexing extension header except the first one multiplexing extension header is a fourth multiplexing extension header, the fourth decapsulating unit is configured to:
determine, according to a third next extension header type field in the second multiplexing extension header in the G-PDU and a fifth next extension header type field in the fourth multiplexing extension header in the G-PDU, the multiplexing packets that need to be decapsulated, and decapsulate the G-PDU according to a sixth tunnel identifier field and the third next extension header type field that are in the second multiplexing extension header in the G-PDU and the fifth next extension header type field in the fourth multiplexing extension header in the G-PDU, to obtain the at least two multiplexing packets; wherein
the second multiplexing extension header comprises the sixth tunnel identifier field and the third next extension header type field, and the fourth multiplexing extension header comprises the fifth next extension header type field;
the sixth tunnel identifier field is used to indicate a GTP-U tunnel used for a multiplexing packet corresponding to the second multiplexing extension header;
the third next extension header type field is used to indicate whether there is another multiplexing extension header that is in the GTP-U packet and follows the second multiplexing extension header; and
the fifth next extension header type field is used to indicate whether there is another multiplexing extension header that is in the GTP-U packet and follows the fourth multiplexing extension header.

89. The apparatus according to claim 88, wherein the second multiplexing extension header further comprises a second tunnel identifier flag field, the fourth multiplexing extension header further comprises a fourth tunnel identifier flag field, the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header, and the fourth tunnel identifier flag field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

90. The apparatus according to claim 88 or 89, wherein the second multiplexing extension header further comprises a sixth length field, the fourth multiplexing extension header further comprises an eighth length field, the sixth length field is used to indicate a size of a padded multiplexing packet corresponding to the second multiplexing extension header, and the eighth length field is used to indicate a size of a padded multiplexing packet corresponding to the fourth multiplexing extension header.

91. The apparatus according to any one of claims 81 to 90, wherein the GTP-U header further comprises a ninth length field and a ninth tunnel identifier field, the ninth length field is used to indicate a length of the first multiplexing packet in the GTP-U packet, and the ninth tunnel identifier field is used to indicate a GTP-U tunnel used for the first multiplexing packet.

92. The apparatus according to any one of claims 70 to 91, wherein the multiplexing policy is acquired from a mobility management entity MME/a policy control and charging rules function entity PCRF.

93. A data transmission apparatus, wherein the apparatus comprises:
a receiver, configured to receive at least two Internet Protocol IP packets;
a processor, configured to: determine, according to a multiplexing policy, at least two multiplexing packets from the at least two IP packets received by the receiver, wherein the multiplexing policy comprises at least one of the following conditions:
the multiplexing packets are IP packets whose sizes are less than or equal to a set value, bearer identifiers of the multiplexing packets are the same, quality of service class identifiers QCIs of the multiplexing packets are the same, and flow description information of the multiplexing packets is the same; and encapsulate the at least two multiplexing packets into one general packet radio service Tunneling Protocol-User plane GTP-U packet; and
a transmitter, configured to send the GTP-U packet obtained by the processor.

94. The apparatus according to claim 93, wherein the processor is configured to:
encapsulate a GTP-U header for each of the at least two multiplexing packets to obtain at least two general packet radio service Tunneling Protocol packet data units G-PDUs; and
encapsulate one IP header and one User Datagram Protocol UDP header for the at least two G-PDUs to obtain the GTP-U packet.

95. The apparatus according to claim 94, wherein the processor is configured to:
set a first length field, a first tunnel identifier field, and a first multiplexing indication field in a first GTP-U header; wherein
the first length field is used to indicate a size of a multiplexing packet corresponding to the first GTP-U header;
the first tunnel identifier field is used to indicate a GTP-U tunnel used for the multiplexing packet corresponding to the first GTP-U header; and
the first multiplexing indication field is used to indicate whether there is another multiplexing packet that is in the GTP-U packet and follows the multiplexing packet corresponding to the first GTP-U header.

96. The apparatus according to claim 95, wherein the processor is configured to:
use an unused field in the first GTP-U header as the first multiplexing indication field, or add the first multiplexing indication field to an extension header of the first GTP-U header.

97. The apparatus according to claim 94, wherein the processor is configured to:
when the at least two multiplexing packets are transmitted by using a same GTP-U tunnel,
set a first length field, a first tunnel identifier field, and a first multiplexing indication field in a first GTP-U header; or
set a first length field, a first tunnel identifier field, and a first multiplexing indication field in a first GTP-U header, and set a second length field and a second multiplexing indication field in a second GTP-U header; wherein
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the second length field is used to indicate a size of a multiplexing packet corresponding to the second GTP-U header; and
the second multiplexing indication field is used to indicate whether there is another multiplexing packet that is in the GTP-U packet and follows the multiplexing packet corresponding to the second GTP-U header.

98. The apparatus according to claim 97, wherein the processor is configured to:
use an unused field in the first GTP-U header as the first multiplexing indication field, or add the first multiplexing indication field to an extension header of the first GTP-U header, and use an unused field in the second GTP-U header as the second multiplexing indication field, or add the second multiplexing indication field to an extension header of the second GTP-U header.

99. The apparatus according to claim 94, wherein the processor is configured to:
pad each of the at least two multiplexing packets, so that sizes of the at least two padded multiplexing packets each are the set value; and
set a first length field, a first tunnel identifier field, and a first multiplexing indication field in a first GTP-U header; or
set a third tunnel identifier field and a third multiplexing indication field in a third GTP-U header; or
set a first length field, a first tunnel identifier field, and a first multiplexing indication field in a first GTP-U header, and set a third tunnel identifier field and a third multiplexing indication field in a third GTP-U header; wherein
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the third tunnel identifier field is used to indicate a GTP-U tunnel used for a multiplexing packet corresponding to the third GTP-U header; and
the third multiplexing indication field is used to indicate whether there is another multiplexing packet that is in the GTP-U packet and follows the multiplexing packet corresponding to the third GTP-U header.

100. The apparatus according to claim 99, wherein the processor is configured to:
use an unused field in the first GTP-U header as the first multiplexing indication field, or add the first multiplexing indication field to an extension header of the first GTP-U header, and use an unused field in the third GTP-U header as the third multiplexing indication field, or add the third multiplexing indication field to an extension header of the third GTP-U header.

101. The apparatus according to claim 94, wherein the processor is configured to:
when the at least two multiplexing packets are transmitted by using a same GTP-U tunnel,
pad each of the at least two multiplexing packets, so that sizes of the at least two padded multiplexing packets each are the set value; and
set a third tunnel identifier field and a third multiplexing indication field in a third GTP-U header; or
set a third tunnel identifier field and a third multiplexing indication field in a third GTP-U header, and set a fourth multiplexing indication field in a fourth GTP-U header; wherein
the third tunnel identifier field is used to indicate a GTP-U tunnel used for a multiplexing packet corresponding to the third GTP-U header;
the third multiplexing indication field is used to indicate whether there is another multiplexing packet that is in the GTP-U packet and follows the multiplexing packet corresponding to the third GTP-U header; and
the fourth multiplexing indication field is used to indicate whether there is another multiplexing packet that is in the GTP-U packet and follows a multiplexing packet corresponding to the fourth GTP-U header.

102. The apparatus according to claim 101, wherein the processor is configured to:
use an unused field in the third GTP-U header as the third multiplexing indication field, or add the third multiplexing indication field to an extension header of the third GTP-U header, and use an unused field in the fourth GTP-U header as the fourth multiplexing indication field, or add the fourth multiplexing indication field to an extension header of the fourth GTP-U header.

103. The apparatus according to claim 101 or 102, wherein the processor is further configured to:
further set a third length field in the third GTP-U header, and further set a fourth length field in the fourth GTP-U header, wherein the third length field is used to indicate a size of a padded multiplexing packet corresponding to the third GTP-U header, and the fourth length field is used to indicate a size of a padded multiplexing packet corresponding to the fourth GTP-U header.

104. The apparatus according to claim 93, wherein the processor is configured to:
encapsulate one GTP-U header for the at least two multiplexing packets, so that the at least two encapsulated multiplexing packets are one G-PDU, wherein the GTP-U header comprises at least two multiplexing extension headers, and the at least two multiplexing extension headers are in one-to-one correspondence with the at least two multiplexing packets, or the GTP-U header comprises at least one multiplexing extension header, the GTP-U header comprises a first next extension header type field, the first next extension header type field is corresponding to the first multiplexing packet in the GTP-U packet, the at least one multiplexing extension header is in one-to-one correspondence with a multiplexing packet, except the first multiplexing packet, in the GTP-U packet, and the first next extension header type field is used to indicate whether the first extension header in the GTP-U header in the GTP-U packet is a multiplexing extension header; and
encapsulate an IP header and a UDP header for the G-PDU to obtain the GTP-U packet.

105. The apparatus according to claim 104, wherein the processor is configured to:
set a fifth length field, a fifth tunnel identifier field, and a second next extension header type field in a first multiplexing extension header; wherein
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header; and
the second next extension header type field is used to indicate whether there is another multiplexing extension header that is in the GTP-U packet and follows the first multiplexing extension header.

106. The apparatus according to claim 105, wherein the processor is configured to:
further set a first tunnel identifier flag field in the first multiplexing extension header, wherein the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

107. The apparatus according to claim 104, wherein the processor is configured to:
pad each of the at least two multiplexing packets, so that sizes of the at least two padded multiplexing packets each are the set value; and
set a fifth length field, a fifth tunnel identifier field, and a second next extension header type field in a first multiplexing extension header; or
set a sixth tunnel identifier field and a third next extension header type field in a second multiplexing extension header; or
set a fifth length field, a fifth tunnel identifier field, and a second next extension header type field in a first multiplexing extension header, and set a sixth tunnel identifier field and a third next extension header type field in a second multiplexing extension header; wherein
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the sixth tunnel identifier field is used to indicate a GTP-U tunnel used for a multiplexing packet corresponding to the second multiplexing extension header; and
the third next extension header type field is used to indicate whether there is another multiplexing extension header that is in the GTP-U packet and follows the second multiplexing extension header.

108. The apparatus according to claim 107, wherein the processor is configured to:
further set a first tunnel identifier flag field in the first multiplexing extension header, and further set a second tunnel identifier flag field in the second multiplexing extension header, wherein the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header.

109. The apparatus according to claim 104, wherein the processor is configured to: when the at least two multiplexing packets are transmitted by using a same GTP-U tunnel,
set a fifth length field, a fifth tunnel identifier field, and the first next extension header type field in a first multiplexing extension header; or
set a fifth length field, a fifth tunnel identifier field, and the first next extension header type field in a first multiplexing extension header, and set a seventh length field and a fourth next extension header type field in a third multiplexing extension header; wherein
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the seventh length field is used to indicate a size of a multiplexing packet corresponding to the third multiplexing extension header; and
the fourth next extension header type field is used to indicate whether there is another multiplexing extension header that is in the GTP-U packet and follows the third multiplexing extension header.

110. The apparatus according to claim 109, wherein the processor is configured to:
further set a first tunnel identifier flag field in the first multiplexing extension header, and further set a third tunnel identifier flag field in the third multiplexing extension header, wherein the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the third tunnel identifier flag field is used to indicate whether a GTP-U tunnel used for the multiplexing packet corresponding to the third multiplexing extension header is the same as a GTP-U tunnel used for a multiplexing packet corresponding to a multiplexing extension header previous to the third multiplexing extension header.

111. The apparatus according to claim 104, wherein the processor is configured to: when the at least two multiplexing packets are transmitted by using a same GTP-U tunnel,
pad each of the at least two multiplexing packets, so that sizes of the at least two padded multiplexing packets each are the set value; and
set a sixth tunnel identifier field and a third next extension header type field in a second multiplexing extension header; or
set a sixth tunnel identifier field and a third next extension header type field in a second multiplexing extension header, and set a fifth next extension header type field in a fourth multiplexing extension header; wherein
the sixth tunnel identifier field is used to indicate a GTP-U tunnel used for a multiplexing packet corresponding to the second multiplexing extension header;
the third next extension header type field is used to indicate whether there is another multiplexing extension header that is in the GTP-U packet and follows the second multiplexing extension header; and
the fifth next extension header type field is used to indicate whether there is another multiplexing extension header that is in the GTP-U packet and follows the fourth multiplexing extension header.

112. The apparatus according to claim 111, wherein the processor is configured to:
further set a third tunnel identifier flag field in the third multiplexing extension header, and further set a fourth tunnel identifier flag field in the fourth multiplexing extension header, wherein the third tunnel identifier flag field is used to indicate whether the GTP-U tunnel used for the multiplexing packet corresponding to the third multiplexing extension header is the same as a GTP-U tunnel used for a multiplexing packet corresponding to a multiplexing extension header previous to the third multiplexing extension header, and the fourth tunnel identifier flag field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

113. The apparatus according to claim 111 or 112, wherein the processor is further configured to:
further set a sixth length field in the second multiplexing extension header, and further set an eighth length field in the fourth multiplexing extension header, wherein the sixth length field is used to indicate a size of the padded multiplexing packet corresponding to the second multiplexing extension header, and the eighth length field is used to indicate a size of the padded multiplexing packet corresponding to the fourth multiplexing extension header.

114. The apparatus according to any one of claims 104 to 113, wherein the processor is configured to:
set a ninth length field and a ninth tunnel identifier field in the GTP-U header, wherein the ninth length field is used to indicate a length of the first multiplexing packet in the GTP-U packet, and the ninth tunnel identifier field is used to indicate a GTP-U tunnel used for the first multiplexing packet.

115. The apparatus according to any one of claims 93 to 114, wherein the receiver is further configured to:
acquire the multiplexing policy from an MME/a PCRF.

116. A data transmission apparatus, wherein the apparatus comprises:
a receiver, configured to receive a general packet radio service Tunneling Protocol-User plane GTP-U packet, wherein the GTP-U packet is obtained by encapsulating at least two multiplexing packets, the at least two multiplexing packets are at least two Internet Protocol IP packets determined according to a multiplexing policy, and the multiplexing policy comprises at least one of the following conditions:
the multiplexing packets are IP packets whose sizes are less than or equal to a set value, bearer identifiers of the multiplexing packets are the same, quality of service class identifiers QCIs of the multiplexing packets are the same, and flow description information of the multiplexing packets is the same;
a processor, configured to decapsulate the GTP-U packet received by the receiver, to obtain the at least two multiplexing packets; and
a transmitter, configured to send the at least two multiplexing packets obtained by the processor.

117. The apparatus according to claim 116, wherein the processor is configured to:
decapsulate the GTP-U packet according to an IP header and a User Datagram Protocol UDP header in the GTP-U packet to obtain at least two general packet radio service Tunneling Protocol packet data units G-PDUs, wherein each G-PDU of the at least two G-PDUs comprises one GTP-U header; and
decapsulate the at least two G-PDUs according to the GTP-U headers in the at least two G-PDUs to obtain the at least two multiplexing packets.

118. The apparatus according to claim 117, wherein the processor is configured to: when the GTP-U header is a first GTP-U header, determine, according to first multiplexing indication fields in the first GTP-U headers in the at least two G-PDUs, the multiplexing packets that need to be decapsulated, and decapsulate the at least two G-PDUs according to first length fields, first tunnel identifier fields, and the first multiplexing indication fields that are in the first GTP-U headers in the at least two G-PDUs, to obtain the at least two multiplexing packets; wherein
the first GTP-U header comprises the first length field, the first tunnel identifier field, and the first multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header; and
the first multiplexing indication field is used to indicate whether there is another multiplexing packet that is in the GTP-U packet and follows the multiplexing packet corresponding to the first GTP-U header.

119. The apparatus according to claim 118, wherein the first multiplexing indication field is an unused field in the first GTP-U header or is carried in an extension header in of first GTP-U header.

120. The apparatus according to claim 117, wherein the processor is configured to:
when the at least two multiplexing packets are transmitted by using a same GTP-U tunnel and the GTP-U header is a first GTP-U header, determine, according to first multiplexing indication fields in the first GTP-U headers in the at least two G-PDUs, the multiplexing packets that need to be decapsulated, and decapsulate the at least two G-PDUs according to first length fields, first tunnel identifier fields, and the first multiplexing indication fields that are in the first GTP-U headers in the at least two G-PDUs, to obtain the at least two multiplexing packets; or
when the at least two multiplexing packets are transmitted by using a same GTP-U tunnel, the first one GTP-U header of the GTP-U headers is a first GTP-U header, and the GTP-U header except the first one GTP-U header is a second GTP-U header, determine, according to a first multiplexing indication field in the first GTP-U header in the at least two G-PDUs and a second multiplexing indication field in the second GTP-U header in the at least two G-PDUs, the multiplexing packets that need to be decapsulated, and decapsulate the at least two G-PDUs according to a first length field, a first tunnel identifier field, and the first multiplexing indication field that are in the first GTP-U header in the at least two G-PDUs and a second length field and the second multiplexing indication field that are in the second GTP-U header in the at least two G-PDUs, to obtain the at least two multiplexing packets; wherein
the first GTP-U header comprises the first length field, the first tunnel identifier field, and the first multiplexing indication field, and the second GTP-U header comprises the second length field and the second multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the second length field is used to indicate a size of a multiplexing packet corresponding to the second GTP-U header; and
the second multiplexing indication field is used to indicate whether there is another multiplexing packet that is in the GTP-U packet and follows the multiplexing packet corresponding to the second GTP-U header.

121. The apparatus according to claim 120, wherein the first multiplexing indication field is an unused field in the first GTP-U header or is carried in an extension header of the first GTP-U header, and the second multiplexing indication field is an unused field in the second GTP-U header or is carried in an extension header of the second GTP-U header.

122. The apparatus according to claim 117, wherein the processor is configured to:
when sizes of the at least two multiplexing packets each are the set value and the GTP-U header is a first GTP-U header, determine, according to first multiplexing indication fields in the first GTP-U headers in the at least two G-PDUs, the multiplexing packets that need to be decapsulated, and decapsulate the at least two G-PDUs according to first length fields, first tunnel identifier fields, and the first multiplexing indication fields that are in the first GTP-U headers in the at least two G-PDUs, to obtain the at least two multiplexing packets; or
when sizes of the at least two multiplexing packets each are the set value and the GTP-U header is a third GTP-U header, determine, according to third multiplexing indication fields in the third GTP-U headers in the at least two G-PDUs, the multiplexing packets that need to be decapsulated, and decapsulate the at least two G-PDUs according to third tunnel identifier fields and the third multiplexing indication fields that are in the third GTP-U headers in the at least two G-PDUs, and a network configuration, to obtain the at least two multiplexing packets, wherein the network configuration is used to indicate a size of the set value; or
when sizes of the at least two multiplexing packets each are the set value, the first one GTP-U header of the GTP-U headers is a first GTP-U header, and the GTP-U header except the first one GTP-U header is a third GTP-U header, determine, according to a first multiplexing indication field in the first GTP-U header in the at least two G-PDUs and a third multiplexing indication field in the third GTP-U header in the at least two G-PDUs, the multiplexing packets that need to be decapsulated, and decapsulate the at least two G-PDUs according to a first length field, a first tunnel identifier field, and the first multiplexing indication field that are in the first GTP-U header in the at least two G-PDUs and a third length field and the third multiplexing indication field that are in the third GTP-U header in the at least two G-PDUs, to obtain the at least two multiplexing packets; wherein
the first GTP-U header comprises the first length field, the first tunnel identifier field, and the first multiplexing indication field, and the third GTP-U header comprises the third tunnel identifier field and the third multiplexing indication field;
the first length field is used to indicate a size of a multiplexing packet corresponding to the first GTP-U header;
the first tunnel identifier field is used to indicate a GTP-U tunnel used for the multiplexing packet corresponding to the first GTP-U header;
the first multiplexing indication field is used to indicate whether there is another multiplexing packet that is in the GTP-U packet and follows the multiplexing packet corresponding to the first GTP-U header;
the third tunnel identifier field is used to indicate a GTP-U tunnel used for a multiplexing packet corresponding to the third GTP-U header; and
the third multiplexing indication field is used to indicate whether there is another multiplexing packet that is in the GTP-U packet and follows the multiplexing packet corresponding to the third GTP-U header.

123. The apparatus according to claim 122, wherein the first multiplexing indication field is an unused field in the first GTP-U header or is carried in an extension header of the first GTP-U header, and the third multiplexing indication field is an unused field in the third GTP-U header or is carried in an extension header of the third GTP-U header.

124. The apparatus according to claim 117, wherein the processor is configured to:
when the at least two multiplexing packets are transmitted by using a same GTP-U tunnel, sizes of the at least two multiplexing packets each are the set value, and the GTP-U header is a third GTP-U header, determine, according to third multiplexing indication fields in the third GTP-U headers in the at least two G-PDUs, the multiplexing packets that need to be decapsulated, and decapsulate the at least two G-PDUs according to third tunnel identifier fields and the third multiplexing indication fields that are in the third GTP-U headers in the at least two G-PDUs, to obtain the at least two multiplexing packets; or
when the at least two multiplexing packets are transmitted by using a same GTP-U tunnel, sizes of the at least two multiplexing packets each are the set value, the first one GTP-U header of the GTP-U headers is a third GTP-U header, and the GTP-U header except the first one GTP-U header is a fourth GTP-U header, determine, according to a third multiplexing indication field in the third GTP-U header in the at least two G-PDUs and a fourth multiplexing indication field in the fourth GTP-U header in the at least two G-PDUs, the multiplexing packets that need to be decapsulated, and decapsulate the at least two G-PDUs according to a third tunnel identifier field and the third multiplexing indication field that are in the third GTP-U header in the at least two G-PDUs and the fourth multiplexing indication field in the fourth GTP-U header in the at least two G-PDUs, to obtain the at least two multiplexing packets; wherein
the third GTP-U header comprises the third tunnel identifier field and the third multiplexing indication field, and the fourth GTP-U header comprises the fourth multiplexing indication field;
the third tunnel identifier field is used to indicate a GTP-U tunnel used for a multiplexing packet corresponding to the third GTP-U header;
the third multiplexing indication field is used to indicate whether there is another multiplexing packet that is in the GTP-U packet and follows the multiplexing packet corresponding to the third GTP-U header; and
the fourth multiplexing indication field is used to indicate whether there is another multiplexing packet that is in the GTP-U packet and follows a multiplexing packet corresponding to the fourth GTP-U header.

125. The apparatus according to claim 124, wherein the third multiplexing indication field is an unused field in the third GTP-U header or is carried in an extension header of the third GTP-U header, and the fourth multiplexing indication field is an unused field in the fourth GTP-U header or is carried in an extension header of the fourth GTP-U header.

126. The apparatus according to claim 124 or 125, wherein the third GTP-U header further comprises a third length field, the fourth GTP-U header further comprises a fourth length field, the third length field is used to indicate a size of a padded multiplexing packet corresponding to the third GTP-U header, and the fourth length field is used to indicate a size of a padded multiplexing packet corresponding to the fourth GTP-U header.

127. The apparatus according to claim 116, wherein the processor is configured to:
decapsulate the GTP-U packet according to an IP header and a UDP header in the GTP-U packet to obtain one G-PDU, wherein a GTP-U header in the G-PDU comprises at least two multiplexing extension headers, and the at least two multiplexing extension headers are in one-to-one correspondence with the at least two multiplexing packets, or the GTP-U header comprises at least one multiplexing extension header and a first next extension header type field, the first next extension header type field is corresponding to the first multiplexing packet in the GTP-U packet, the at least one multiplexing extension header is in one-to-one correspondence with a multiplexing packet, except the first multiplexing packet, in the GTP-U packet, and the first next extension header type field is used to indicate whether the first extension header in the GTP-U header in the GTP-U packet is a multiplexing extension header; and
decapsulate the G-PDU according to the GTP-U header in the G-PDU to obtain the at least two multiplexing packets.

128. The apparatus according to claim 127, wherein the processor is configured to:
when the multiplexing extension header is a first multiplexing extension header, determine, according to a second next extension header type field in the first multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU, to obtain the at least two multiplexing packets; wherein
the first multiplexing extension header comprises the fifth length field, the fifth tunnel identifier field, and the second next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header; and
the second next extension header type field is used to indicate whether there is another multiplexing extension header that is in the GTP-U packet and follows the first multiplexing extension header.

129. The apparatus according to claim 128, wherein the first multiplexing extension header further comprises a first tunnel identifier flag field, and the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header.

130. The apparatus according to claim 127, wherein the processor is configured to:
when a size of the multiplexing packet is the set value and the multiplexing extension header is a first multiplexing extension header, determine, according to a second next extension header type field in the first multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU, to obtain the at least two multiplexing packets; or
when a size of the multiplexing packet is the set value and the multiplexing extension header is a second multiplexing extension header, determine, according to a third next extension header type field in the second multiplexing extension header in the G-PDU, the multiplexing packets that need to be decapsulated, and decapsulate the G-PDU according to a sixth tunnel identifier field and the third next extension header type field that are in the second multiplexing extension header in the G-PDU, and a network configuration, to obtain the at least two multiplexing packets, wherein the network configuration is used to indicate a size of the set value; or
when a size of the multiplexing packet is the set value, the first one multiplexing extension header of the multiplexing extension headers is a first multiplexing extension header, and the multiplexing extension header except the first one multiplexing extension header is a second multiplexing extension header, determine, according to a second next extension header type field in the first multiplexing extension header in the G-PDU and a third next extension header type field in the second multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU and a sixth tunnel identifier field and the third next extension header type field that are in the second multiplexing extension header in the G-PDU, to obtain the at least two multiplexing packets; wherein
the first multiplexing extension header comprises the fifth tunnel identifier field, the fifth length field, and the second next extension header type field;
the second multiplexing extension header comprises the sixth tunnel identifier field and the third next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the sixth tunnel identifier field is used to indicate a GTP-U tunnel used for a multiplexing packet corresponding to the second multiplexing extension header; and
the third next extension header type field is used to indicate whether there is another multiplexing extension header that is in the GTP-U packet and follows the second multiplexing extension header.

131. The apparatus according to claim 130, wherein the first multiplexing extension header further comprises a first tunnel identifier flag field, the second multiplexing extension header further comprises a second tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header.

132. The apparatus according to claim 127, wherein the processor is configured to:
when the multiplexing packet is transmitted by using a same GTP-U tunnel and the multiplexing extension header in the GTP-U header is a first multiplexing extension header, determine, according to a second next extension header type field in the first multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU, to obtain the at least two multiplexing packets; or
when the multiplexing packet is transmitted by using a same GTP-U tunnel, the first one multiplexing extension header of the multiplexing extension headers is a first multiplexing extension header, and the multiplexing extension header except the first one multiplexing extension header is a third multiplexing extension header, determine, according to a second next extension header type field in the first multiplexing extension header in the G-PDU and a fourth next extension header type field in the third multiplexing extension header in the G-PDU, the multiplexing packets that need to be decapsulated, and decapsulate the G-PDU according to a fifth length field, a fifth tunnel identifier field, and the second next extension header type field that are in the first multiplexing extension header in the G-PDU and a seventh length field and the fourth next extension header type field that are in the third multiplexing extension header in the G-PDU, to obtain the at least two multiplexing packets; wherein
the first multiplexing extension header comprises the fifth length field, the fifth tunnel identifier field, and the second next extension header type field, and the third multiplexing extension header comprises the seventh length field and the fourth next extension header type field;
the fifth length field is used to indicate a size of a multiplexing packet corresponding to the first multiplexing extension header;
the fifth tunnel identifier field is used to indicate a GTP-U tunnel used for the multiplexing packet corresponding to the first multiplexing extension header;
the second next extension header type field is used to indicate whether there is another multiplexing extension header that is in the GTP-U packet and follows the first multiplexing extension header;
the seventh length field is used to indicate a size of a multiplexing packet corresponding to the third multiplexing extension header; and
the fourth next extension header type field is used to indicate whether there is another multiplexing extension header that is in the GTP-U packet and follows the third multiplexing extension header.

133. The apparatus according to claim 132, wherein the first multiplexing extension header further comprises a first tunnel identifier flag field, the third multiplexing extension header further comprises a third tunnel identifier flag field, the first tunnel identifier flag field is used to indicate whether the GTP-U tunnel used for the multiplexing packet corresponding to the first multiplexing extension header is the same as a GTP-U tunnel used for a multiplexing packet corresponding to a multiplexing extension header previous to the first multiplexing extension header, and the third tunnel identifier flag field is used to indicate whether a GTP-U tunnel used for the multiplexing packet corresponding to the third multiplexing extension header is the same as a GTP-U tunnel used for a multiplexing packet corresponding to a multiplexing extension header previous to the third multiplexing extension header.

134. The apparatus according to claim 127, wherein the processor is configured to:
when the at least two multiplexing packets are transmitted by using a same GTP-U tunnel, a size of the multiplexing packet is the set value, and the multiplexing extension header is a second multiplexing extension header, determine, according to a third next extension header type field in the second multiplexing extension header in the G-PDU, the multiplexing packets that need to be decapsulated, and decapsulate the G-PDU according to a sixth tunnel identifier field and the third next extension header type field that are in the second multiplexing extension header in the G-PDU, and a network configuration, to obtain the at least two multiplexing packets, wherein the network configuration is used to indicate a size of the set value; or
when the two multiplexing packets are transmitted by using a same GTP-U tunnel, a size of the multiplexing packet is the set value, the first one multiplexing extension header of the multiplexing extension headers is a second multiplexing extension header, and the multiplexing extension header except the first one multiplexing extension header is a fourth multiplexing extension header, determine, according to a third next extension header type field in the second multiplexing extension header in the G-PDU and a fifth next extension header type field in the fourth multiplexing extension header in the G-PDU, the multiplexing packets that need to be decapsulated, and decapsulate the G-PDU according to a sixth tunnel identifier field and the third next extension header type field that are in the second multiplexing extension header in the G-PDU and the fifth next extension header type field in the fourth multiplexing extension header in the G-PDU, to obtain the at least two multiplexing packets; wherein
the second multiplexing extension header comprises the sixth tunnel identifier field and the third next extension header type field, and the fourth multiplexing extension header comprises the fifth next extension header type field;
the sixth tunnel identifier field is used to indicate a GTP-U tunnel used for a multiplexing packet corresponding to the second multiplexing extension header;
the third next extension header type field is used to indicate whether there is another multiplexing extension header that is in the GTP-U packet and follows the second multiplexing extension header; and
the fifth next extension header type field is used to indicate whether there is another multiplexing extension header that is in the GTP-U packet and follows the fourth multiplexing extension header.

135. The apparatus according to claim 134, wherein the second multiplexing extension header further comprises a second tunnel identifier flag field, the fourth multiplexing extension header further comprises a fourth tunnel identifier flag field, the second tunnel identifier flag field is used to indicate whether the GTP-U tunnel used for the multiplexing packet corresponding to the second multiplexing extension header is the same as a GTP-U tunnel used for a multiplexing packet corresponding to a multiplexing extension header previous to the second multiplexing extension header, and the fourth tunnel identifier flag field is used to indicate whether a GTP-U tunnel used for a multiplexing packet corresponding to the fourth multiplexing extension header is the same as a GTP-U tunnel used for a multiplexing packet corresponding to a multiplexing extension header previous to the fourth multiplexing extension header.

136. The apparatus according to claim 134 or 135, wherein the second multiplexing extension header further comprises a sixth length field, the fourth multiplexing extension header further comprises an eighth length field, the sixth length field is used to indicate a size of a padded multiplexing packet corresponding to the second multiplexing extension header, and the eighth length field is used to indicate a size of a padded multiplexing packet corresponding to the fourth multiplexing extension header.

137. The apparatus according to any one of claims 127 to 136, wherein the GTP-U header further comprises a ninth length field and a ninth tunnel identifier field, the ninth length field is used to indicate a length of the first multiplexing packet in the GTP-U packet, and the ninth tunnel identifier field is used to indicate a GTP-U tunnel used for the first multiplexing packet.

138. The apparatus according to any one of claims 116 to 137, wherein the receiver is further configured to:
acquire the multiplexing policy from a mobility management entity MME/a policy control and charging rules function entity PCRF.

139. A communications device, wherein the device comprises the apparatus according to any one of claims 93 to 115 and the apparatus according to any one of claims 116 to 138.

140. A communications system, wherein the system comprises at least two communications devices according to claim 139.
